(19) Europäisches Patentamt
European Patent Office
Office européen des brevets

(11) **EP 4 351 049 A1**

(12) **EUROPEAN PATENT APPLICATION**
published in accordance with Art. 153(4) EPC

(43) Date of publication:
**10.04.2024 Bulletin 2024/15**

(21) Application number: **21945613.4**

(22) Date of filing: **09.07.2021**

(51) International Patent Classification (IPC):
***H04L 1/00*** *(2006.01)*

(52) Cooperative Patent Classification (CPC):
**H04L 1/00**

(86) International application number:
**PCT/CN2021/105608**

(87) International publication number:
**WO 2022/262031 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 PCT/CN2021/101093**

(71) Applicant: **Huawei Technologies Co., Ltd.**
**Shenzhen, Guangdong 518129 (CN)**

(72) Inventors:
- **JIN, Lili**
  **Shenzhen, Guangdong 518129 (CN)**
- **WANG, Jian**
  **Shenzhen, Guangdong 518129 (CN)**
- **CHENG, Xingqing**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

# (54) DATA PROCESSING METHOD, APPARATUS AND SYSTEM

(57) A data processing method, an apparatus, and a system are provided, to reduce system power consumption of polar code encoding/decoding in the field of communication technologies. The method includes: obtaining a total data length of an information bit; and obtaining C code blocks based on the total data length of the information bit and a preset first code rate. The C code blocks correspond to one or more code lengths, the one or more code lengths meet a form of a positive integer power of 2, and C is a positive integer. The C code blocks are matched with a code length in the form of a positive integer power of 2 that is met by a codeword obtained after polar code encoding, so that codewords obtained after the C code blocks are encoded can be directly transmitted or received by using the first code rate, and a rate matching module does not need to be additionally configured. This effectively simplifies a system design for polar code encoding/decoding, and reduces system power consumption.

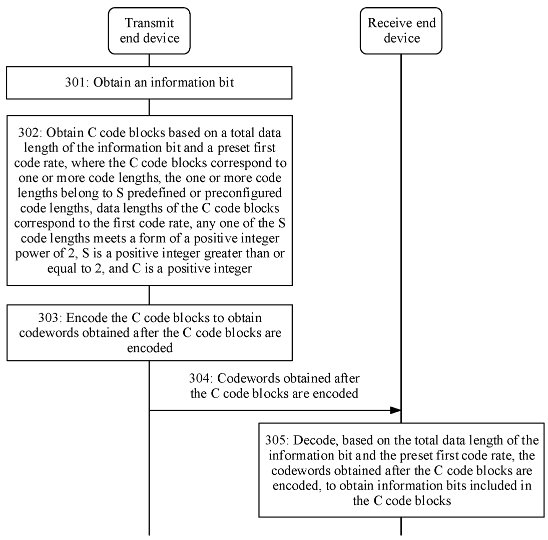


FIG. 3

EP 4 351 049 A1

## Description

### CROSS-REFERENCE TO RELATED APPLICATIONS

This application claims priority to PCT Patent Application No. PCT/CN2021/101093, filed with the China National Intellectual Property Administration on June 18, 2021 and entitled "DATA PROCESSING METHOD, APPARATUS, AND SYSTEM", which is incorporated herein by reference in its entirety.

### TECHNICAL FIELD

This application relates to the field of communication technologies, and in particular, to the short-range communication field, and provides a data processing method, an apparatus, and a system.

### BACKGROUND

With the continuous development of global communication technologies, wireless communication technologies are developing in full swing. Intelligent terminal devices such as an intelligent transportation device, a smart home device, and a robot that are developed based on wireless communication technologies gradually enter people's daily lives.

Currently, in a wireless communication system, a Turbo code, a low density parity check (low density parity check, LDPC) code, and a polar (Polar) code are usually used to perform channel encoding and decoding. For medium and short packet transmission, it is difficult for the Turbo code and the LDPC code to achieve ideal performance in case of a limited code length due to encoding and decoding characteristics of the Turbo code and the LDPC code. During implementation, encoding and decoding implementation processes of the Turbo code and the LDPC code have high complexity. The polar code is a high-performance code that has been theoretically proved to be capable of achieving a Shannon capacity and that has low encoding/decoding complexity, and therefore is applied increasingly widely.

Currently, a rate matching module usually needs to be additionally configured after a code block is encoded/decoded by using the polar code. As a result, system design complexity is further increased, system power consumption is further increased, and further improvement of polar channel transmission performance of the polar code in an application process is affected.

### SUMMARY

This application provides a data processing method, an apparatus, and a system, to reduce system power consumption of polar code encoding/decoding.

According to a first aspect, this application provides a data processing method. The method is applicable to any communication node having a communication function, for example, may be used for a transmit end node or a transmit end device, or may be used for a receive end node or a receive end device. The method includes: obtaining a total data length of an information bit; and obtaining C code blocks based on the total data length of the information bit and a preset first code rate. The C code blocks correspond to at least one or more code lengths, the at least one or more code lengths belong to S predefined or preconfigured code lengths, data lengths of the C code blocks correspond to the first code rate, each of the S code lengths meets a form of a positive integer power of 2, S is a positive integer greater than or equal to 2, and C is a positive integer. In this way, the C code blocks are matched with a code length in the form of a positive integer power of 2 that is met by a codeword obtained after polar encoding, so that codewords obtained after the C code blocks are encoded can be directly transmitted or received by using the first code rate, and a rate matching module does not need to be additionally configured. This effectively simplifies a system design for polar code encoding/decoding, and can further reduce system power consumption of polar code encoding/decoding.

The following separately describes specific implementations of the data processing method from a perspective of a transmit end device and a receive end device.

According to a second aspect, this application provides a data processing method. The method is applicable to a transmit end device, and the method includes: The transmit end device obtains an information bit, obtains C code blocks based on a total data length of the information bit and a preset first code rate, encodes the C code blocks to obtain codewords obtained after the C code blocks are encoded, and then sends the codewords obtained after the C code blocks are encoded. The C code blocks correspond to at least one or more code lengths, the at least one or more code lengths belong to S predefined or preconfigured code lengths, data lengths of the C code blocks correspond to the first code rate, each of the S code lengths meets a form of a positive integer power of 2, S is a positive integer greater than or equal to 2, and C is a positive integer. In this design, the C code blocks are matched with a code length in the form of a positive integer power of 2 that is met by a codeword obtained after polar encoding, so that the transmit end device can directly transmit, by using the first code rate, the codewords obtained after the C code blocks are encoded, and a rate matching module does not need to be additionally configured. This effectively simplifies a system design for polar code encoding, and can further reduce system power consumption of polar code encoding.

In a possible design, the transmit end device may encode the C code blocks by using a polar code, to reduce encoding complexity and effectively improve encoding efficiency by using advantages of polar encoding.

In a possible design, for the first code rate, each of the S code lengths may correspond to a predefined or preconfigured data length, and the corresponding code length and the data length may meet one or more of the following content:

Content 1: A value of a data length corresponding to a largest code length in the S code lengths is a product of the first code rate and the largest code length. In this way, a length of a code block corresponding to the largest code length transmitted by using each code rate can be equal to a data length that can be borne by a channel, so that the transmit end device can fully utilize an advantage of the largest code length on data transmission performance to achieve optimal transmission performance of the channel corresponding to the largest code length.

Content 2: A value of a data length corresponding to a non-largest code length in the S code lengths is a product of a second code rate and the non-largest code length, and the second code rate is less than the first code rate. In this way, a length of a code block corresponding to the non-largest code length transmitted by using each code rate is less than the data length that can be borne by the channel, so that adverse impact of a small code length on data transmission performance can be compensated by reducing the code rate.

Further, there may be a plurality of second code rates for implementing Content 2. Examples are provided below.

In a possible design, when the first code rate is a smallest code rate in T predefined or preconfigured code rates, the second code rate may be a difference between the first code rate and a first preset order reduction threshold; or when the first code rate is a non-smallest code rate in T predefined or preconfigured code rates, the second code rate may be an upper-order code rate less than the first code rate. The first preset order reduction threshold indicates that when an upper-order code rate less than the smallest code rate exists, a code rate difference between the upper-order code rate and the smallest code rate may be preset or preconfigured to be a value less than the smallest code rate. In this way, the code block corresponding to the non-largest code length is transmitted by using an upper-order code rate of a current code rate, so that the length of the code block can be the same as a data length that can be borne by a channel corresponding to the upper-order code rate, and less than a data length that can be borne by a channel corresponding to the current code rate. This helps improve transmission performance of a channel corresponding to the non-largest code length.

In the foregoing design, a correspondence among S code lengths, T code rates, and S×T data lengths is predefined or preconfigured in the transmit end device, and the correspondence may be represented in one or more of a table, a stack, a database, a queue, or another form. For example, when a table is used for representation, the following Table 1.1 shows a table of a correspondence among S code lengths, T code rates, and S×T data lengths corresponding to the design. Table 1.1 includes the following S code lengths $N_0 = 2^{m_0}$, $N_1 = 2^{m_0-1}$, $N_2 = 2^{m_0-2}$, ..., and $N_{S-1} = 2^{m_0-S+1}$ that are configured with reference to mother codes $m_0$, $m_0$-1, ..., and $m_0$-S+1, the following preset or preconfigured T code rates $R_0$, $R_1$, $R_2$, ..., and $R_{T-1}$, and a preset first order reduction threshold $D_0$, where $K_{i,j}$ refers to a data length corresponding to an $i^{th}$ code length and a $j^{th}$ code rate.

**Table 1.1: A segment length reference table (K table)**

| Code rate | Code length | | | | |
|---|---|---|---|---|---|
| | $N_0 = 2^{m_0}$ | $N_1 = 2^{m_0-1}$ | $N_2 = 2^{m_0_2}$ | ... | $N_{S-1} = 2^{m_0-S+1}$ |
| $R_0$ | $K_{0,0}=N_0 \times R_0$ | $K_{1,0}=N_1 \times (R_0-D_0)$ | $K_{2,0}=N_2 \times (R_0-D_0)$ | ... | $K_{S-1,0}=N_{S-1} \times (R_0-D_0)$ |
| $R_1$ | $K_{0,1}=N_0 \times R_1$ | $K_{1,1}=N_1 \times R_0$ | $K_{2,1}=N_2 \times R_0$ | ... | $K_{S-1,1}=N_{S-1} \times R_0$ |
| $R_2$ | $K_{0,2}=N_0 \times R_2$ | $K_{1,2}=N_1 \times R_1$ | $K_{2,2}=N_2 \times R_1$ | ... | $K_{S-1,2}=N_{S-1} \times R_1$ |
| ... | ... | ... | ... | ... | ... |
| $R_{T-1}$ | $K_{0,T-1}=N_0 \times R_{T-1}$ | $K_{1,T-1}=N_1 \times R_{T-2}$ | $K_{2,T-1}=N_2 \times R_{T-2}$ | ... | $K_{S-1,T-1}=N_{S-1} \times R_{T-2}$ |

It should be noted that, in the foregoing Table 1.1, only a maximum form that can be met is provided. However, Table 1.1 may actually include one or more rows or include one or more columns, instead of meeting each row and each column. In addition, the table is only a possible bearing form of the correspondence. In an actual operation, another bearing form, for example, a database, a data stack, or a queue, may be used to represent the correspondence. This is not specifically limited.

In another possible design, the second code rate may be a difference between the first code rate and a second preset order reduction threshold corresponding to the first code rate. Second preset order reduction thresholds corresponding to different code rates may be the same or different, and may be specifically set according to an actual scenario. In this way, in this design, a data length of a data block with a non-largest code length at each code rate can be flexibly changed by flexibly configuring a second preset order reduction threshold corresponding to each code rate.

In the foregoing design, a correspondence among S code lengths, T code rates, and S×T data lengths may be represented in one or more of a table, a stack, a database, a queue, or another form. For example, when a table is used for representation, the following Table 1.2 shows a table of a correspondence among S code lengths, T code rates, and S×T data lengths corresponding to the design. Table 1.2 includes the following S code lengths $N_0 = 2^{m_0}$, $N_1 = 2^{m_0-1}$, $N_2 = 2^{m_0-2}$, ..., and $N_{S-1} = 2^{m_0-S+1}$ that are configured with reference to mother codes $m_0$, $m_0$-1, ..., and $m_0$-S+1, the following preset or preconfigured T code rates $R_0$, $R_1$, $R_2$, ..., and $R_{T-1}$, and preset second order reduction thresholds $P_0$, $P_1$, $P_2$, ..., and $P_{T-1}$ corresponding to $R_0$, $R_1$, $R_2$, ..., and $R_{T-1}$, where $K_{i,j}$ refers to a data length corresponding to an $i^{th}$ code length and a $j^{th}$ code rate.

**Table 1.2: Another segment length reference table (K table)**

| Code rate | Code length | | | | |
|---|---|---|---|---|---|
| | $N_0 = 2^{m_0}$ | $N_1 = 2^{m_0-1}$ | $N_2 = 2^{m_0-2}$ | ... | $N_{S-1} = 2^{m_0-S+1}$ |
| $R_0$ | $K_{0,0}=N_0 \times R_0$ | $K_{1,0}=N_1 \times (R_0-P_0)$ | $K_{2,0}=N_2 \times (R_0-P_0)$ | ... | $K_{S-1,0}=N_{S-1} \times (R_0-P_0)$ |
| $R_1$ | $K_{0,1}=N_0 \times R_1$ | $K_{1,1}=N_1 \times (R_1-P_1)$ | $K_{2,1}=N_2 \times (R_1-P_1)$ | ... | $K_{S-1,1}=N_{S-1} \times (R_1-P_1)$ |
| $R_2$ | $K_{0,2}=N_0 \times R_2$ | $K_{1,2}=N_1 \times (R_2-P_2)$ | $K_{2,2}=N_2 \times (R_2-P_2)$ | ... | $K_{S-1,2}=N_{S-1} \times (R_2-P_2)$ |
| ... | ... | ... | ... | ... | ... |
| $R_{T-1}$ | $K_{0,T-1}=N_0 \times R_{T-1}$ | $K_{1,T-1}=N_1 \times (R_{T-1}-P_{T-1})$ | $K_{2,T-1}=N_2 \times (R_{T-1}-P_{T-1})$ | ... | $K_{S-1,T-1}=N_{S-1} \times (R_{T-1}-P_{T-1})$ |

It should be noted that, in Table 1.2, only a maximum form that can be met is provided. However, Table 1.2 may actually include one or more rows or include one or more columns, instead of meeting each row and each column. In addition, the table is only a possible bearing form of the correspondence. In an actual operation, another bearing form, for example, a database, a data stack, or a queue, may be used to represent the correspondence. This is not specifically limited.

In still another possible design, the second code rate may be a product of the first code rate and a preset code rate proportion corresponding to the first code rate, and the preset code rate proportion is greater than 0 and less than 1. Preset code rate proportions corresponding to different code rates may be the same or different, and may be specifically set according to an actual scenario. In this way, in this design, a data length of a code block with a non-largest code length at each code rate can be flexibly changed by flexibly configuring a preset code rate proportion corresponding to each code rate.

In the foregoing design, a correspondence among S code lengths, T code rates, and S×T data lengths may be represented in one or more of a table, a stack, a database, a queue, or another form. For example, when a table is used for representation, the following Table 1.3 shows a table of a correspondence among S code lengths, T code rates, and S×T data lengths corresponding to the design. Table 1.3 includes the following S code lengths $N_0 = 2^{m_0}$, $N_1 = 2^{m_0-1}$, $N_2 = 2^{m_0-2}$, ..., and $N_{S-1} = 2^{m_0-S+1}$ that are configured with reference to mother codes $m_0$, $m_0$-1, ..., and $m_0$-S+1, the following preset or preconfigured T code rates $R_0$, $R_1$, $R_2$, ..., and $R_{T-1}$, and preset code rate proportions $\lambda_0$, $\lambda_1$, $\lambda_2$, ..., and $\lambda_{T-1}$ corresponding to $R_0$, $R_1$, $R_2$, ..., and $R_{T-1}$, where $K_{i,j}$ refers to a data length corresponding to an $i^{th}$ code length and a $j^{th}$ code rate.

**Table 1.3: Still another segment length reference table (K table)**

| Code rate | Code length | | | | |
|---|---|---|---|---|---|
| | $N_0 = 2^{m_0}$ | $N_1 = 2^{m_0-1}$ | $N_2 = 2^{m_0-2}$ | ... | $N_{S-1} = 2^{m_0-S+1}$ |
| $R_0$ | $K_{0,0}=N_0 \times R_0$ | $K_{1,0}=N_1 \times \lambda_0 R_0$ | $K_{2,0}=N_2 \times \lambda_0 R_0$ | ... | $K_{S-1,0}=N_{S-1} \times \lambda_0 R_0$ |
| $R_1$ | $K_{0,1}=N_0 \times R_1$ | $K_{1,1}=N_1 \times \lambda_1 R_1$ | $K_{2,1}=N_2 \times \lambda_1 R_1$ | ... | $K_{S-1,1}=N_{S-1} \times \lambda_1 R_1$ |
| $R_2$ | $K_{0,2}=N_0 \times R_2$ | $K_{1,2}=N_1 \times \lambda_2 R_2$ | $K_{2,2}=N_2 \times \lambda_2 R_2$ | ... | $K_{S-1,2}=N_{S-1} \times \lambda_2 R_2$ |
| ... | ... | ... | ... | ... | ... |

(continued)

| Code rate | Code length | | | | |
|---|---|---|---|---|---|
| | $N_0 = 2^{m_0}$ | $N_1 = 2^{m_0-1}$ | $N_2 = 2^{m_0-2}$ | ... | $N_{S-1} = 2^{m_0-S+1}$ |
| $R_{T-1}$ | $K_{0,T-1}=N_0 \times R_{T-1}$ | $K_{1,T-1}=N_1 \times \lambda_{T-1} R_{T-1}$ | $K_{2,T-1}=N_2 \times \lambda_{T-1} R_{T-1}$ | ... | $K_{S-1,T-1}=N_{S-1} \times \lambda_{T-1} R_{T-1}$ |

It should be noted that, in Table 1.3, only a maximum form that can be met is provided. However, Table 1.3 may actually include one or more rows or include one or more columns, instead of meeting each row and each column. In addition, the table is only a possible bearing form of the correspondence. In an actual operation, another bearing form, for example, a database, a data stack, or a queue, may be used to represent the correspondence. This is not specifically limited.

In Table 1.1, Table 1.2, and Table 1.3, the S code lengths may include one or more of the following code lengths: 1024 bits, 512 bits, 256 bits, 128 bits, or 64 bits, and the T code rates may include one or more of the following code rates: 1/4, 3/8, 1/2, 5/8, 3/4, or 7/8. For example, when the T code rates include one or more of 1/4, 3/8, 1/2, 5/8, 3/4, or 7/8, the first preset order reduction threshold may be preset or preconfigured to be a value less than 1/4, for example, may be configured to be 1/8. In this way, regardless of which code rate is used as the smallest code rate in an actual scenario, data lengths corresponding to a same code rate and a same code length can be kept consistent as much as possible. Alternatively, the first preset order reduction threshold may be configured to be one of 1/16, 1/32, or 1/64, so that a transmission capability of a channel corresponding to the smallest code rate is as close as possible to a maximum transmission capability corresponding to the smallest code rate. When the T code rates include one or more of 1/4, 3/8, 1/2, 5/8, 3/4, or 7/8, if second preset order reduction thresholds corresponding to the T code rates are set as a same value, the second preset order reduction threshold may be set as a value less than 1/4, for example, may be set as 1/8, 1/16, 1/32, or 1/64. This is not specifically limited.

In a possible design, the C code blocks may include: $C_{10}$ first code blocks, where a code length of each of the $C_{10}$ first code blocks is the largest code length in the S code lengths, and each first code block includes a first check code for an information bit included in the first code block; and/or $C_{20}$ second code blocks, where a code length of any second code block is a non-largest code length in the S code lengths, and the $C_{20}$ second code blocks include a second check code for all information bits included in the $C_{20}$ second code blocks. $C_{10}$ is a positive integer, and $C_{20}$ is an integer greater than or equal to 0; or $C_{10}$ is an integer greater than or equal to 0, and $C_{20}$ is a positive integer. In this way, the first check code and/or the second check code are/is added to the C code blocks, so that only a part of code blocks on which a check code error occurs need to be retransmitted when a transmission error occurs. This helps reduce a retransmission delay. In addition, a check code is added to each long code block with the largest code length, and no check code is added to each short code block with the non-largest code length. Instead, one check code is added to all short code blocks with the non-largest code length. This helps reduce a total data length of segmented code blocks as much as possible while adding a necessary check code, and helps reduce air interface overheads.

In a possible design, for the first code rate, when each of the S code lengths corresponds to a predefined or preconfigured data length, $C_{10}$ and $C_{20}$ may be obtained based on the total data length of the information bit and a data length of the information bit included in each first code block, and the data length of the information bit included in each first code block is a difference between the data length corresponding to the largest code length and a data length of the first check code. In this way, a quantity of first code blocks and a quantity of second code blocks are determined by using the first code block corresponding to the largest code length as a reference, so that a first code block with a longer data length can be used as much as possible to carry as many information bits as possible, to effectively reduce a total quantity of code blocks.

In a possible design, when a ratio of the total data length of the information bit to the data length of the information bit included in each first code block is an integer, a value of $C_{10}$ may be the ratio, and a value of $C_{20}$ is 0, that is, no second code block exists. In this design, a first code block with a long data length can be used to carry all information bits, to effectively reduce a total quantity of code blocks.

In a possible design, when a ratio of the total data length of the information bit to the data length of the information bit included in each first code block is not an integer, a value of $C_{10}$ may be an integer part of the ratio. The $C_{20}$ second code blocks may include L types of second code blocks, the L types of second code blocks correspond to L non-largest code lengths in the S code lengths, a data length of each type of the L types of second code blocks is a data length corresponding to a corresponding non-largest code length, a quantity of the L types of second code blocks is obtained based on a data length of remaining to-be-segmented data and data lengths of the L types of second code blocks, the data length of the remaining to-be-segmented data is a sum of a data length of a remaining information bit and a data length of the second check code, and the data length of the remaining information bit is a difference between the total data length of the information bit and a data length of information bits included in the $C_{10}$ first code blocks. L is a positive integer less than or equal to S-1. In this way, in this design, when there is a remaining information bit after the first code block carries the information bit, the second code block with a short data length can be used to carry the remaining information bit. Compared with a manner in which a first code block with a longer data length is used to carry the remaining information bit, this helps reduce a quantity of unwanted bits included in all code blocks, and effectively reduces air interface overheads.

In a possible design, the quantity of the L types of second code blocks may be determined based on an estimated quantity of code blocks corresponding to a smallest code length and a relative relationship between the data lengths of the L types of second code blocks and a data length corresponding to the smallest code length, and the estimated quantity of the code blocks corresponding to the smallest code length is a smallest integer greater than or equal to a ratio of the data length of the remaining to-be-segmented data to the data length corresponding to the smallest code length. In this way, a quantity of second code blocks corresponding to each non-largest code length is determined based on a smallest quantity of smallest code blocks that carry a total data length not less than that of the remaining to-be-segmented data, so that all remaining information bits and the second check code are included in each second code block, to reduce a probability of missing valid data.

In a possible design, the transmit end device may determine the quantity of the L types of second code blocks by using a bit quantity-first rule. In the bit quantity-first rule, the quantity of the L types of second code blocks may be determined in descending order of L corresponding non-largest code lengths. For each type of the L types of second code blocks, a quantity of the second code blocks may be an integer in a ratio of a remaining estimated quantity of code blocks corresponding to the smallest code length to a first ratio, the first ratio is a ratio of a data length of the second code block to the data length corresponding to the smallest code length, the remaining estimated quantity of the code blocks corresponding to the smallest code length is a difference between the estimated quantity of the code blocks corresponding to the smallest code length and a product of a second ratio and a quantity of second code blocks corresponding to another non-largest code length that is greater than a non-largest code length corresponding to the second code block, and the second ratio is a ratio of a data length of the second code block corresponding to the another non-largest code length to the data length corresponding to the smallest code length. In this way, the first code block and the second code block that are of each code length are used to carry the information bit in a centralized manner, so that a total data length of each first code block and each second code block can be equal to the total data length of the information bit as much as possible. This effectively reduces a quantity of unwanted bits included in the C code blocks, and effectively reduces air interface overheads.

In a possible design, the quantity of the L types of second code blocks may be determined based on L values that are not 0 in binary data of the estimated quantity of the code blocks corresponding to the smallest code length, and values of the binary data from a low-order bit to a high-order bit are in a one-to-one correspondence with S-1 non-largest code lengths that are in ascending order. In this way, in this design, a relationship of multiple of 2 of data lengths corresponding to two code lengths is used, and a value of binary data indicates a quantity of code blocks corresponding to each code length, so that a quantity of second code blocks can be determined by using one operation as much as possible, to effectively improve data segmentation efficiency.

In a possible design, the quantity of the L types of second code blocks may be obtained based on the estimated quantity of the code blocks corresponding to the smallest code length and a preset correspondence among a code length, a code rate, a data length, a quantity of code blocks, and an estimated quantity, and the correspondence is preset or preconfigured based on a relative relationship between preset or preconfigured data lengths corresponding to S-1 non-largest code lengths and the data length corresponding to the smallest code length. The correspondence may be represented in any form of a table, a database, a stack, or the like. This design helps enable the transmit end device to directly query a correspondence to obtain a quantity of code blocks, to effectively reduce a calculation delay and improve data segmentation efficiency.

In a possible design, the transmit end device may determine the quantity of the L types of second code blocks by using a segment quantity-first rule. In the segment quantity-first rule, before determining the quantity of the L types of second code blocks, the transmit end device may further first determine that one or more of the following conditions are met: The data length of the remaining to-be-segmented data is not greater than a preset or preconfigured data length threshold; or the estimated quantity of the code blocks corresponding to the smallest code length is not greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length. In this way, a short code block corresponding to a small code length is used for segmentation only when there are few remaining information bits, so that when a data transmission delay is low, a quantity of unwanted bits included in the code block can be reduced by performing finer segmentation. This effectively reduces air interface overheads generated during data transmission.

In a possible design, in the segment quantity-first rule, when a ratio of the total data length of the information bit to the data length of the information bit included in each first code block is not an integer, a value of $C_{10}$ may be a smallest integer greater than the ratio, and a value of $C_{20}$ may be 0, that is, no second code block exists. In this way, when there is a remaining information bit, a first code block with the largest code length is used to carry the entire remaining information bit. Compared with a manner in which a second code block with a small code length is used to carry the remaining information bit, this can reduce the total quantity of code blocks, and effectively reduce the data transmission delay.

In a possible design, in the segment quantity-first rule, before determining the value of $C_{10}$ is the smallest integer greater than the ratio, and the value of $C_{20}$ may be 0, the transmit end device may further first determine that one or more of the following conditions are met: The data length of the remaining to-be-segmented data is greater than a preset or preconfigured data length threshold; or the estimated quantity of the code blocks corresponding to the smallest code length is greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length. In this way, a first code block with the largest code length is used to carry the entire remaining information bit only when there are a large quantity of remaining information bits, and a second code block corresponding to a small code length is still used to carry the remaining information bit when there are a small quantity of remaining information bits, to reduce unwanted bits and reduce a retransmitted data volume and the retransmission delay as much as possible.

In a possible design, in the segment quantity-first rule, a preset quantity threshold in the foregoing condition may be preset or preconfigured to be $2^{S-1}-1$, and/or a preset data length threshold in the foregoing condition may be preset or preconfigured to be $K_{S-1}\times(2^{S-1}-1)$, where $K_{S-1}$ is a data length corresponding to the first code rate and the smallest code length. In this way, the condition is used to determine whether to perform segmentation, so that it can be ensured as much as possible that a quantity of code blocks that are corresponding to each non-largest code length and into which the remaining to-be-segmented data is segmented is not greater than 1.

It should be noted that a rule used by the transmit end device may be set in a preset or preconfigured manner, and may further be consistent with that used by a receive end device. For example, the transmit end device and the receive end device are indicated, in a preset or preconfigured manner, to use a same rule. Alternatively, the transmit end device sends, to the receive end device, an indication message indicating a used rule, so that the receive end device performs decoding or the like by using the same rule based on the indication message. The indication message indicating the used rule may be carried in a message in which the codewords obtained after the C code blocks are encoded are located, or may be carried in an additional message, or may be carried in a message in which other information is located. In addition, the indication message may be represented by one or more of a word, a character, a number, or another form. This is not specifically limited.

In a possible design, after obtaining the C code blocks based on the total data length of the information bit and the preset first code rate, if the transmit end device determines that a difference between a total data length of the C code blocks and a valid data length is not zero, the $C_{10}$ first code blocks and/or the $C_{20}$ second code blocks may be further adjusted, to reduce a subsequent transmission delay and air interface overheads of the C code blocks by adjusting unwanted bits in the C code blocks. The valid data length is a sum of the total data length of the information bit, data lengths of the $C_{10}$ first check codes, and the data length of the second check code.

In a possible design, $C_{10}$ adjusted first code blocks or $C_{20}$ adjusted second code blocks meet one or more of the following content: One or more first code blocks in the $C_{10}$ adjusted first code blocks include preset data; a data length of one or more first code blocks in the $C_{10}$ adjusted first code blocks is less than a preset or preconfigured data length corresponding to the largest code length; one or more second code blocks in the $C_{20}$ adjusted second code blocks include preset data; or a data length of one or more second code blocks in the $C_{20}$ adjusted second code blocks is less than a preset or preconfigured data length corresponding to the non-largest code length corresponding to the second code block. In this way, in this design, a code block is adjusted by padding or by subtracting an unwanted bit from a data length of the code block, so that an adjusted code block can match an actual channel transmission situation as much as possible.

In a possible design, when an unwanted bit is adjusted by padding preset data to a first code block, the preset data may be padded before an information bit included at a last first code block. In this way, unwanted bit information is padded at a front position of the first code block, so that valid information is placed at a rear position with probably higher reliability in the first code block, to effectively improve reliability of transmitting the valid information. Alternatively, the preset data may be padded between the information bit included in the last first code block and the first check code, so that the first check code can also include check information of the unwanted bit information, to further improve data check and transmission security. Alternatively, the preset data may be padded after a first check code of the last first code block, so that the first check code does not include the check information corresponding to the unwanted bit information, to effectively reduce check operations.

In a possible design, when the unwanted bit is adjusted by padding preset data to the second code block, the preset data may be padded before information bits included in the $C_{20}$ second code blocks, or may be padded between the information bits included in the $C_{20}$ second code blocks and the second check code, or may be padded after the second check code of the $C_{20}$ second code blocks.

According to a third aspect, this application provides a data processing method. The method is applicable to a receive end device, and the method includes: The receive end device receives codewords obtained after C code blocks are encoded, and decodes, based on a total data length of an information bit and a first code rate, the codewords obtained after the C code blocks are encoded, to obtain information bits included in the C code blocks. The C code blocks correspond to one or more code lengths, the one or more code lengths belong to S predefined or preconfigured code lengths, data lengths of the C code blocks correspond to the preset first code rate, each of the S code lengths meets a positive integer power of 2, S is a positive integer greater than or equal to 2, and C is a positive integer. In this design, the C code blocks are matched with a code length in a form of a positive integer power of 2 that is met by a codeword obtained after polar encoding, so that the receive end device can directly receive, by using the first code rate, the codewords obtained after the C code blocks are encoded, and a rate matching module does not need to be additionally configured. This effectively simplifies a system design for polar code decoding, and can further reduce system power consumption of polar code decoding.

In a possible design, the receive end device may decode the C code blocks by using a polar code, to reduce decoding complexity and effectively improve decoding efficiency by using advantages of polar decoding.

In a possible design, for the first code rate, each of the S code lengths may correspond to a predefined or preconfigured data length, and the corresponding code length and the data length may meet one or more of the following content: A value of a data length corresponding to a largest code length in the S code lengths is a product of the first code rate and the largest code length. A value of a data length corresponding to a non-largest code length in the S code lengths is a product of a second code rate and the non-largest code length, and the second code rate is less than the first code rate.

In a possible design, when the first code rate is a smallest code rate in T predefined or preconfigured code rates, the second code rate may be a difference between the first code rate and a first preset order reduction threshold; or when the first code rate is a non-smallest code rate in T predefined or preconfigured code rates, the second code rate may be an upper-order code rate less than the first code rate.

In another possible design, the second code rate may be a difference between the first code rate and a second preset order reduction threshold corresponding to the first code rate. Second preset order reduction thresholds corresponding to different code rates may be the same or different, and may be specifically set according to an actual scenario.

In still another possible design, the second code rate may be a product of the first code rate and a preset code rate proportion corresponding to the first code rate, and the preset code rate proportion is greater than 0 and less than 1. Preset code rate proportions corresponding to different code rates may be the same or different, and may be specifically set according to an actual scenario.

In the foregoing design, a correspondence among S code lengths, T code rates, and S×T data lengths is predefined or preconfigured in the receive end device. The correspondence may be preset or preconfigured with reference to any one of the foregoing designs, and the correspondence may be represented in one or more of a table, a stack, a database, a queue, or another form. The S code lengths may include one or more of the following code lengths: 1024 bits, 512 bits, 256 bits, 128 bits, or 64 bits, and the T code rates may include one or more of the following code rates: 1/4, 3/8, 1/2, 5/8, 3/4, or 7/8.

It should be noted that a correspondence among S code lengths, T code rates, and S×T data lengths is predefined or preconfigured to be consistent in a transmit end device and the receive end device.

In a possible design, when the T code rates include one or more of 1/4, 3/8, 1/2, 5/8, 3/4, or 7/8, the first preset order reduction threshold may be preset or preconfigured to be 1/8. In this way, regardless of which code rate is used as the smallest code rate in an actual scenario, data lengths corresponding to a same code rate and a same code length can be kept consistent as much as possible. Alternatively, the first preset order reduction threshold may be configured to be one of 1/16, 1/32, or 1/64, so that a transmission capability of a channel corresponding to the smallest code rate is as close as possible to a maximum transmission capability corresponding to the smallest code rate.

In a possible design, when the T code rates include one or more of 1/4, 3/8, 1/2, 5/8, 3/4, or 7/8, if second preset order reduction thresholds corresponding to the T code rates are set as a same value, the second preset order reduction threshold may be set as a value less than 1/4, for example, may be set as 1/8, 1/16, 1/32, or 1/64. This is not specifically limited.

In a possible design, the C code blocks include: $C_{10}$ first code blocks, where a code length of each of the $C_{10}$ first code blocks is the largest code length in the S code lengths, and each first code block includes a first check code for an information bit included in the first code block; and/or $C_{20}$ second code blocks, where a code length of any second code block is a non-largest code length in the S code lengths, and the $C_{20}$ second code blocks include a second check code for all information bits included in the $C_{20}$ second code blocks. $C_{10}$ is a positive integer, and $C_{20}$ is an integer greater than or equal to 0; or $C_{10}$ is an integer greater than or equal to 0, and $C_{20}$ is a positive integer.

In a possible design, when the C code blocks include the $C_{10}$ first code blocks and/or the $C_{20}$ second code blocks, the receive end device may further obtain, based on the total data length of the information bit and the first code rate, the information bit and the first check code that are included in each of the $C_{10}$ first code blocks, and check the information bit and the first check code that are included in each first code block; and/or obtain the information bits and the second check code that are included in the $C_{20}$ first code blocks, and check the information bits and the second check code that are included in the $C_{20}$ first code blocks. In this way, the receive end device performs check before using an information bit, so that accuracy of the received information bit can be effectively ensured. In addition, if the check fails, it indicates that a transmission error occurs, and the receive end device may further require the transmit end device to retransmit the first code block or the second code block that fails the check, to effectively reduce a retransmission delay.

In a possible design, for the first code rate, when each of the S code lengths corresponds to a predefined or preconfigured data length, $C_{10}$ and $C_{20}$ may be obtained based on the total data length of the information bit and a data length of the information bit included in each first code block, and the data length of the information bit included in each first code block is a difference between the data length corresponding to the largest code length and a data length of the first check code.

In a possible design, when a ratio of the total data length of the information bit to the data length of the information bit included in each first code block is an integer, a value of $C_{10}$ may be the ratio, and a value of $C_{20}$ is 0, that is, no second code block exists.

In a possible design, when a ratio of the total data length of the information bit to the data length of the information bit included in each first code block is not an integer, a value of $C_{10}$ may be an integer part of the ratio. The $C_{20}$ second code blocks may include L types of second code blocks, the L types of second code blocks correspond to L non-largest code lengths in the S code lengths, a data length of each type of the L types of second code blocks is a data length corresponding to a corresponding non-largest code length, a quantity of the L types of second code blocks is obtained based on a data length of remaining to-be-segmented data and data lengths of the L types of second code blocks, the data length of the remaining to-be-segmented data is a sum of a data length of a remaining information bit and a data length of the second check code, and the data length of the remaining information bit is a difference between the total data length of the information bit and a data length of information bits included in the $C_{10}$ first code blocks. L is a positive integer less than or equal to S-1.

In a possible design, the quantity of the L types of second code blocks may be determined based on an estimated quantity of code blocks corresponding to a smallest code length and a relative relationship between the data lengths of the L types of second code blocks and a data length corresponding to the smallest code length, and the estimated quantity of the code blocks corresponding to the smallest code length is a smallest integer greater than or equal to a ratio of the data length of the remaining to-be-segmented data to the data length corresponding to the smallest code length.

In a possible design, the receive end device may determine the quantity of the L types of second code blocks by using a bit quantity-first rule. In the bit quantity-first rule, the quantity of the L types of second code blocks may be determined in descending order of L corresponding non-largest code lengths. For each type of the L types of second code blocks, a quantity of the second code blocks may be an integer in a ratio of a remaining estimated quantity of code blocks corresponding to the smallest code length to a first ratio, the first ratio is a ratio of a data length of the second code block to the data length corresponding to the smallest code length, the remaining estimated quantity of the code blocks corresponding to the smallest code length is a difference between the estimated quantity of the code blocks corresponding to the smallest code length and a product of a second ratio and a quantity of second code blocks corresponding to another non-largest code length that is greater than a non-largest code length corresponding to the second code block, and the second ratio is a ratio of a data length of the second code block corresponding to the another non-largest code length to the data length corresponding to the smallest code length.

In a possible design, the quantity of the L types of second code blocks may be determined based on L values that are not 0 in binary data of the estimated quantity of the code blocks corresponding to the smallest code length, and values of the binary data from a low-order bit to a high-order bit are in a one-to-one correspondence with S-1 non-largest code lengths that are in ascending order.

In a possible design, the quantity of the L types of second code blocks may be obtained based on the estimated quantity of the code blocks corresponding to the smallest code length and a preset correspondence among a code length, a code rate, a data length, a quantity of code blocks, and an estimated quantity, and the correspondence is preset or preconfigured based on a relative relationship between preset or preconfigured data lengths corresponding to S-1 non-largest code lengths and the data length corresponding to the smallest code length. The correspondence may be represented in any form of a table, a database, a stack, or the like.

In a possible design, the receive end device may determine the quantity of the L types of second code blocks by using a segment quantity-first rule. In the segment quantity-first rule, before determining the quantity of the L types of second code blocks, the receive end device may further first determine that one or more of the following conditions are met: The data length of the remaining to-be-segmented data is not greater than a preset or preconfigured data length threshold; or the estimated quantity of the code blocks corresponding to the smallest code length is not greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

In a possible design, in the segment quantity-first rule, when a ratio of the total data length of the information bit to the data length of the information bit included in each first code block is not an integer, a value of $C_{10}$ may be a smallest integer greater than the ratio, and a value of $C_{20}$ may be 0, that is, no second code block exists.

In a possible design, in the segment quantity-first rule, before determining the value of $C_{10}$ is the smallest integer greater than the ratio, and the value of $C_{20}$ may be 0, the receive end device may further first determine that one or more of the following conditions are met: The data length of the remaining to-be-segmented data is greater than a preset or preconfigured data length threshold; or the estimated quantity of the code blocks corresponding to the smallest code length is greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

In a possible design, in the segment quantity-first rule, a preset quantity threshold in the foregoing condition may be preset or preconfigured to be $2^{S-1}$-1, and/or a preset data length threshold in the foregoing condition may be preset or preconfigured to be $K_{S-1}\times(2^{S-1}-1)$, where $K_{S-1}$ is a data length corresponding to the first code rate and the smallest code length.

It should be noted that a rule used by the receive end device is consistent with that used by the transmit end device. For example, the receive end device and the transmit end device are indicated, in a preset or preconfigured manner, to use a same rule. Alternatively, the receive end device receives an indication message that is sent by the transmit end device and that indicates a used rule, so that the receive end device performs decoding or the like by using the same rule based on the indication message. The indication message indicating the used rule may be carried in a message in which the codewords obtained after the C code blocks are encoded are located, or may be carried in an additional message, or may be carried in a message in which other information is located. In addition, the indication message may be represented by one or more of a word, a character, a number, or another form. This is not specifically limited.

According to a fourth aspect, this application provides a communication apparatus, which may be a transmit end device having a communication function. The communication apparatus includes: an obtaining unit, configured to obtain an information bit; a processing unit, configured to: obtain C code blocks based on a total data length of the information bit and a preset first code rate, and encode the C code blocks to obtain codewords obtained after the C code blocks are encoded; and a sending unit, configured to send the codewords obtained after the C code blocks are encoded. The C code blocks correspond to at least one or more code lengths, the at least one or more code lengths belong to S predefined or preconfigured code lengths, data lengths of the C code blocks correspond to the first code rate, each of the S code lengths meets a form of a positive integer power of 2, S is a positive integer greater than or equal to 2, and C is a positive integer.

In a possible design, the processing unit is specifically configured to encode the C code blocks by using a polar code.

In a possible design, for the first code rate, each of the S code lengths may correspond to a predefined or preconfigured data length, and the corresponding code length and the data length may meet one or more of the following content: A value of a data length corresponding to a largest code length in the S code lengths is a product of the first code rate and the largest code length. A value of a data length corresponding to a non-largest code length in the S code lengths is a product of a second code rate and the non-largest code length, and the second code rate is less than the first code rate.

In a possible design, when the first code rate is a smallest code rate in T predefined or preconfigured code rates, the second code rate may be a difference between the first code rate and a first preset order reduction threshold; or when the first code rate is a non-smallest code rate in T predefined or preconfigured code rates, the second code rate may be an upper-order code rate less than the first code rate.

In another possible design, the second code rate may be a difference between the first code rate and a second preset order reduction threshold corresponding to the first code rate. Second preset order reduction thresholds corresponding to different code rates may be the same or different, and may be specifically set according to an actual scenario.

In still another possible design, the second code rate may be a product of the first code rate and a preset code rate proportion corresponding to the first code rate, and the preset code rate proportion is greater than 0 and less than 1. Preset code rate proportions corresponding to different code rates may be the same or different, and may be specifically set according to an actual scenario.

In a possible design, the processing unit is specifically configured to obtain the C code blocks based on the total data length of the information bit and the preset first code rate and with reference to a predefined or preconfigured correspondence among S code lengths, T code rates, and S$\times$T data lengths. The correspondence may be preset or preconfigured with reference to any one of the foregoing designs, and the correspondence may be represented in one or more of a table, a stack, a database, a queue, or another form. The S code lengths may include one or more of the following code lengths: 1024 bits, 512 bits, 256 bits, 128 bits, or 64 bits, and the T code rates may include one or more of the following code rates: 1/4, 3/8, 1/2, 5/8, 3/4, or 7/8.

In a possible design, when the T code rates include one or more of 1/4, 3/8, 1/2, 5/8, 3/4, or 7/8, the first preset order reduction threshold may be preset or preconfigured to be 1/8. In this way, regardless of which code rate is used as the smallest code rate in an actual scenario, data lengths corresponding to a same code rate and a same code length can be kept consistent as much as possible. Alternatively, the first preset order reduction threshold may be configured to be one of 1/16, 1/32, or 1/64, so that a transmission capability of a channel corresponding to the smallest code rate is as close as possible to a maximum transmission capability corresponding to the smallest code rate.

In a possible design, when the T code rates include one or more of 1/4, 3/8, 1/2, 5/8, 3/4, or 7/8, if second preset order reduction thresholds corresponding to the T code rates are set as a same value, the second preset order reduction threshold may be set as a value less than 1/4, for example, may be set as 1/8, 1/16, 1/32, or 1/64. This is not specifically limited.

In a possible design, the C code blocks may include: $C_{10}$ first code blocks, where a code length of each of the $C_{10}$ first code blocks is the largest code length in the S code lengths, and each first code block includes a first check code for an information bit included in the first code block; and/or $C_{20}$ second code blocks, where a code length of any second code block is a non-largest code length in the S code lengths, and the $C_{20}$ second code blocks include a second check code for all information bits included in the $C_{20}$ second code blocks. $C_{10}$ is a positive integer, and $C_{20}$ is an integer greater than or equal to 0; or $C_{10}$ is an integer greater than or equal to 0, and $C_{20}$ is a positive integer.

In a possible design, for the first code rate, when each of the S code lengths corresponds to a predefined or preconfigured data length, $C_{10}$ and $C_{20}$ may be obtained by the processing unit based on the total data length of the information bit and a data length of the information bit included in each first code block, and the data length of the information bit included in each first code block is a difference between the data length corresponding to the largest code length and a data length of the first check code.

In a possible design, when a ratio of the total data length of the information bit to the data length of the information bit included in each first code block is an integer, a value of $C_{10}$ may be the ratio, and a value of $C_{20}$ is 0, that is, no second code block exists.

In a possible design, when a ratio of the total data length of the information bit to the data length of the information bit included in each first code block is not an integer, a value of $C_{10}$ may be an integer part of the ratio. The $C_{20}$ second code blocks may include L types of second code blocks, the L types of second code blocks correspond to L non-largest code lengths in the S code lengths, a data length of each type of the L types of second code blocks is a data length corresponding to a corresponding non-largest code length, a quantity of the L types of second code blocks is obtained by the processing unit based on a data length of remaining to-be-segmented data and data lengths of the L types of second code blocks, the data length of the remaining to-be-segmented data is a sum of a data length of a remaining information bit and a data length of the second check code, and the data length of the remaining information bit is a difference between the total data length of the information bit and a data length of information bits included in the $C_{10}$ first code blocks. L is a positive integer less than or equal to S-1.

In a possible design, the quantity of the L types of second code blocks may be determined by the processing unit based on an estimated quantity of code blocks corresponding to a smallest code length and a relative relationship between the data lengths of the L types of second code blocks and a data length corresponding to the smallest code length, and the estimated quantity of the code blocks corresponding to the smallest code length is a smallest integer greater than or equal to a ratio of the data length of the remaining to-be-segmented data to the data length corresponding to the smallest code length.

In a possible design, the processing unit may determine the quantity of the L types of second code blocks by using a bit quantity-first rule. In the bit quantity-first rule, the quantity of the L types of second code blocks may be determined in descending order of L corresponding non-largest code lengths. For each type of the L types of second code blocks, a quantity of the second code blocks may be an integer in a ratio of a remaining estimated quantity of code blocks corresponding to the smallest code length to a first ratio, the first ratio is a ratio of a data length of the second code block to the data length corresponding to the smallest code length, the remaining estimated quantity of the code blocks corresponding to the smallest code length is a difference between the estimated quantity of the code blocks corresponding to the smallest code length and a product of a second ratio and a quantity of second code blocks corresponding to another non-largest code length that is greater than a non-largest code length corresponding to the second code block, and the second ratio is a ratio of a data length of the second code block corresponding to the another non-largest code length to the data length corresponding to the smallest code length.

In a possible design, the quantity of the L types of second code blocks may be determined by the processing unit based on L values that are not 0 in binary data of the estimated quantity of the code blocks corresponding to the smallest code length, and values of the binary data from a low-order bit to a high-order bit are in a one-to-one correspondence with S-1 non-largest code lengths that are in ascending order.

In a possible design, the quantity of the L types of second code blocks may be obtained by the processing unit based on the estimated quantity of the code blocks corresponding to the smallest code length and a preset correspondence among a code length, a code rate, a data length, a quantity of code blocks, and an estimated quantity, and the correspondence is preset or preconfigured based on a relative relationship between preset or preconfigured data lengths corresponding to S-1 non-largest code lengths and the data length corresponding to the smallest code length. The correspondence may be represented in any form of a table, a database, a stack, or the like.

In a possible design, the processing unit may determine the quantity of the L types of second code blocks by using a segment quantity-first rule. In the segment quantity-first rule, before determining the quantity of the L types of second code blocks, the processing unit may further first determine that one or more of the following conditions are met: The data length of the remaining to-be-segmented data is not greater than a preset or preconfigured data length threshold; or the estimated quantity of the code blocks corresponding to the smallest code length is not greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

In a possible design, in the segment quantity-first rule, when a ratio of the total data length of the information bit to the data length of the information bit included in each first code block is not an integer, a value of $C_{10}$ may be a smallest integer greater than the ratio, and a value of $C_{20}$ may be 0, that is, no second code block exists.

In a possible design, in the segment quantity-first rule, before determining the value of $C_{10}$ is the smallest integer greater than the ratio, and the value of $C_{20}$ may be 0, the processing unit may further first determine that one or more of the following conditions are met: The data length of the remaining to-be-segmented data is greater than a preset or preconfigured data length threshold; or the estimated quantity of the code blocks corresponding to the smallest code length is greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

In a possible design, in the segment quantity-first rule, a preset quantity threshold in the foregoing condition may be preset or preconfigured to be $2^{S-1}$-1, and/or a preset data length threshold in the foregoing condition may be preset or preconfigured to be $K_{S-1}\times(2^{S-1}-1)$, where $K_{S-1}$ is a data length corresponding to the first code rate and the smallest code length.

It should be noted that a rule used by the transmit end device may be set in a preset or preconfigured manner, and may further be consistent with that used by a receive end device. For example, the transmit end device and the receive end device are indicated, in a preset or preconfigured manner, to use a same rule. Alternatively, the transmit end device sends, to the receive end device, an indication message indicating a used rule, so that the receive end device performs decoding or the like by using the same rule based on the indication message. The indication message indicating the used rule may be carried in a message in which the codewords obtained after the C code blocks are encoded are located, or may be carried in an additional message, or may be carried in a message in which other information is located. In addition, the indication message may be represented by one or more of a word, a character, a number, or another form. This is not specifically limited.

In a possible design, after obtaining the C code blocks based on the total data length of the information bit and the preset first code rate, if the processing unit determines that a difference between a total data length of the C code blocks and a valid data length is not zero, the $C_{10}$ first code blocks and/or the $C_{20}$ second code blocks may be further adjusted. The valid data length is a sum of the total data length of the information bit, data lengths of the $C_{10}$ first check codes, and the data length of the second check code.

In a possible design, $C_{10}$ adjusted first code blocks or $C_{20}$ adjusted second code blocks meet one or more of the following content: One or more first code blocks in the $C_{10}$ adjusted first code blocks include preset data; a data length of one or more first code blocks in the $C_{10}$ adjusted first code blocks is less than a preset or preconfigured data length corresponding to the largest code length; one or more second code blocks in the $C_{20}$ adjusted second code blocks include preset data; or a data length of one or more second code blocks in the $C_{20}$ adjusted second code blocks is less than a preset or preconfigured data length corresponding to the non-largest code length corresponding to the second code block.

In a possible design, when an unwanted bit is adjusted by padding preset data to a first code block, the preset data may be padded before an information bit included in a last first code block, or may be padded between an information bit included in the last first code block and a first check code, or may be padded after the first check code of the last first code block.

In a possible design, when an unwanted bit is adjusted by padding preset data to a second code block, the preset data may be padded before information bits included in the $C_{20}$ second code blocks, or may be padded between the information bits included in the $C_{20}$ second code blocks and a second check code, or may be padded after the second check code of the $C_{20}$ second code blocks.

According to a fifth aspect, this application provides a communication apparatus, which may be a receive end device having a communication function. The communication apparatus includes: a receiving unit, configured to receive codewords obtained after C code blocks are encoded; and a processing unit, configured to decode, based on a total data length of an information bit and a first code rate, the codewords obtained after the C code blocks are encoded, to obtain information bits included in the C code blocks. The C code blocks correspond to one or more code lengths, the one or more code lengths belong to S predefined or preconfigured code lengths, data lengths of the C code blocks correspond to the preset first code rate, each of the S code lengths meets a positive integer power of 2, S is a positive integer greater than or equal to 2, and C is a positive integer.

In a possible design, the processing unit is specifically configured to decode the C code blocks by using a polar code.

In a possible design, for the first code rate, each of the S code lengths may correspond to a predefined or preconfigured data length, and the corresponding code length and the data length may meet one or more of the following content: A value of a data length corresponding to a largest code length in the S code lengths is a product of the first code rate and the largest code length. A value of a data length corresponding to a non-largest code length in the S code lengths is a product of a second code rate and the non-largest code length, and the second code rate is less than the first code rate.

In a possible design, when the first code rate is a smallest code rate in T predefined or preconfigured code rates, the second code rate may be a difference between the first code rate and a first preset order reduction threshold; or when the first code rate is a non-smallest code rate in T predefined or preconfigured code rates, the second code rate may be an upper-order code rate less than the first code rate.

In another possible design, the second code rate may be a difference between the first code rate and a second preset order reduction threshold corresponding to the first code rate. Second preset order reduction thresholds corresponding to different code rates may be the same or different, and may be specifically set according to an actual scenario.

In still another possible design, the second code rate may be a product of the first code rate and a preset code rate proportion corresponding to the first code rate, and the preset code rate proportion is greater than 0 and less than 1. Preset code rate proportions corresponding to different code rates may be the same or different, and may be specifically set according to an actual scenario.

In a possible design, the processing unit may obtain, based on the total data length of the information bit and the first code rate and with reference to a predefined or preconfigured correspondence among S code lengths, T code rates, and $S \times T$ data lengths, the information bits included in the C code blocks. The correspondence may be preset or preconfigured with reference to any one of the foregoing designs, and the correspondence may be represented in one or more of a table, a stack, a database, a queue, or another form. The S code lengths may include one or more of the following code lengths: 1024 bits, 512 bits, 256 bits, 128 bits, or 64 bits, and the T code rates may include one or more of the following code rates: 1/4, 3/8, 1/2, 5/8, 3/4, or 7/8.

It should be noted that a correspondence among S code lengths, T code rates, and $S \times T$ data lengths is predefined or preconfigured to be consistent in a transmit end device and the receive end device.

In a possible design, when the T code rates include one or more of 1/4, 3/8, 1/2, 5/8, 3/4, or 7/8, the first preset order reduction threshold may be preset or preconfigured to be 1/8. In this way, regardless of which code rate is used as the smallest code rate in an actual scenario, data lengths corresponding to a same code rate and a same code length can be kept consistent as much as possible. Alternatively, the first preset order reduction threshold may be configured to be one of 1/16, 1/32, or 1/64, so that a transmission capability of a channel corresponding to the smallest code rate is as close as possible to a maximum transmission capability corresponding to the smallest code rate.

In a possible design, when the T code rates include one or more of 1/4, 3/8, 1/2, 5/8, 3/4, or 7/8, if second preset order reduction thresholds corresponding to the T code rates are set as a same value, the second preset order reduction threshold may be set as a value less than 1/4, for example, may be set as 1/8, 1/16, 1/32, or 1/64. This is not specifically limited.

In a possible design, the C code blocks include: $C_{10}$ first code blocks, where a code length of each of the $C_{10}$ first code blocks is the largest code length in the S code lengths, and each first code block includes a first check code for an information bit included in the first code block; and/or $C_{20}$ second code blocks, where a code length of any second code block is a non-largest code length in the S code lengths, and the $C_{20}$ second code blocks include a second check code for all information bits included in the $C_{20}$ second code blocks. $C_{10}$ is a positive integer, and $C_{20}$ is an integer greater than or equal to 0; or $C_{10}$ is an integer greater than or equal to 0, and $C_{20}$ is a positive integer.

In a possible design, when the C code blocks include the $C_{10}$ first code blocks and/or the $C_{20}$ second code blocks, the processing unit may further obtain, based on the total data length of the information bit and the first code rate, the information bit and the first check code that are included in each of the $C_{10}$ first code blocks, and check the information bit and the first check code that are included in each first code block; and/or obtain the information bits and the second check code that are included in the $C_{20}$ first code blocks, and check the information bits and the second check code that are included in the $C_{20}$ first code blocks.

In a possible design, for the first code rate, when each of the S code lengths corresponds to a predefined or preconfigured data length, $C_{10}$ and $C_{20}$ may be obtained based on the total data length of the information bit and a data length of the information bit included in each first code block, and the data length of the information bit included in each first code block is a difference between the data length corresponding to the largest code length and a data length of the first check code.

In a possible design, when a ratio of the total data length of the information bit to the data length of the information bit included in each first code block is an integer, a value of $C_{10}$ may be the ratio, and a value of $C_{20}$ is 0, that is, no second code block exists.

In a possible design, when a ratio of the total data length of the information bit to the data length of the information bit included in each first code block is not an integer, a value of $C_{10}$ may be an integer part of the ratio. The $C_{20}$ second code blocks may include L types of second code blocks, the L types of second code blocks correspond to L non-largest code lengths in the S code lengths, a data length of each type of the L types of second code blocks is a data length corresponding to a corresponding non-largest code length, a quantity of the L types of second code blocks is obtained based on a data length of remaining to-be-segmented data and data lengths of the L types of second code blocks, the data length of the remaining to-be-segmented data is a sum of a data length of a remaining information bit and a data length of the second check code, and the data length of the remaining information bit is a difference between the total data length of the information bit and a data length of information bits included in the $C_{10}$ first code blocks. L is a positive integer less than or equal to S-1.

In a possible design, the quantity of the L types of second code blocks may be determined based on an estimated quantity of code blocks corresponding to a smallest code length and a relative relationship between the data lengths of the L types of second code blocks and a data length corresponding to the smallest code length, and the estimated quantity of the code blocks corresponding to the smallest code length is a smallest integer greater than or equal to a ratio of the data length of the remaining to-be-segmented data to the data length corresponding to the smallest code length.

In a possible design, the processing unit may determine the quantity of the L types of second code blocks by using a bit quantity-first rule. In the bit quantity-first rule, the quantity of the L types of second code blocks may be determined in descending order of L corresponding non-largest code lengths. For each type of the L types of second code blocks, a quantity of the second code blocks may be an integer in a ratio of a remaining estimated quantity of code blocks corresponding to the smallest code length to a first ratio, the first ratio is a ratio of a data length of the second code block to the data length corresponding to the smallest code length, the remaining estimated quantity of the code blocks corresponding to the smallest code length is a difference between the estimated quantity of the code blocks corresponding to the smallest code length and a product of a second ratio and a quantity of second code blocks corresponding to another non-largest code length that is greater than a non-largest code length corresponding to the second code block, and the second ratio is a ratio of a data length of the second code block corresponding to the another non-largest code length to the data length corresponding to the smallest code length.

In a possible design, the quantity of the L types of second code blocks may be determined by the processing unit based on L values that are not 0 in binary data of the estimated quantity of the code blocks corresponding to the smallest code length, and values of the binary data from a low-order bit to a high-order bit are in a one-to-one correspondence with S-1 non-largest code lengths that are in ascending order.

In a possible design, the quantity of the L types of second code blocks may be obtained by the processing unit based on the estimated quantity of the code blocks corresponding to the smallest code length and a preset correspondence among a code length, a code rate, a data length, a quantity of code blocks, and an estimated quantity, and the correspondence is preset or preconfigured based on a relative relationship between preset or preconfigured data lengths corresponding to S-1 non-largest code lengths and the data length corresponding to the smallest code length. The correspondence may be represented in any form of a table, a database, a stack, or the like.

In a possible design, the processing unit may determine the quantity of the L types of second code blocks by using a segment quantity-first rule. In the segment quantity-first rule, before determining the quantity of the L types of second code blocks, the processing unit may further first determine that one or more of the following conditions are met: The data length of the remaining to-be-segmented data is not greater than a preset or preconfigured data length threshold; or the estimated quantity of the code blocks corresponding to the smallest code length is not greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

In a possible design, in the segment quantity-first rule, when a ratio of the total data length of the information bit to the data length of the information bit included in each first code block is not an integer, a value of $C_{10}$ may be a smallest integer greater than the ratio, and a value of $C_{20}$ may be 0, that is, no second code block exists.

In a possible design, in the segment quantity-first rule, before determining the value of $C_{10}$ is the smallest integer greater than the ratio, and the value of $C_{20}$ may be 0, the processing unit may further first determine that one or more of the following conditions are met: The data length of the remaining to-be-segmented data is greater than a preset or preconfigured data length threshold; or the estimated quantity of the code blocks corresponding to the smallest code length is greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

In a possible design, in the segment quantity-first rule, a preset quantity threshold in the foregoing condition may be preset or preconfigured to be $2^{S-1}$-1, and/or a preset data length threshold in the foregoing condition may be preset or preconfigured to be $K_{S-1}\times(2^{S-1}-1)$, where $K_{S-1}$ is a data length corresponding to the first code rate and the smallest code length.

It should be noted that a rule used by the receive end device is consistent with that used by the transmit end device. For example, the receive end device and the transmit end device are indicated, in a preset or preconfigured manner, to use a same rule. Alternatively, the receive end device receives an indication message that is sent by the transmit end device and that indicates a used rule, so that the receive end device performs decoding or the like by using the same rule based on the indication message. The indication message indicating the used rule may be carried in a message in which the codewords obtained after the C code blocks are encoded are located, or may be carried in an additional message, or may be carried in a message in which other information is located. In addition, the indication message may be represented by one or more of a word, a character, a number, or another form. This is not specifically limited.

According to a sixth aspect, this application provides a communication apparatus, which may be a transmit end device having a communication function. The communication apparatus includes at least one processor and an interface circuit. The interface circuit is configured to provide data or code instructions for the at least one processor, and the at least one processor is configured to perform the following operations by using a logic circuit or executing the code instructions: obtaining an information bit, obtaining C code blocks based on a total data length of the information bit and a preset first code rate, encoding the C code blocks to obtain codewords obtained after the C code blocks are encoded, and sending the codewords obtained after the C code blocks are encoded. The C code blocks correspond to at least one or more code lengths, the at least one or more code lengths belong to S predefined or preconfigured code lengths, data lengths of the C code blocks correspond to the first code rate, each of the S code lengths meets a form of a positive integer power of 2, S is a positive integer greater than or equal to 2, and C is a positive integer.

In a possible design, the at least one processor is specifically configured to perform the following operation by using the logic circuit or by executing the code instructions: encoding the C code blocks by using a polar code.

In a possible design, for the first code rate, each of the S code lengths may correspond to a predefined or preconfigured data length, and the corresponding code length and the data length may meet one or more of the following content: A value of a data length corresponding to a largest code length in the S code lengths is a product of the first code rate and the largest code length. A value of a data length corresponding to a non-largest code length in the S code lengths is a product of a second code rate and the non-largest code length, and the second code rate is less than the first code rate.

In a possible design, when the first code rate is a smallest code rate in T predefined or preconfigured code rates, the second code rate may be a difference between the first code rate and a first preset order reduction threshold; or when the first code rate is a non-smallest code rate in T predefined or preconfigured code rates, the second code rate may be an upper-order code rate less than the first code rate.

In another possible design, the second code rate may be a difference between the first code rate and a second preset order reduction threshold corresponding to the first code rate. Second preset order reduction thresholds corresponding to different code rates may be the same or different, and may be specifically set according to an actual scenario.

In still another possible design, the second code rate may be a product of the first code rate and a preset code rate proportion corresponding to the first code rate, and the preset code rate proportion is greater than 0 and less than 1. Preset code rate proportions corresponding to different code rates may be the same or different, and may be specifically set according to an actual scenario.

In a possible design, the at least one processor is specifically configured to perform the following operation by using the logic circuit or by executing the code instructions: obtaining the C code blocks based on the total data length of the information bit and the preset first code rate and with reference to a predefined or preconfigured correspondence among S code lengths, T code rates, and S$\times$T data lengths. The correspondence may be preset or preconfigured with reference to any one of the foregoing designs, and the correspondence may be represented in one or more of a table, a stack, a database, a queue, or another form. The S code lengths may include one or more of the following code lengths: 1024 bits, 512 bits, 256 bits, 128 bits, or 64 bits, and the T code rates may include one or more of the following code rates: 1/4, 3/8, 1/2, 5/8, 3/4, or 7/8.

In a possible design, when the T code rates include one or more of 1/4, 3/8, 1/2, 5/8, 3/4, or 7/8, the first preset order reduction threshold may be preset or preconfigured to be 1/8. In this way, regardless of which code rate is used as the smallest code rate in an actual scenario, data lengths corresponding to a same code rate and a same code length can be kept consistent as much as possible. Alternatively, the first preset order reduction threshold may be configured to be one of 1/16, 1/32, or 1/64, so that a transmission capability of a channel corresponding to the smallest code rate is as close as possible to a maximum transmission capability corresponding to the smallest code rate.

In a possible design, when the T code rates include one or more of 1/4, 3/8, 1/2, 5/8, 3/4, or 7/8, if second preset order reduction thresholds corresponding to the T code rates are set as a same value, the second preset order reduction threshold may be set as a value less than 1/4, for example, may be set as 1/8, 1/16, 1/32, or 1/64. This is not specifically limited.

In a possible design, the C code blocks may include: $C_{10}$ first code blocks, where a code length of each of the $C_{10}$ first code blocks is the largest code length in the S code lengths, and each first code block includes a first check code for an information bit included in the first code block; and/or $C_{20}$ second code blocks, where a code length of any second code block is a non-larges code length in the S code lengths, and the $C_{20}$ second code blocks include a second check code for all information bits included in the $C_{20}$ second code blocks. $C_{10}$ is a positive integer, and $C_{20}$ is an integer greater than or equal to 0; or $C_{10}$ is an integer greater than or equal to 0, and $C_{20}$ is a positive integer.

In a possible design, for the first code rate, when each of the S code lengths corresponds to a predefined or preconfigured data length, $C_{10}$ and $C_{20}$ may be obtained based on the total data length of the information bit and a data length of the information bit included in each first code block, and the data length of the information bit included in each first code block is a difference between the data length corresponding to the largest code length and a data length of the first check code.

In a possible design, when a ratio of the total data length of the information bit to the data length of the information bit included in each first code block is an integer, a value of $C_{10}$ may be the ratio, and a value of $C_{20}$ is 0, that is, no second code block exists.

In a possible design, when a ratio of the total data length of the information bit to the data length of the information bit included in each first code block is not an integer, a value of $C_{10}$ may be an integer part of the ratio. The $C_{20}$ second code blocks may include L types of second code blocks, the L types of second code blocks correspond to L non-largest code lengths in the S code lengths, a data length of each type of the L types of second code blocks is a data length corresponding to a corresponding non-largest code length, a quantity of the L types of second code blocks is obtained based on a data length of remaining to-be-segmented data and data lengths of the L types of second code blocks, the data length of the remaining to-be-segmented data is a sum of a data length of a remaining information bit and a data length of the second check code, and the data length of the remaining information bit is a difference between the total data length of the information bit and a data length of information bits included in the $C_{10}$ first code blocks. L is a positive integer less than or equal to S-1.

In a possible design, the quantity of the L types of second code blocks may be determined based on an estimated quantity of code blocks corresponding to a smallest code length and a relative relationship between the data lengths of the L types of second code blocks and a data length corresponding to the smallest code length, and the estimated quantity of the code blocks corresponding to the smallest code length is a smallest integer greater than or equal to a ratio of the data length of the remaining to-be-segmented data to the data length corresponding to the smallest code length.

In a possible design, the at least one processor is specifically configured to perform the following operation by using the logic circuit or by executing the code instructions: determining the quantity of the L types of second code blocks by using a bit quantity-first rule. In the bit quantity-first rule, the quantity of the L types of second code blocks may be determined in descending order of L corresponding non-largest code lengths. For each type of the L types of second code blocks, a quantity of the second code blocks may be an integer in a ratio of a remaining estimated quantity of code blocks corresponding to the smallest code length to a first ratio, the first ratio is a ratio of a data length of the second code block to the data length corresponding to the smallest code length, the remaining estimated quantity of the code blocks corresponding to the smallest code length is a difference between the estimated quantity of the code blocks corresponding to the smallest code length and a product of a second ratio and a quantity of second code blocks corresponding to another non-largest code length that is greater than a non-largest code length corresponding to the second code block, and the second ratio is a ratio of a data length of the second code block corresponding to the another non-largest code length to the data length corresponding to the smallest code length.

In a possible design, the quantity of the L types of second code blocks may be determined based on L values that are not 0 in binary data of the estimated quantity of the code blocks corresponding to the smallest code length, and values of the binary data from a low-order bit to a high-order bit are in a one-to-one correspondence with S-1 non-largest code lengths that are in ascending order.

In a possible design, the quantity of the L types of second code blocks may be obtained based on the estimated quantity of the code blocks corresponding to the smallest code length and a preset correspondence among a code length, a code rate, a data length, a quantity of code blocks, and an estimated quantity, and the correspondence is preset or preconfigured based on a relative relationship between preset or preconfigured data lengths corresponding to S-1 non-largest code lengths and the data length corresponding to the smallest code length. The correspondence may be represented in any form of a table, a database, a stack, or the like.

In a possible design, the at least one processor is specifically configured to perform the following operation by using the logic circuit or by executing the code instructions: determining the quantity of the L types of second code blocks by using a segment quantity-first rule. In the segment quantity-first rule, before determining the quantity of the L types of second code blocks, the at least one processor may further first determine that one or more of the following conditions are met: The data length of the remaining to-be-segmented data is not greater than a preset or preconfigured data length threshold; or the estimated quantity of the code blocks corresponding to the smallest code length is not greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

In a possible design, in the segment quantity-first rule, when a ratio of the total data length of the information bit to the data length of the information bit included in each first code block is not an integer, a value of $C_{10}$ may be a smallest integer greater than the ratio, and a value of $C_{20}$ may be 0, that is, no second code block exists.

In a possible design, in the segment quantity-first rule, before determining the value of $C_{10}$ is the smallest integer greater than the ratio, and the value of $C_{20}$ may be 0, the at least one processor may further first determine that one or more of the following conditions are met: The data length of the remaining to-be-segmented data is greater than a preset or preconfigured data length threshold; or the estimated quantity of the code blocks corresponding to the smallest code length is greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

In a possible design, in the segment quantity-first rule, a preset quantity threshold in the foregoing condition may be preset or preconfigured to be $2^{S-1}$-1, and/or a preset data length threshold in the foregoing condition may be preset or preconfigured to be $K_{S-1}\times(2^{S-1}-1)$, where $K_{S-1}$ is a data length corresponding to the first code rate and the smallest code length.

It should be noted that a rule used by the transmit end device may be set in a preset or preconfigured manner, and may further be consistent with that used by a receive end device. For example, the transmit end device and the receive end device are indicated, in a preset or preconfigured manner, to use a same rule. Alternatively, the transmit end device sends, to the receive end device, an indication message indicating a used rule, so that the receive end device performs decoding or the like by using the same rule based on the indication message. The indication message indicating the used rule may be carried in a message in which the codewords obtained after the C code blocks are encoded are located, or may be carried in an additional message, or may be carried in a message in which other information is located. In addition, the indication message may be represented by one or more of a word, a character, a number, or another form. This is not specifically limited.

In a possible design, when a computer program stored in a memory is executed by the processor, after obtaining the C code blocks based on the total data length of the information bit and the preset first code rate, the transmit end device further performs the following operation: if it is determined that a difference between a total data length of the C code blocks and a valid data length is not zero, adjusting the $C_{10}$ first code blocks and/or the $C_{20}$ second code blocks. The valid data length is a sum of the total data length of the information bit, data lengths of the $C_{10}$ first check codes, and the data length of the second check code.

In a possible design, $C_{10}$ adjusted first code blocks or $C_{20}$ adjusted second code blocks meet one or more of the following content: One or more first code blocks in the $C_{10}$ adjusted first code blocks include preset data; a data length of one or more first code blocks in the $C_{10}$ adjusted first code blocks is less than a preset or preconfigured data length corresponding to the largest code length; one or more second code blocks in the $C_{20}$ adjusted second code blocks include preset data; or a data length of one or more second code blocks in the $C_{20}$ adjusted second code blocks is less than a preset or preconfigured data length corresponding to the non-largest code length corresponding to the second code block.

In a possible design, when an unwanted bit is adjusted by padding preset data to a first code block, the preset data may be padded before an information bit included in a last first code block, or may be padded between an information bit included in the last first code block and a first check code, or may be padded after the first check code of the last first code block.

In a possible design, when an unwanted bit is adjusted by padding preset data to a second code block, the preset data may be padded before information bits included in the $C_{20}$ second code blocks, or may be padded between the information bits included in the $C_{20}$ second code blocks and a second check code, or may be padded after the second check code of the $C_{20}$ second code blocks.

According to a seventh aspect, this application provides a communication apparatus, which may be a receive end device having a communication function. The communication apparatus includes at least one processor and an interface circuit. The interface circuit is configured to provide data or code instructions for the at least one processor, and the at least one processor is configured to perform the following operations by using a logic circuit or executing the code instructions: receiving codewords obtained after C code blocks are encoded, and decoding, based on a total data length of an information bit and a first code rate, the codewords obtained after the C code blocks are encoded, to obtain information bits included in the C code blocks. The C code blocks correspond to one or more code lengths, the one or more code lengths belong to S predefined or preconfigured code lengths, data lengths of the C code blocks correspond to the preset first code rate, each of the S code lengths meets a positive integer power of 2, S is a positive integer greater than or equal to 2, and C is a positive integer.

In a possible design, the at least one processor is specifically configured to perform the following operation by using the logic circuit or by executing the code instructions: decoding the C code blocks by using a polar code.

In a possible design, for the first code rate, each of the S code lengths may correspond to a predefined or preconfigured data length, and the corresponding code length and the data length may meet one or more of the following content: A value of a data length corresponding to a largest code length in the S code lengths is a product of the first code rate and the largest code length. A value of a data length corresponding to a non-largest code length in the S code lengths is a product of a second code rate and the non-largest code length, and the second code rate is less than the first code rate.

In a possible design, when the first code rate is a smallest code rate in T predefined or preconfigured code rates, the second code rate may be a difference between the first code rate and a first preset order reduction threshold; or when the first code rate is a non-smallest code rate in T predefined or preconfigured code rates, the second code rate may be an upper-order code rate less than the first code rate.

In another possible design, the second code rate may be a difference between the first code rate and a second preset order reduction threshold corresponding to the first code rate. Second preset order reduction thresholds corresponding to different code rates may be the same or different, and may be specifically set according to an actual scenario.

In still another possible design, the second code rate may be a product of the first code rate and a preset code rate proportion corresponding to the first code rate, and the preset code rate proportion is greater than 0 and less than 1. Preset code rate proportions corresponding to different code rates may be the same or different, and may be specifically set according to an actual scenario.

In a possible design, the at least one processor is specifically configured to perform the following operation by using the logic circuit or by executing the code instructions: obtaining, based on the total data length of the information bit and the first code rate and with reference to a predefined or preconfigured correspondence among S code lengths, T code rates, and $S \times T$ data lengths, the information bits included in the C code blocks. The correspondence may be preset or preconfigured with reference to any one of the foregoing designs, and the correspondence may be represented in one or more of a table, a stack, a database, a queue, or another form. The S code lengths may include one or more of the following code lengths: 1024 bits, 512 bits, 256 bits, 128 bits, or 64 bits, and the T code rates may include one or more of the following code rates: 1/4, 3/8, 1/2, 5/8, 3/4, or 7/8.

It should be noted that a correspondence among S code lengths, T code rates, and $S \times T$ data lengths is predefined or preconfigured to be consistent in a transmit end device and the receive end device.

In a possible design, when the T code rates include one or more of 1/4, 3/8, 1/2, 5/8, 3/4, or 7/8, the first preset order reduction threshold may be preset or preconfigured to be 1/8. In this way, regardless of which code rate is used as the smallest code rate in an actual scenario, data lengths corresponding to a same code rate and a same code length can be kept consistent as much as possible. Alternatively, the first preset order reduction threshold may be configured to be one of 1/16, 1/32, or 1/64, so that a transmission capability of a channel corresponding to the smallest code rate is as close as possible to a maximum transmission capability corresponding to the smallest code rate.

In a possible design, when the T code rates include one or more of 1/4, 3/8, 1/2, 5/8, 3/4, or 7/8, if second preset order reduction thresholds corresponding to the T code rates are set as a same value, the second preset order reduction threshold may be set as a value less than 1/4, for example, may be set as 1/8, 1/16, 1/32, or 1/64. This is not specifically limited.

In a possible design, the C code blocks include: $C_{10}$ first code blocks, where a code length of each of the $C_{10}$ first code blocks is the largest code length in the S code lengths, and each first code block includes a first check code for an information bit included in the first code block; and/or $C_{20}$ second code blocks, where a code length of any second code block is a non-largest code length in the S code lengths, and the $C_{20}$ second code blocks include a second check code for all information bits included in the $C_{20}$ second code blocks. $C_{10}$ is a positive integer, and $C_{20}$ is an integer greater than or equal to 0; or $C_{10}$ is an integer greater than or equal to 0, and $C_{20}$ is a positive integer.

In a possible design, the at least one processor is further configured to perform the following operations by using the logic circuit or by executing the code instructions: when the C code blocks include the $C_{10}$ first code blocks and/or the $C_{20}$ second code blocks, obtaining, based on the total data length of the information bit and the first code rate, the information bit and the first check code that are included in each of the $C_{10}$ first code blocks, and checking the information bit and the first check code that are included in each first code block; and/or obtaining the information bits and the second check code that are included in the $C_{20}$ first code blocks, and checking the information bits and the second check code that are included in the $C_{20}$ first code blocks.

In a possible design, for the first code rate, when each of the S code lengths corresponds to a predefined or preconfigured data length, $C_{10}$ and $C_{20}$ may be obtained based on the total data length of the information bit and a data length of the information bit included in each first code block, and the data length of the information bit included in each first code block is a difference between the data length corresponding to the largest code length and a data length of the first check code.

In a possible design, when a ratio of the total data length of the information bit to the data length of the information bit included in each first code block is an integer, a value of $C_{10}$ may be the ratio, and a value of $C_{20}$ is 0, that is, no second code block exists.

In a possible design, when a ratio of the total data length of the information bit to the data length of the information bit included in each first code block is not an integer, a value of $C_{10}$ may be an integer part of the ratio. The $C_{20}$ second code blocks may include L types of second code blocks, the L types of second code blocks correspond to L non-largest code lengths in the S code lengths, a data length of each type of the L types of second code blocks is a data length corresponding to a corresponding non-largest code length, a quantity of the L types of second code blocks is obtained based on a data length of remaining to-be-segmented data and data lengths of the L types of second code blocks, the data length of the remaining to-be-segmented data is a sum of a data length of a remaining information bit and a data length of the second check code, and the data length of the remaining information bit is a difference between the total data length of the information bit and a data length of information bits included in the $C_{10}$ first code blocks. L is a positive integer less than or equal to S-1.

In a possible design, the quantity of the L types of second code blocks may be determined based on an estimated quantity of code blocks corresponding to a smallest code length and a relative relationship between the data lengths of the L types of second code blocks and a data length corresponding to the smallest code length, and the estimated quantity of the code blocks corresponding to the smallest code length is a smallest integer greater than or equal to a ratio of the data length of the remaining to-be-segmented data to the data length corresponding to the smallest code length.

In a possible design, the at least one processor is specifically configured to perform the following operation by using the logic circuit or by executing the code instructions: determining the quantity of the L types of second code blocks by using a bit quantity-first rule. In the bit quantity-first rule, the quantity of the L types of second code blocks may be determined in descending order of L corresponding non-largest code lengths. For each type of the L types of second code blocks, a quantity of the second code blocks may be an integer in a ratio of a remaining estimated quantity of code blocks corresponding to the smallest code length to a first ratio, the first ratio is a ratio of a data length of the second code block to the data length corresponding to the smallest code length, the remaining estimated quantity of the code blocks corresponding to the smallest code length is a difference between the estimated quantity of the code blocks corresponding to the smallest code length and a product of a second ratio and a quantity of second code blocks corresponding to another non-largest code length that is greater than a non-largest code length corresponding to the second code block, and the second ratio is a ratio of a data length of the second code block corresponding to the another non-largest code length to the data length corresponding to the smallest code length.

In a possible design, the quantity of the L types of second code blocks may be determined based on L values that are not 0 in binary data of the estimated quantity of the code blocks corresponding to the smallest code length, and values of the binary data from a low-order bit to a high-order bit are in a one-to-one correspondence with S-1 non-largest code lengths that are in ascending order.

In a possible design, the quantity of the L types of second code blocks may be obtained based on the estimated quantity of the code blocks corresponding to the smallest code length and a preset correspondence among a code length, a code rate, a data length, a quantity of code blocks, and an estimated quantity, and the correspondence is preset or preconfigured based on a relative relationship between preset or preconfigured data lengths corresponding to S-1 non-largest code lengths and the data length corresponding to the smallest code length. The correspondence may be represented in any form of a table, a database, a stack, or the like.

In a possible design, the at least one processor is specifically configured to perform the following operation by using the logic circuit or by executing the code instructions: determining the quantity of the L types of second code blocks by using a segment quantity-first rule. In the segment quantity-first rule, before determining the quantity of the L types of second code blocks, the at least one processor may further first determine that one or more of the following conditions are met: The data length of the remaining to-be-segmented data is not greater than a preset or preconfigured data length threshold; or the estimated quantity of the code blocks corresponding to the smallest code length is not greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

In a possible design, in the segment quantity-first rule, when a ratio of the total data length of the information bit to the data length of the information bit included in each first code block is not an integer, a value of $C_{10}$ may be a smallest integer greater than the ratio, and a value of $C_{20}$ may be 0, that is, no second code block exists.

In a possible design, in the segment quantity-first rule, before determining the value of $C_{10}$ is the smallest integer greater than the ratio, and the value of $C_{20}$ may be 0, the at least one processor may further first determine that one or more of the following conditions are met: The data length of the remaining to-be-segmented data is greater than a preset or preconfigured data length threshold; or the estimated quantity of the code blocks corresponding to the smallest code length is greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

In a possible design, in the segment quantity-first rule, a preset quantity threshold in the foregoing condition may be preset or preconfigured to be $2^{S-1}$-1, and/or a preset data length threshold in the foregoing condition may be preset or preconfigured to be $K_{S-1}\times(2^{S-1}-1)$, where $K_{S-1}$ is a data length corresponding to the first code rate and the smallest code length.

It should be noted that a rule used by the receive end device is consistent with that used by the transmit end device. For example, the receive end device and the transmit end device are indicated, in a preset or preconfigured manner, to use a same rule. Alternatively, the receive end device receives an indication message that is sent by the transmit end device and that indicates a used rule, so that the receive end device performs decoding or the like by using the same rule based on the indication message. The indication message indicating the used rule may be carried in a message in which the codewords obtained after the C code blocks are encoded are located, or may be carried in an additional message, or may be carried in a message in which other information is located. In addition, the indication message may be represented by one or more of a word, a character, a number, or another form. This is not specifically limited.

According to an eighth aspect, this application provides a communication apparatus, including a processor, a transceiver, and a memory. The processor is connected to the memory, the memory stores a computer program, and when the computer program stored in the memory is executed by the processor, the communication apparatus is enabled to implement the method according to any design in the second aspect.

According to a ninth aspect, this application provides a communication apparatus, including a processor, a transceiver, and a memory. The processor is connected to the memory, the memory stores a computer program, and when the computer program stored in the memory is executed by the processor, the communication apparatus is enabled to implement the method according to any design in the third aspect.

According to a tenth aspect, this application provides a communication apparatus, including a processor and a communication interface. The communication interface is used to send a signal to another communication apparatus other than the communication apparatus, and the processor is configured to implement, by using a logic circuit or executing code instructions, the method according to any design in the second aspect.

According to an eleventh aspect, this application provides a communication apparatus, including a processor and a communication interface. The communication interface is used to receive a signal from another communication apparatus other than the communication apparatus and transmit the signal to the processor, and the processor is configured to implement, by using a logic circuit or executing code instructions, the method according to any design in the third aspect.

According to a twelfth aspect, this application provides a communication apparatus, including a processor. The processor is connected to a memory, the memory is configured to store a computer program, and the processor is configured to execute the computer program stored in the memory, so that a transmit end device is enabled to perform the method according to any design in the second aspect.

According to a thirteenth aspect, this application provides a communication apparatus, including a processor. The processor is connected to a memory, the memory is configured to store a computer program, and the processor is configured to execute the computer program stored in the memory, so that a receive end device is enabled to perform the method according to any design in the third aspect.

According to a fourteenth aspect, this application provides a communication apparatus, including a processor and a memory. The memory stores computer program instructions, and the processor runs the computer program instructions to implement the method according to any design in the second aspect.

According to a fifteenth aspect, this application provides a communication apparatus, including a processor and a memory. The memory stores computer program instructions, and the processor runs the computer program instructions to implement the method according to any design in the third aspect.

According to a sixteenth aspect, this application provides a communication system. The communication system includes a transmit end device and a receive end device. The transmit end device is configured to implement the method according to any design in the second aspect, and the receive end device is configured to implement the method according to any design in the third aspect.

According to a seventeenth aspect, this application provides a terminal device. The terminal device is configured to: implement the method according to any design in the second aspect, or implement the method according to any design in the third aspect. Examples of some terminal devices include but are not limited to: smart home devices (such as a television, a floor-sweeping robot, a smart desk lamp, a speaker system, an intelligent light system, an electric appliance control system, home background music, a home theater system, an intercom system, and video surveillance), intelligent transportation devices (such as a car, a ship, an uncrewed aerial vehicle, a train, a van, and a truck), intelligent manufacturing devices (such as a robot, an industrial device, intelligent logistics, and an intelligent factory), and intelligent terminals (such as a mobile phone, a computer, a tablet computer, a palmtop computer, a desktop computer, a headset, a speaker, a wearable device, a vehicle-mounted device, a virtual reality device, and an augmented reality device).

According to an eighteenth aspect, this application provides a chip. The chip may include a processor and an interface. The processor is configured to read instructions through the interface, to perform the method according to any design in the second aspect.

According to a nineteenth aspect, this application provides a chip. The chip may include a processor and an interface. The processor is configured to read instructions through the interface, to perform the method according to any design in the third aspect.

According to a twentieth aspect, this application provides a computer-readable storage medium. The computer-readable storage medium stores a computer program. When the computer program is run, the method according to any design in the second aspect is implemented.

According to a twenty-first aspect, this application provides a computer-readable storage medium. The computer-readable storage medium stores a computer program. When the computer program is run, the method according to any design in the third aspect is implemented.

According to a twenty-second aspect, this application provides a computer program product. When the computer program product runs on a processor, the method according to any design in the second aspect is implemented.

According to a twenty-third aspect, this application provides a computer program product. When the computer program product runs on a processor, the method according to any design in the third aspect is implemented.

For details of beneficial effects of the fourth aspect to the twenty-third aspect, refer to technical effects that can be achieved by corresponding designs in the second aspect and the third aspect. Details are not described herein again.

## BRIEF DESCRIPTION OF DRAWINGS

FIG. 1 is an example of a schematic diagram of an architecture of a communication system to which an embodiment of this application is applicable;

FIG. 2 is an example of a schematic diagram of an architecture of an in-vehicle communication link according to an embodiment of this application;

FIG. 3 is an example of a schematic interaction flowchart of a data processing method according to an embodiment of this application;

FIG. 4 is an example diagram of presentation forms of segmented data under different segmentation rules according to an embodiment of this application;

FIG. 5A and FIG. 5B are an example of a schematic interaction flowchart of another data processing method according to an embodiment of this application;

FIG. 6 is an example of a schematic diagram of a structure of a data processing apparatus according to an embodiment of this application;

FIG. 7 is an example of a schematic diagram of a structure of another data processing apparatus according to an embodiment of this application;

FIG. 8 is an example of a schematic diagram of a structure of still another data processing apparatus according to an embodiment of this application; and

FIG. 9 is an example of a schematic diagram of a structure of yet another data processing apparatus according to an embodiment of this application.

## DESCRIPTION OF EMBODIMENTS

The following describes this application in detail with reference to the accompanying drawings.

FIG. 1 is an example of a schematic diagram of an architecture of a communication system to which an embodiment of this application is applicable. As shown in FIG. 1, the communication system 100 includes a network device 110 and one or more terminal devices, for example, a terminal device 121, a terminal device 122, a terminal device 123, a terminal device 124, a terminal device 125, and a terminal device 126. The terminal device 121, the terminal device 122, the terminal device 123, and the terminal device 125 may access the network device 110 in a wireless manner, to implement wireless communication with the network device 110. In addition, in the communication system 100, the terminal device 124, the terminal device 125, and the terminal device 126 may also form a small communication system. The terminal device 125 is equivalent to a network device in the small communication system, and may implement an operation performed by the network device. The terminal device 124 and the terminal device 126 are equivalent to terminal devices in the small communication system, and may implement operations performed by the terminal devices. In addition, the terminal device 124 and the terminal device 126 may also access the terminal device 125 in a wireless manner, to implement wireless communication with the terminal device 125.

In the communication system 100, the network device 110 is an apparatus deployed in a radio access network (radio access network, RAN) to provide a wireless communication function, and may also be referred to as a base station (base station, BS), an access node, or an access network device. The network device 110 may send a signal or receive a signal, and further has a specific management function. For example, the network device 110 may include an evolved NodeB (NodeB or eNB or e-NodeB, evolved NodeB) in a long term evolution (long term evolution, LTE) system or a long term evolution-advanced (long term evolution-advanced, LTE-A) system, or may include a next generation NodeB (next generation NodeB, gNB) in a 5th generation (the 5th generation, 5G) new radio (new radio, NR) system. Currently, examples of some network devices 110 are a base transceiver station (base transceiver station, BTS) and a base station controller (base station controller, BSC) in a 2G network, a NodeB (NodeB) and a radio network controller (radio network controller, RNC) in a 3G network, a NodeB (evolved NodeB, eNB) in a 4G network, a new radio NodeB (New Radio NodeB, gNB) in a 5G network, a central unit (Central Unit, CU), a distributed unit (Distributed Unit), a new radio controller, an access point (Access Point, AP) in a WLAN, a transmission reception point (transmission reception point, TRP), a home NodeB (for example, home evolved NodeB, HENB, or home NodeB, HNB), a base band unit (base band unit, BBU), a wireless fidelity (wireless fidelity, Wi-Fi) access point (access point, AP), or the like.

In the communication system 100, the terminal device is a device that provides a voice and/or data connectivity to a user. For example, the terminal device may include a handheld device having a wireless connection function, a vehicle-mounted device, or a processing device connected to a wireless modem. The terminal device may communicate with a core network by using a radio access network. Currently, examples of some terminal devices are an in-vehicle apparatus having a wireless communication function in the internet of vehicles, user equipment (user equipment, UE) used for machine type communication (machine type communication, MTC), a fifth-generation mobile communication terminal, a mobile phone (mobile phone), a computer, a tablet computer, a notebook computer, a palmtop computer, a desktop computer, a headset, a stereo, a mobile internet device (mobile internet device, MID), a wearable device (for example, a smart watch, a smart band, or a pedometer), a virtual reality (virtual reality, VR) device, an augmented reality (augmented reality, AR) device, a wireless terminal device in industrial control (industrial control), a wireless terminal device in self driving (self driving), a wireless terminal device in remote medical surgery (remote medical surgery), a wireless terminal device in a smart grid (smart grid), a wireless terminal device in transportation safety (transportation safety), a wireless terminal device in a smart city (smart city), a wireless terminal device in a smart home (smart home), and the like.

It should be noted that the communication system 100 may be any one of the following communication systems: a 5G (also referred to as new radio (new radio, NR)) communication system, a 6G communication system, an LTE system, a code division multiple access (code division multiple access, CDMA) system, a wideband code division multiple access (wideband code division multiple access, WCDMA for short) system, a general packet radio service (general packet radio service, GPRS for short) system, a time division duplexing-long term evolution (time division duplexing-long term evolution, TDD LTE) system, a frequency division duplexing-long term evolution (frequency division duplexing-long term evolution, FDD LTE) system, a universal mobile telecommunications system (universal mobile telecommunications system, UMTS for short), a long term evolution-advanced (long term evolution-advanced, LTE-advanced) system, an existing short-range communication system or a possible future short-range communication system, or the like, and certainly may also be a communication system of another unlicensed frequency band. This is not limited.

It should be understood that neither a quantity of network devices 110 nor a quantity of terminal devices in the communication system 100 is limited in this embodiment of this application. For example, as shown in FIG. 1, one network device 110 may be simultaneously connected to a plurality of different types of terminal devices, or may be connected to one type of terminal device but not connected to another type of terminal device, or may be connected to a plurality of terminal devices, or may be connected to one terminal device but not connected another terminal device. In addition, in addition to the network device 110 and the terminal device, the communication system 100 may further include another device, for example, a trace collection entity, a core network (core network, a CN), a wireless relay device, a wireless backhaul device, and a data relay device such as a router, a repeater, a bridge, or a switch. This is not limited in this embodiment of this application. In addition, the network device 110 in this embodiment of this application may integrate all functions into one independent physical device, or may distribute the functions on a plurality of independent physical devices. This is not limited in this embodiment of this application.

In a specific application scenario, the data processing solution provided in this application may be applied to an internet of vehicles, for example, vehicle to everything (vehicle to everything, V2X), long term evolution-vehicle (long term evolution-vehicle, LTE-V), or vehicle-to-vehicle (vehicle-to-vehicle, V2V). In the internet of vehicles, the terminal device may be specifically a vehicle having a wireless communication function, for example, a vehicle 121 (the terminal device 121 in FIG. 1 is the vehicle 121) shown in FIG. 1, or an apparatus having a wireless communication function in the vehicle. The apparatus includes but is not limited to another sensor such as an in-vehicle terminal, an in-vehicle controller, an in-vehicle module, an in-vehicle component, an in-vehicle chip, an in-vehicle unit, an in-vehicle radar, or an in-vehicle camera. The vehicle may implement the data processing method provided in this application by using the in-vehicle terminal, the in-vehicle controller, the in-vehicle module, the automobile module, the in-vehicle component, the in-vehicle chip, the in-vehicle unit, the in-vehicle radar, or the in-vehicle camera.

FIG. 2 is an example of a schematic diagram of an architecture of an in-vehicle communication link according to an embodiment of this application. The architecture includes one or more communication domains. Any one of the one or more communication domains refers to a system that includes a group of communication nodes having a communication relationship and a communication connection relationship (that is, a communication link) between the communication nodes, and is usually used to implement a specific function. A communication domain includes a primary communication node and one or more secondary communication nodes. The primary communication node may be referred to as a primary node for short, is configured to manage time-frequency resources in a communication domain in which the primary node is located, and has a function of scheduling the time-frequency resources for a communication link between secondary nodes in the communication domain in which the primary node is located. The primary node may communicate with a secondary node in the communication domain in which the primary node is located, a primary node or a secondary node in another communication domain, and a device outside a vehicle, for example, may receive encoded control data sent by the network device 110 and send the encoded control data to the secondary node in the communication domain in which the primary node is located, to implement a function of controlling a component in the vehicle, or may encode a control response returned by the secondary node in the communication domain in which the primary node is located and send the encoded control response to the network device 110. The secondary communication node may be referred to as a secondary node for short, and is configured to: communicate with a primary node in a communication domain in which the secondary node is located, or communicate, based on time-frequency resources scheduled by the primary node in the communication domain in which the secondary node is located, with another secondary node in the communication domain in which the secondary node is located. A node that does not belong to the communication domain may be referred to as an external node for short. The external node includes a device that does not join the communication domain and a device that has joined the communication domain and then exits the communication domain, and may be converted into a secondary node in the communication domain by joining the communication domain.

Refer to FIG. 2. In some embodiments, an in-vehicle communication link of the vehicle 121 may include one or more of the following communication domains: an infotainment domain including in-vehicle infotainment, a microphone, a speaker, and the like; a cockpit domain including a cockpit domain controller, a liquid crystal instrument, a touchscreen, and the like; and a switch domain including a passive entry passive start system, a mobile phone key, a vehicle key, and the like. In some other embodiments, an in-vehicle architecture may further include one or more of the following communication domains: a chassis electronic domain including a speed change controller, an anti-lock controller, a braking force distributor, a driving anti-skid controller, and the like; a power drive domain including a clutch, a gearbox, a universal drive, a final drive, a differential and halfshaft power drive domain, and the like; an assisted driving domain including various sensors (for example, a lidar, a millimeter wave radar, a monocular camera, a binocular camera, or a satellite navigation receiver) installed on the vehicle, a navigation map generator, an obstacle sensor, a path planner, and the like; and the like.

It should be noted that network elements in this embodiment of this application include a transmit end device having a polar code encoding function and a receive end device having a polar code decoding function. The transmit end device and the receive end device may be any two nodes having a communication function in this embodiment of this application. For example, the transmit end device is the network device 110 shown in FIG. 1, or a chip or a circuit in the network device 110, and the receive end device is any terminal device in the terminal device 121 to the terminal device 126 shown in FIG. 1, or a chip or a circuit in the any terminal device. Alternatively, the transmit end device is any terminal device in the terminal device 121 to the terminal device 126 shown in FIG. 1, or a chip or a circuit in the any terminal device, and the receive end device is the network device 110 shown in FIG. 1, or a chip or a circuit in the network device 110. Alternatively, the transmit end device is any terminal device in the terminal device 121 to the terminal device 126 shown in FIG. 1, or a chip or a circuit in the any terminal device, and the receive end device is another terminal device in the terminal device 121 to the terminal device 126 shown in FIG. 1, or a chip or a circuit in the another terminal device. When the transmit end device or the receive end device is the vehicle 121, the transmit end device or the receive end device may be specifically a communication node in any communication domain shown in FIG. 2. The communication node may be a primary node or may be a secondary node. When the communication node is a secondary node, the communication node may send encoded data to a primary node or a secondary node in the communication domain in which the communication node is located, or may receive and decode encoded data sent by a primary node or a secondary node in the communication domain in which the communication node is located. When the communication node is a primary node, the communication node may send encoded data to a secondary node in the communication domain in which the communication node is located, a primary node in another communication domain, the network device 110, or another terminal device, or may receive and decode encoded data sent by a secondary node in the communication domain in which the communication node is located, a primary node in another communication domain, the network device 110, or another terminal device. This is not specifically limited.

In addition, the system architecture described in the foregoing content is intended to describe the technical solutions in this application more clearly, and does not constitute a limitation on the technical solutions provided in this application. A person skilled in the art may know that, with evolution of a system architecture and emergence of a new scenario, the technical solutions provided in this application are also applicable to similar technical problems. For example, the technical solutions provided in this application may be further applied to another intelligent terminal having a wireless communication function other than a vehicle, or disposed in another intelligent terminal having a wireless communication function other than a vehicle, or disposed in a component of the intelligent terminal. The intelligent terminal may be another terminal device such as an intelligent transportation device, a smart home device, or a robot, for example, may include but is not limited to an intelligent terminal, another sensor such as a controller, a chip, a radar or a camera in the intelligent terminal, and another component.

For ease of understanding, some terms or nouns that may be used in embodiments of this application are first described. The terms or nouns are also used as a part of the invention content of embodiments of this application.

(1) Polar code.

In a wireless communication system, a polar code is a channel coding scheme in which a Shannon capacity can be obtained and encoding and decoding complexity is low. An encoding policy of the polar code is to transmit information useful to a user through a noise-free channel, and transmit agreed information or not to transmit information through a pure noise channel. The polar code is a linear block code, an encoding matrix of the polar code is $F_N$, and an encoding process meets $x_1^N = u_1^N F_N$. $u_1^N = (u_1, u_2, \ldots, u_N)$ is a binary row vector, a length is $N$, and N is also referred to as a code length. $F_N$ is a matrix of $N \times N$, and $F_N = F_2^{\otimes(\log_2(N))}$. Herein, $F_2 = \begin{bmatrix} 1 & 0 \\ 1 & 1 \end{bmatrix}$, and $F_2^{\otimes(\log_2(N))}$ is defined as a Kronecker (Kronecker) product of $\log_2 N$ matrices $F_2$. Both addition and multiplication operations involved in this part are addition and multiplication operations on a binary Galois field (Galois Field), which are not described in detail in this application.

It can be learned from an encoding principle of the polar code that, a characteristic of the polar code is that a code length corresponding to a codeword output after encoding is a positive integer power of 2. If a code length corresponding to a codeword output after encoding does not meet a form of a positive integer power of 2, a rate matching module further needs to be additionally configured after polar encoding and polar decoding, so that channel retransmission or puncturing is performed on the encoded codeword by using the rate matching module, to match an actual transmission capability of a channel.

(2) Mother code of a polar code.

In polar code encoding, a first operation is to determine a mother code length. The mother code length indicates a length of a codeword output after encoding, is also referred to as a code length, and formally meets $N=2^m$, where m is determined based on a speed matching length and an input bit length.

(3) Information bit, code block, and codeword.

In embodiments of this application, the information bit is information to be sent by a transmit end device to a receive end device, the code block is information before polar encoding, and the codeword is information after the code block is encoded. The code block may include an information bit but does not include a check code, or may include both an information bit and a check code. When the code block includes both an information bit and a check code, information other than the check code in the code block is the information bit.

In a polar code, an information bit is usually encoded in two manners in the industry. One manner is directly generating a CRC code for an entire information bit, concatenating the CRC code behind the entire information bit as a code block, and then encoding the code block obtained through concatenation. The other manner is first evenly segmenting an entire information bit, then generating a CRC code for each data segment obtained through segmentation, concatenating the generated CRC code behind the corresponding data segment as a code block, and then encoding each code block obtained through concatenation. However, regardless of whether the information bit is not segmented or the information bit is evenly segmented, a code length of a positive integer power of 2 that needs to be met by a codeword after polar encoding cannot be accurately matched. As a result, a rate matching module needs to be additionally configured after polar encoding or polar decoding to implement code length adjustment. This is not conducive to reducing system design complexity and system power consumption.

In view of this, this application provides a data processing method, to obtain one or more code blocks based on a total data length of an information bit and a preset first code rate, and enable the one or more code blocks to match a code length of a positive integer power of 2 that is met by a codeword after polar encoding. In this way, a codeword obtained after the one or more code blocks are encoded can be directly transmitted or received by using the first code rate, and a rate matching module does not need to be added. This effectively reduces system design complexity and system power consumption.

The following further describes in detail this application with reference to accompanying drawings. It should be understood that specific operation methods in the method embodiments may also be applied to an apparatus embodiment or a system embodiment. It should be noted that, in the descriptions of this application, a plurality of means two or more. In view of this, in embodiments of this application, "a plurality of" may also be understood as "two or more". The term "and/or" describes an association relationship between associated objects and represents that three relationships may exist. For example, A and/or B may represent the following three cases: Only A exists, both A and B exist, and only B exists. In addition, the character "/" generally indicates an "or" relationship between the associated objects.

In addition, it should be understood that in the descriptions of this application, terms such as "first" and "second" are merely used for distinguishing and description, but should not be understood as indicating or implying relative importance, or should not be understood as indicating or implying an order. For example, a "first code block" refers to a code block corresponding to a largest code length, and a "second code block" refers to a code block corresponding to a non-largest code length. The "first code block" and the "second code block" only indicate whether the code length of the code block is the largest code length, and should not be understood as different priorities or importance, or should not be understood as implying a different order.

**Embodiment 1**

FIG. 3 is an example of a schematic interaction flowchart of a data processing method according to an embodiment of this application. The method is applicable to a transmit end device and a receive end device. The transmit end device and the receive end device may be any two apparatuses, nodes, chips, or the like that support a communication function in this embodiment of this application. As shown in FIG. 3, the procedure includes the following steps.

Step 301: The transmit end device obtains an information bit.

In step 301, the information bit is an information bit to be sent by the transmit end device to the receive end device. The information bit may be data information, control information, or system information. This is not specifically limited.

Step 302: The transmit end device obtains C code blocks based on a total data length of the information bit and a preset first code rate, where the C code blocks correspond to one or more code lengths, the one or more code lengths belong to S predefined or preconfigured code lengths, data lengths of the C code blocks correspond to the first code rate, each of the S code lengths meets a form of a positive integer power of 2, S is a positive integer greater than or equal to 2, and C is a positive integer.

In step 302, the total data length of the information bit is a total quantity of bits of the information bit to be sent by the transmit end device to the receive end device. For example, when the to-be-sent information bit is 300 bits in total, the total data length of the information bit is 300 bits. In addition, the preset first code rate may be a code rate required by a transmission format, or may be a code rate manually selected based on a requirement, or may be a code rate selected from a plurality of predefined or preconfigured code rates according to a rule. The rule may be, for example, polling selection or random selection. This is not specifically limited.

In a possible implementation, a correspondence among S code lengths, T code rates, and S×T data lengths is predefined or preconfigured in the transmit end device. Each of the S×T data lengths may correspond to one of the S code lengths and one of the T code rates, and is used to represent a preset or preconfigured data length of a code block when the code block with a corresponding code length is transmitted by using a corresponding code rate, where both S and T are positive integers greater than or equal to 2. The S code lengths may be preset or preconfigured with reference to a mother code length. For example, S currently commonly used m values are determined in advance based on a commonly used speed matching length and an input bit length. Then, S mother code lengths corresponding to the S currently commonly used m values are calculated in a form of $N=2^m$, and are used as the S code lengths. The T code rates may be preset or preconfigured with reference to a currently commonly used code rate. The T code rates are also generally referred to as T-order code rates. A higher order of the code rate indicates a larger code rate. In addition, at a same code rate, a predefined or preconfigured data length increases as a code length increases, and decreases as the code length decreases. In other words, at a same code rate, a predefined or preconfigured data length has a positive correlation with a code length. A large code length corresponds to a large code block, and a small code length corresponds to a small code block.

Further, for example, a data length that can be borne by a channel in the communication field is a product of a code length and a code rate, and transmission performance of the channel has a positive correlation with the code length, and has a negative correlation with the code rate. In other words, a smaller code length indicates poorer data transmission performance of the channel, and a smaller code rate indicates better data transmission performance of the channel. Based on this, the S×T data lengths corresponding to the S code lengths and the T code rates may alternatively be preset or preconfigured according to the following rule: For any code rate, a data length corresponding to a largest code length in the S code lengths is a product of a current code rate and the largest code length, and a data length corresponding to a non-largest code length in the S code lengths is a product of a code rate less than the current code rate and the non-largest code length. In this way, a length of a code block corresponding to the largest code length transmitted by using each code rate is equal to the data length that can be borne by the channel, so that an advantage of the largest code length on data transmission performance can be fully utilized to achieve optimal transmission performance of the channel corresponding to the largest code length. In addition, a length of a code block corresponding to the non-largest code length transmitted by using each code rate is less than the data length that can be borne by the channel, so that adverse impact of a small code length on data transmission performance can be compensated by reducing the code rate.

In the foregoing example, the code rate less than the current code rate may be set or configured according to an actual scenario, or may be set or configured based on experience by a person skilled in the art. This is not specifically limited. In a possible implementation, it is assumed that the following S code lengths $N_0 = 2^{m_0}$ , $N_1 = 2^{m_0-1}$, $N_2 = 2^{m_0-2}$, ..., and $N_{S-1} = 2^{m_0-S+1}$ are preset or preconfigured, and $m_0$ is a positive integer. To be specific, values of the code length $N_0$, the code length $N_1$, the code length $N_2$, ..., and the code length $N_{S-1}$ decrease sequentially, the code length $N_0$ is a largest code length in the S code lengths, the code length $N_{S-1}$ is a smallest code length in the S code lengths, and each of the S code lengths meets the form of a positive integer power of 2. In addition, the following T code rates $R_0$, $R_1$, $R_2$, ..., and $R_{T-1}$ are preset or preconfigured, and values of the code rate $R_0$, the code rate $R_1$, the code rate $R_2$, ..., and the code rate $R_{T-1}$ increase sequentially. In other words, the code rate $R_0$ is a smallest code rate in the T code rates, and the code rate $R_{T-1}$ is a largest code rate in the T code rates. The following uses three correspondences as examples to describe a possible solution for determining, based on the code rate less than the current code rate, a data length of a code block with a non-largest code length at the current code rate.

Correspondence 1

In this embodiment of this application, the correspondence among the S code lengths, the T code rates, and the S×T data lengths may be represented in one or more of a table, a stack, a database, a queue, or another form. For example, when the correspondence is represented as a table, Table 1.1 is a table of a correspondence among the S code lengths, the T code rates, and the S×T data lengths that is set or configured according to Correspondence 1, and the correspondence table is also referred to as a segment length reference table, or referred to as a K table for short.

**Table 1.1: A segment length reference table (K table)**

| Code rate | Code length | | | | |
|---|---|---|---|---|---|
| | $N_0 = 2^{m_0}$ | $N_1 = 2^{m_0-1}$ | $N_2 = 2^{m_0-2}$ | ... | $N_{S-1} = 2^{m_0-S+1}$ |
| $R_0$ | $K_{0,0}=N_0\times R_0$ | $K_{1,0}=N_1\times(R_0-D_0)$ | $K_{2,0}=N_2\times(R_0-D_0)$ | ... | $K_{S-1,0}=N_{S-1}\times(R_0-D_0)$ |
| $R_1$ | $K_{0,1}=N_0\times R_1$ | $K_{1,1}=N_1\times R_0$ | $K_{2,1}=N_2\times R_0$ | ... | $K_{S-1,1}=N_{S-1}\times R_0$ |
| $R_2$ | $K_{0,2}=N_0\times R_2$ | $K_{1,2}=N_1\times R_1$ | $K_{2,2}=N_2\times R_1$ | ... | $K_{S-1,2}=N_{S-1}\times R_1$ |
| ... | ... | ... | ... | ... | ... |
| $R_{T-1}$ | $K_{0,T-1}=N_0\times R_{T-1}$ | $K_{1,T-1}=N_1\times R_{T-2}$ | $K_{2,T-1}=N_2\times R_{T-2}$ | ... | $K_{S-1,T-1}=N_{S-1}\times R_{T-2}$ |

As shown in Table 1.1, a preset or preconfigured data length corresponding to one code length and one code rate may meet one or more of the following forms:

1. A preset or preconfigured data length $K_{0,i}$ corresponding to the largest code length $N_0$ and any code rate $R_i$ meets the following formula (3.1):

$$K_{0,i}=N_0\times R_i \quad (3.1)$$

Herein, i is an integer greater than or equal to 0 and less than or equal to T-1.

2. A preset or preconfigured data length $K_{j,0}$ corresponding to any non-largest code length $N_j$ and the smallest code rate $R_0$ meets the following formula (3.2):

$$K_{j,0}=N_j\times(R_0-D_0) \quad (3.2)$$

$D_0$ is a first preset order reduction threshold, and indicates that when an upper-order code rate less than the smallest code rate exists, a code rate difference between the upper-order code rate and the smallest code rate may be preset or preconfigured to be a value less than the smallest code rate $R_0$; and j is a positive integer less than or equal to S-1.

3. A preset or preconfigured data length $K_{j,z}$ corresponding to any non-largest code length $N_j$ and any non-smallest code rate $R_z$ meets the following formula (3.3):

$$K_{j,z}=N_j\times R_{z-1} \quad (3.3)$$

$R_{z-1}$ is an upper-order code rate less than $R_z$, and Z is a positive integer less than or equal to T-1.

For example, currently commonly used code lengths mainly include one or more of 1024 bits, 512 bits, 256 bits, 128 bits, or 64 bits, and currently commonly used code rates mainly include 1/4, 3/8, 1/2, 5/8, 3/4, and/or 7/8. It is considered that an interval between any two adjacent code rates in these code rates is 1/8. Therefore, the first preset order reduction threshold $D_0$ may be preset or preconfigured to be 1/8. In this way, regardless of which code rate is used as a smallest code rate in an actual scenario, the K table can be kept consistent as much as possible. For example, when the first preset order reduction threshold $D_0$ is 1/8, in a possible scenario, if the code lengths include the foregoing five code lengths, and the code rates include the foregoing six code rates, the K table in Table 1.1 may be specifically shown in Table 2.11(A) below, and a calculation result is shown in Table 2.11(B) below. When the preset order reduction threshold $D_0$ is 1/8, in another possible scenario, if the code lengths include the foregoing five code lengths, and the code rates include 3/8, 1/2, 5/8, 3/4, and 7/8, the K table in Table 1.1 may be specifically shown in Table 3.11(A) below, and a calculation result is shown in Table 3.11(B) below. By comparing Table 2.11(B) and Table 3.11(B), it can be learned that the smallest code rate in Table 2.11(B) is 1/2, and the smallest code rate in Table 3.11(B) is 3/8. Although the two smallest code rates are different, compared with that in Table 2.11(B), only one row of data corresponding to 1/2 is missing in Table 3.11(B), and data lengths corresponding to other code rates are still consistent with those in Table 2.11(B).

**Table 2.11(A): A specific example of the K table**

| Code rate | Code length (bit) | | | | |
|---|---|---|---|---|---|
| | 1024 | 512 | 256 | 128 | 64 |
| 1/4 | 1024×1/4 | 512×(1/4-1/8) | 256×(1/4-1/8) | 128×(1/4-1/8) | 64×(1/4-1/8) |
| 3/8 | 1024×3/8 | 512×1/4 | 256×1/4 | 128×1/4 | 64×1/4 |
| 1/2 | 1024×1/2 | 512×3/8 | 256×3/8 | 128×3/8 | 64×3/8 |
| 5/8 | 1024×5/8 | 512×1/2 | 256×1/2 | 128×1/2 | 64×1/2 |
| 3/4 | 1024×3/4 | 512×5/8 | 256×5/8 | 128×5/8 | 64×5/8 |
| 7/8 | 1024×7/8 | 512×3/4 | 256×3/4 | 128×3/4 | 64×3/4 |

**Table 2.11(B): A specific example of the K table**

| Code rate | Code length (bit) | | | | |
|---|---|---|---|---|---|
| | 1024 | 512 | 256 | 128 | 64 |
| 1/4 | 256 | 64 | 32 | 16 | 8 |
| 3/8 | 384 | 128 | 64 | 32 | 16 |
| 1/2 | 512 | 192 | 96 | 48 | 24 |
| 5/8 | 640 | 256 | 128 | 64 | 32 |

(continued)

| Code rate | Code length (bit) | | | | |
|---|---|---|---|---|---|
| | 1024 | 512 | 256 | 128 | 64 |
| 3/4 | 768 | 320 | 160 | 80 | 40 |
| 7/8 | 896 | 384 | 192 | 96 | 48 |

**Table 3.11(A): Another specific example of the K table**

| Code rate | Code length (bit) | | | | |
|---|---|---|---|---|---|
| | 1024 | 512 | 256 | 128 | 64 |
| 3/8 | 1024×3/8 | 512×(3/8-1/8) | 256×(3/8-1/8) | 128×(3/8-1/8) | 64×(3/8-1/8) |
| 1/2 | 1024×1/2 | 512×3/8 | 256×3/8 | 128×3/8 | 64×3/8 |
| 5/8 | 1024×5/8 | 512×1/2 | 256×1/2 | 128×1/2 | 64×1/2 |
| 3/4 | 1024×3/4 | 512×5/8 | 256×5/8 | 128×5/8 | 64×5/8 |
| 7/8 | 1024×7/8 | 512×3/4 | 256×3/4 | 128×3/4 | 64×3/4 |

**Table 3.11(B): Another specific example of the K table**

| Code rate | Code length (bit) | | | | |
|---|---|---|---|---|---|
| | 1024 | 512 | 256 | 128 | 64 |
| 3/8 | 384 | 128 | 64 | 32 | 16 |
| 1/2 | 512 | 192 | 96 | 48 | 24 |
| 5/8 | 640 | 256 | 128 | 64 | 32 |
| 3/4 | 768 | 320 | 160 | 80 | 40 |
| 7/8 | 896 | 384 | 192 | 96 | 48 |

It should be understood that the first preset order reduction threshold Do may alternatively be set as another value, for example, 1/16, 1/32, or 1/64. For example, when the first preset order reduction threshold Do is set as 1/16, in a possible scenario, if the code lengths include the foregoing five code lengths, and the code rates include the foregoing six code rates, the K table in Table 1.1 may be specifically shown in Table 2.12(A) below, and a calculation result is shown in Table 2.12(B) below. When the first preset order reduction threshold Do is 1/16, in another possible scenario, if the code lengths include the foregoing five code lengths, and the code rates include 3/8, 1/2, 5/8, 3/4, and 7/8, the K table in Table 1.1 may be specifically shown in Table 3.12(A) below, and a calculation result is shown in Table 3.12(B) below.

**Table 2.12(A): A specific example of the K table**

| Code rate | Code length (bit) | | | | |
|---|---|---|---|---|---|
| | 1024 | 512 | 256 | 128 | 64 |
| 1/4 | 1024×1/4 | 512×(1/4-1/16) | 256×(1/4-1/16) | 128×(1/4-1/16) | 64×(1/4-1/16) |
| 3/8 | 1024×3/8 | 512×1/4 | 256×1/4 | 128×1/4 | 64×1/4 |
| 1/2 | 1024×1/2 | 512×3/8 | 256×3/8 | 128×3/8 | 64×3/8 |
| 5/8 | 1024×5/8 | 512×1/2 | 256×1/2 | 128×1/2 | 64×1/2 |
| 3/4 | 1024×3/4 | 512×5/8 | 256×5/8 | 128×5/8 | 64×5/8 |
| 7/8 | 1024×7/8 | 512×3/4 | 256×3/4 | 128×3/4 | 64×3/4 |

**Table 2.12(B): A specific example of the K table**

| Code rate | Code length (bit) | | | | |
|---|---|---|---|---|---|
| | 1024 | 512 | 256 | 128 | 64 |
| 1/4 | 256 | 96 | 48 | 24 | 12 |
| 3/8 | 384 | 128 | 64 | 32 | 16 |
| 1/2 | 512 | 192 | 96 | 48 | 24 |
| 5/8 | 640 | 256 | 128 | 64 | 32 |
| 3/4 | 768 | 320 | 160 | 80 | 40 |
| 7/8 | 896 | 384 | 192 | 96 | 48 |

**Table 3.12(A): A specific example of the K table**

| Code rate | Code length (bit) | | | | |
|---|---|---|---|---|---|
| | 1024 | 512 | 256 | 128 | 64 |
| 3/8 | 1024×3/8 | 512×(3/8-1/16) | 256×(3/8-1/16) | 128×(3/8-1/16) | 64×(3/8-1/16) |
| 1/2 | 1024×1/2 | 512×3/8 | 256×3/8 | 128×3/8 | 64×3/8 |
| 5/8 | 1024×5/8 | 512×1/2 | 256×1/2 | 128×1/2 | 64×1/2 |
| 3/4 | 1024×3/4 | 512×5/8 | 256×5/8 | 128×5/8 | 64×5/8 |
| 7/8 | 1024×7/8 | 512×3/4 | 256×3/4 | 128×3/4 | 64×3/4 |

**Table 3.12(B): A specific example of the K table**

| Code rate | Code length (bit) | | | | |
|---|---|---|---|---|---|
| | 1024 | 512 | 256 | 128 | 64 |
| 3/8 | 384 | 160 | 80 | 40 | 20 |
| 1/2 | 512 | 192 | 96 | 48 | 24 |
| 5/8 | 640 | 256 | 128 | 64 | 32 |
| 3/4 | 768 | 320 | 160 | 80 | 40 |
| 7/8 | 896 | 384 | 192 | 96 | 48 |

By comparing Table 2.11 (B) and Table 2.12(B), it can be learned that, a larger value of the first preset order reduction threshold Do indicates a smaller data length of a code block with a non-largest code length at the smallest code rate, and a smaller value of the first preset reduction threshold Do indicates a larger data length of the code block with a non-largest code length at the smallest code rate. In addition, the first preset order reduction threshold Do affects a data length corresponding to the smallest code rate, but does not affect a data length corresponding to another code rate.

Correspondence 2

In this embodiment of this application, the correspondence among the S code lengths, the T code rates, and the S×T data lengths may be represented in one or more of a table, a stack, a database, a queue, or another form. For example, when the correspondence is represented as a table, Table 1.2 is a table of a correspondence among the S code lengths, the T code rates, and the S×T data lengths that is set or configured according to Correspondence 2, and the correspondence table is referred to as a segment length reference table, or referred to as a K table for short.

**Table 1.2: Another segment length reference table (K table)**

| Code rate | Code length | | | | |
|---|---|---|---|---|---|
| | $N_0 = 2^{m_0}$ | $N_1 = 2^{m_0-1}$ | $N_2 = 2^{m_0-2}$ | ... | $N_{S-1} = 2^{m_0-S+1}$ |
| Ro | $K_{0,0}=N_0 \times R_0$ | $K_{1,0}=N_1 \times (R_0-P_0)$ | $K_{2,0}=N_2 \times (R_0-P_0)$ | ... | $K_{S-1,0}=N_{S-1} \times (R_0-P_0)$ |
| Ri | $K_{0,1}=N_0 \times R_1$ | $K_{1,1}=N_1 \times (R_1-P_1)$ | $K_{2,1}=N_2 \times (R_1-P_1)$ | ... | $K_{S-1,1}=N_{S-1} \times (R_1-P_1)$ |
| $R_2$ | $K_{0,2}=N_0 \times R_2$ | $K_{1,2}=N_1 \times (R_2-P_2)$ | $K_{2,2}=N_2 \times (R_2-P_2)$ | ... | $K_{S-1,2}=N_{S-1} \times (R_2-P_2)$ |
| ... | ... | ... | ... | ... | ... |
| $R_{T-1}$ | $K_{0,T-1}=N_0 \times R_{T-1}$ | $K_{1,T-1}=N_1 \times (R_{T-1}-P_{T-1})$ | $K_{2,T-1}=N_2 \times (R_{T-1}-P_{T-1})$ | ... | $K_{S-1,T-1}=N_{S-1} \times (R_{T-1}-P_{T-1})$ |

As shown in Table 1.2, in Correspondence 2, a preset or preconfigured data length corresponding to one code length and one code rate may meet one or more of the following forms:

1. A preset or preconfigured data length $K_{0,i}$ corresponding to the largest code length $N_0$ and any code rate $R_i$ meets the following formula (3.4):

$$K_{0,i}=N_0 \times R_i \quad (3.4)$$

Herein, i is an integer greater than or equal to 0 and less than or equal to T-1.

2. A preset or preconfigured data length $K_{j,i}$ corresponding to any non-largest code length $N_j$ and any code rate $R_i$ meets the following formula (3.5):

$$K_{j,i}=N_j \times (R_i-P_i) \quad (3.5)$$

$P_i$ is a second preset order reduction threshold corresponding to the code rate Ri, indicates a specific code rate that is lower than the current code rate and that is used to transmit a code block corresponding to the current code rate, and may be preset or preconfigured to be a value less than the code rate Ri; and j is a positive integer less than or equal to S-1.

It should be noted that, in Correspondence 2, second preset order reduction thresholds corresponding to different code rates may be the same or different. This is not specifically limited. When the code rates correspond to a same second preset order reduction threshold, the second preset order reduction threshold may be set as a value less than the smallest code rate in the code rates. For example, it is considered that a code length in a current scenario includes one or more of 1024 bits, 512 bits, 256 bits, 128 bits, and 64 bits, and currently commonly used code rates include 1/4, 3/8, 1/2, 5/8, 3/4, and/or 7/8. Therefore, the second preset order reduction threshold corresponding to the code rates may be set as a value less than the smallest code rate 1/4 in these currently commonly used code rates, for example, may be set as 1/8, 1/16, 1/32, or 1/64. It is assumed that the second preset order reduction threshold corresponding to the code rates is set as 1/16. In one scenario, if the code lengths include 1024 bits, 512 bits, 256 bits, 128 bits, and 64 bits, and the code rates include 1/4, 3/8, 1/2, 5/8, 3/4, and 7/8, the K table in Table 1.2 may be specifically shown in Table 2.21(A) below, and a calculation result is shown in Table 2.22(B) below. In another scenario, if the code lengths include 1024 bits, 512 bits, 256 bits, 128 bits, and 64 bits, and the code rates include 3/8, 1/2, 5/8, 3/4, and 7/8, the K table in Table 1.2 may be specifically shown in Table 3.21(A) below, and a calculation result is shown in Table 3.22(B) below.

**Table 2.21(A): A specific example of the K table**

| Code rate | Code length (bit) | | | | |
|---|---|---|---|---|---|
| | 1024 | 512 | 256 | 128 | 64 |
| 1/4 | 1024×1/4 | 512×(1/4-1/16) | 256×(1/4-1/16) | 128×(1/4-1/16) | 64×(1/4-1/16) |
| 3/8 | 1024×3/8 | 512×(3/8-1/16) | 256×(3/8-1/16) | 128×(3/8-1/16) | 64×(3/8-1/16) |
| 1/2 | 1024×1/2 | 512×(1/2-1/16) | 256×(1/2-1/16) | 128×(1/2-1/16) | 64×(1/2-1/16) |

(continued)

| Code rate | Code length (bit) | | | | |
|---|---|---|---|---|---|
| | 1024 | 512 | 256 | 128 | 64 |
| 5/8 | 1024×5/8 | 512×(5/8-1/16) | 256×(5/8-1/16) | 128×(5/8-1/16) | 64×(5/8-1/16) |
| 3/4 | 1024×3/4 | 512×(3/4-1/16) | 256×(3/4-1/16) | 128×(3/4-1/16) | 64×(3/4-1/16) |
| 7/8 | 1024×7/8 | 512×(7/8-1/16) | 256×(7/8-1/16) | 128×(7/8-1/16) | 64×(7/8-1/16) |

**Table 2.22(B): A specific example of the K table**

| Code rate | Code length (bit) | | | | |
|---|---|---|---|---|---|
| | 1024 | 512 | 256 | 128 | 64 |
| 1/4 | 256 | 96 | 48 | 24 | 12 |
| 3/8 | 384 | 160 | 80 | 40 | 20 |
| 1/2 | 512 | 224 | 112 | 56 | 28 |
| 5/8 | 640 | 288 | 144 | 72 | 36 |
| 3/4 | 768 | 352 | 176 | 88 | 44 |
| 7/8 | 896 | 416 | 208 | 104 | 52 |

**Table 3.21(A): A specific example of the K table**

| Code rate | Code length (bit) | | | | |
|---|---|---|---|---|---|
| | 1024 | 512 | 256 | 128 | 64 |
| 3/8 | 1024×3/8 | 512×(3/8-1/16) | 256×(3/8-1/16) | 128×(3/8-1/16) | 64×(3/8-1/16) |
| 1/2 | 1024×1/2 | 512×(1/2-1/16) | 256×(1/2-1/16) | 128×(1/2-1/16) | 64×(1/2-1/16) |
| 5/8 | 1024×5/8 | 512×(5/8-1/16) | 256×(5/8-1/16) | 128×(5/8-1/16) | 64×(5/8-1/16) |
| 3/4 | 1024×3/4 | 512×(3/4-1/16) | 256×(3/4-1/16) | 128×(3/4-1/16) | 64×(3/4-1/16) |
| 7/8 | 1024×7/8 | 512×(7/8-1/16) | 256×(7/8-1/16) | 128×(7/8-1/16) | 64×(7/8-1/16) |

**Table 3.22(B): A specific example of the K table**

| Code rate | Code length (bit) | | | | |
|---|---|---|---|---|---|
| | 1024 | 512 | 256 | 128 | 64 |
| 3/8 | 384 | 160 | 80 | 40 | 20 |
| 1/2 | 512 | 224 | 112 | 56 | 28 |
| 5/8 | 640 | 288 | 144 | 72 | 36 |
| 3/4 | 768 | 352 | 176 | 88 | 44 |
| 7/8 | 896 | 416 | 208 | 104 | 52 |

It should be understood that, only an example in which the second preset order reduction threshold corresponding to the code rates is 1/16 is used to describe a possible case of Correspondence 2. A case in which second preset order reduction thresholds are set as different values or a case in which second preset order reduction thresholds are set as a same value but are not 1/16 may be implemented with reference to the foregoing content. Details are not described herein again. In addition, in Correspondence 2, a data length of a data block with a non-largest code length at each code rate can be flexibly changed by flexibly configuring a second preset order reduction threshold corresponding to each code rate. For example, in a scenario in which a small code block needs to carry a large amount of data, the second preset order reduction threshold corresponding to each code rate may be set as a small value, to increase a data length of a small data block with a non-largest code length at each code rate. In a scenario in which a small code block needs to carry a small amount of data, the second preset order reduction threshold corresponding to each code rate may be set as a large value, to reduce a data length of a small data block with a non-largest code length at each code rate. In a scenario in which a large amount of data needs to be carried at a code rate and a small amount of data needs to be carried at another code rate, a second preset order reduction threshold corresponding to the code rate may be set as a small value, and a second preset order reduction threshold corresponding to the another code rate may be set as a large value. It can be learned that Correspondence 2 is compatible with various transmission scenarios, and helps improve universality in the communication field.

Correspondence 3

In this embodiment of this application, the correspondence among the S code lengths, the T code rates, and the S×T data lengths may be represented in one or more of a table, a stack, a database, a queue, or another form. For example, when the correspondence is represented as a table, Table 1.3 is a table of a correspondence among the S code lengths, the T code rates, and the S×T data lengths that is set or configured according to Correspondence 3, and the correspondence table is referred to as a segment length reference table, or referred to as a K table for short.

**Table 1.3: Still another segment length reference table (K table)**

| Code rate | Code length | | | | |
|---|---|---|---|---|---|
| | $N_0 = 2^{m_0}$ | $N_1 = 2^{m_0-1}$ | $N_2 = 2^{m_0-2}$ | ... | $N_{S-1} = 2^{m_0-S+1}$ |
| $R_0$ | $K_{0,0}=N_0\times R_0$ | $K_{1,0}=N_1\times\lambda_0 R_0$ | $K_{2,0}=N_2\times\lambda_0 R_0$ | ... | $K_{S-1,0}=N_{S-1}\times\lambda_0 R_0$ |
| $R_1$ | $K_{0,1}=N_0\times R_1$ | $K_{1,1}=N_1\times\lambda_1 R_1$ | $K_{2,1}=N_2\times\lambda_1 R_1$ | ... | $K_{S-1,1}=N_{S-1}\times\lambda_1 R_1$ |
| $R_2$ | $K_{0,2}=N_0\times R_2$ | $K_{1,2}=N_1\times\lambda_2 R_2$ | $K_{2,2}=N_2\times\lambda_2 R_2$ | ... | $K_{S-1,2}=N_{S-1}\times\lambda_2 R_2$ |
| ... | ... | ... | ... | ... | ... |
| $R_{T-1}$ | $K_{0,T-1}=N_0\times R_{T-1}$ | $K_{1,T-1}=N_1\times\lambda_{T-1} R_{T-1}$ | $K_{2,T-1}=N_2\times\lambda_{T-1} R_{T-1}$ | ... | $K_{S-1,T-1}=N_{S-1}\times\lambda_{T-1} R_{T-1}$ |

As shown in Table 1.3, in Correspondence 3, a preset or preconfigured data length corresponding to one code length and one code rate may meet one or more of the following forms:

1. A preset or preconfigured data length $K_{0,i}$ corresponding to the largest code length $N_0$ and any code rate $R_i$ meets the following formula (3.6):

$$K_{0,i}=N_0\times R_i \quad (3.6)$$

Herein, i is an integer greater than or equal to 0 and less than or equal to T-1.

2. A preset or preconfigured data length $K_{j,i}$ corresponding to any non-largest code length $N_j$ and any code rate $R_i$ meets the following formula (3.7):

$$K_{j,i}=N_j\times\lambda_i R_i \quad (3.7)$$

$\lambda_1$ is a preset code rate proportion corresponding to the code rate Ri, indicates a proportion of the current code rate used to transmit a code block corresponding to the current code rate, and may be preset or preconfigured to be a value greater than 0 and less than 1; and j is a positive integer less than or equal to S-1.

It should be noted that, in Correspondence 3, preset code rate proportions corresponding to different code rates may be the same or different. This is not specifically limited. Preferably, it may be set that the code rates correspond to a same preset code rate proportion, so that data lengths of code blocks corresponding to the code rates can change stably with changes of the code rates. It is assumed that the preset code rate proportion corresponding to the code rates is set as 1/2. In one scenario, if the code lengths include 1024 bits, 512 bits, 256 bits, 128 bits, and 64 bits, and the code rates include 1/4, 3/8, 1/2, 5/8, 3/4, and 7/8, the K table in Table 1.3 may be specifically shown in Table 2.31(A) below, and a calculation result is shown in Table 2.32(B) below. In another scenario, if the code lengths include 1024 bits, 512 bits, 256 bits, 128 bits, and 64 bits, and the code rates include 3/8, 1/2, 5/8, 3/4, and 7/8, the K table in Table 1.3 may be specifically shown in Table 3.31(A) below, and a calculation result is shown in Table 3.32(B) below.

**Table 2.31(A): A specific example of the K table**

| Code rate | Code length (bit) | | | | |
|---|---|---|---|---|---|
| | 1024 | 512 | 256 | 128 | 64 |
| 1/4 | 1024×1/4 | 512×1/2×1/4 | 256×1/2×1/4 | 128×1/2×1/4 | 64×1/2×1/4 |
| 3/8 | 1024×3/8 | 512×1/2×3/8 | 256×1/2×3/8 | 128×1/2×3/8 | 64×1/2×3/8 |
| 1/2 | 1024×1/2 | 512×1/2×1/2 | 256×1/2×1/2 | 128×1/2×1/2 | 64×1/2×1/2 |
| 5/8 | 1024×5/8 | 512×1/2×5/8 | 256×1/2×5/8 | 128×1/2×5/8 | 64×1/2×5/8 |
| 3/4 | 1024×3/4 | 512×1/2×3/4 | 256×1/2×3/4 | 128×1/2×3/4 | 64×1/2×3/4 |
| 7/8 | 1024×7/8 | 512×1/2×7/8 | 256×1/2×7/8 | 128×1/2×7/8 | 64×1/2×7/8 |

**Table 2.32(B): A specific example of the K table**

| Code rate | Code length (bit) | | | | |
|---|---|---|---|---|---|
| | 1024 | 512 | 256 | 128 | 64 |
| 1/4 | 256 | 64 | 32 | 16 | 8 |
| 3/8 | 384 | 96 | 48 | 24 | 12 |
| 1/2 | 512 | 128 | 64 | 32 | 16 |
| 5/8 | 640 | 160 | 80 | 40 | 20 |
| 3/4 | 768 | 192 | 96 | 48 | 24 |
| 7/8 | 896 | 224 | 112 | 56 | 28 |

**Table 3.31(A): A specific example of the K table**

| Code rate | Code length (bit) | | | | |
|---|---|---|---|---|---|
| | 1024 | 512 | 256 | 128 | 64 |
| 3/8 | 1024×3/8 | 512×1/2×3/8 | 256×1/2×3/8 | 128×1/2×3/8 | 64×1/2×3/8 |
| 1/2 | 1024×1/2 | 512×1/2×1/2 | 256×1/2×1/2 | 128×1/2×1/2 | 64×1/2×1/2 |
| 5/8 | 1024×5/8 | 512×1/2×5/8 | 256×1/2×5/8 | 128×1/2×5/8 | 64×1/2×5/8 |
| 3/4 | 1024×3/4 | 512×1/2×3/4 | 256×1/2×3/4 | 128×1/2×3/4 | 64×1/2×3/4 |
| 7/8 | 1024×7/8 | 512×1/2×7/8 | 256×1/2×7/8 | 128×1/2×7/8 | 64×1/2×7/8 |

**Table 3.32(B): A specific example of the K table**

| Code rate | Code length (bit) | | | | |
|---|---|---|---|---|---|
| | 1024 | 512 | 256 | 128 | 64 |
| 3/8 | 384 | 96 | 48 | 24 | 12 |
| 1/2 | 512 | 128 | 64 | 32 | 16 |
| 5/8 | 640 | 160 | 80 | 40 | 20 |

(continued)

| Code rate | Code length (bit) | | | | |
|---|---|---|---|---|---|
| | 1024 | 512 | 256 | 128 | 64 |
| 3/4 | 768 | 192 | 96 | 48 | 24 |
| 7/8 | 896 | 224 | 112 | 56 | 28 |

It should be understood that only an example in which the preset code rate proportion corresponding to the code rates is 1/2 is used to describe a possible case of Correspondence 3. A case in which preset code rate proportions are set as different values or a case in which preset code rate proportions are set as a same value but are not 1/2 may be implemented with reference to the foregoing content. Details are not described herein again. In addition, in Correspondence 3, a data length of a data block with a non-largest code length at each code rate can be flexibly changed by flexibly configuring a preset code rate proportion corresponding to each code rate. For example, in a scenario in which a small code block needs to carry a large amount of data, the preset code rate proportion corresponding to each code rate may be set as a large value, to increase a data length of a small data block with a non-largest code length at each code rate. In a scenario in which a small code block needs to carry a small amount of data, the preset code rate proportion corresponding to each code rate may be set as a small value, to reduce a data length of a small data block with a non-largest code length at each code rate. In a scenario in which a large amount of data needs to be carried at a code rate and a small amount of data needs to be carried at another code rate, a preset code rate proportion corresponding to the code rate may be set as a large value, and a preset code rate proportion corresponding to the another code rate may be set as a small value. It can be learned that Correspondence 3 is also compatible with various transmission scenarios, and helps improve universality in the communication field.

It should be understood that the foregoing describes only the three possible correspondences as examples. In an implementation, the S code lengths, the T code rates, and the S×T data lengths may alternatively have another correspondence. Any solution that can be used to determine, based on a code rate less than the current code rate, a data length of a code block with a non-largest code length at the current code rate falls within the protection scope of this application. This is not listed one by one in this application.

It should be noted that, in each table provided in this embodiment of this application, for example, each of Table 1.1, Table 1.2, and Table 2. 1 1(A) to Table 3.32(B) that are shown in the foregoing content, and each of Table 4(A) to Table 4(F) and Table 5(A) to Table 5(F) that are shown subsequently, only a maximum form that can be met in a respective scenario is provided. However, each table may actually include one or more rows or include one or more columns, instead of including each row and each column. This is not specifically limited in this application. In addition, the table is only a possible bearing form of the correspondence. In an actual operation, another bearing form, for example, a database, a data stack, or a queue, may be used to represent the correspondence. This is not specifically limited in this application.

Based on any one of the foregoing K tables, in an implementation, it is assumed that the first code rate is 1/2. In this case, the transmit end device may first obtain, from the K table, a preset or preconfigured data length corresponding to each of the five code lengths in a row in which the code rate 1/2 is located, and then obtain the C code blocks according to a preset or preconfigured segmentation rule and based on the total data length of the information bit and the preset or preconfigured data length corresponding to each of the five code lengths. The C code blocks may correspond to one or more code lengths. For example, all the C code blocks correspond to a same code length, or two or more code blocks in the C code blocks correspond to two different code lengths. That a code block corresponds to a code length herein means that a data length of the code block is the same as a preset or preconfigured data length corresponding to the code length. In this way, because the code length in the K table is preset or preconfigured based on the mother code length used during polar encoding, the information bit is actually segmented based on the mother code length in the segmentation manner, so that each segmented code block can directly match the mother code length of polar encoding, and rate matching is not required.

In this embodiment of this application, different segmentation rules may correspond to different segmentation results. For ease of understanding, FIG. 4 is an example diagram of presentation forms of segmented data under different segmentation rules according to this embodiment of this application. In this example, it is assumed that a data length of a code block corresponding to the code length $N_0$ is $K_0$, a data length of a code block corresponding to the code length $N_1$ is $K_1$, ..., and a data length of a code block corresponding to the code length $N_{S-1}$ is $K_{S-1}$. $CRC_0$, $CRC_1$, ..., $CRC_{S-1}$, and $CRC_{ls}$ refer to lengths of check codes, and do not represent actual check code content. For example, a length of a check code corresponding to an information bit in each code block corresponding to the largest code length $N_0$ is referred to as $CRC_0$. However, this only indicates that lengths of check codes in code blocks corresponding to the largest code length $N_0$ are the same, and does not mean that content of the check codes in the code blocks corresponding to the

largest code length $N_0$ is the same. Refer to (A) in FIG. 4 to (C) in FIG. 4.

(A) in FIG. 4 is a diagram of a presentation form of segmented data to which no check code needs to be added. As shown in (A) in FIG. 4, a segmentation rule corresponding to this example is obtaining, based on the total data length of the information bit, $C_{0a}$ code blocks corresponding to the code length $N_0$, $C_{1a}$ code blocks corresponding to the code length $N_1$, ..., and $C_{(S-1)a}$ code blocks corresponding to the code length $N_{S-1}$, where each code block includes an information bit but does not include a check code. According to the segmentation rule, a data length of each code block is a data length of the information bit included in the code block. In a possible scenario (for ease of description, referred to as a scenario 1 for short), it is assumed that the total data length of the information bit is 584 bits, and the first code rate is 1/2. In this case, it can be learned based on the K table provided in Table 2.11(B) that, data lengths of code blocks in a code length of 1024 bits, a code length of 512 bits, a code length of 256 bits, a code length of 128 bits, and a code length of 64 bits at the code rate 1/2 are respectively 512 bits, 192 bits, 96 bits, 48 bits, and 24 bits. Therefore, the C segmented code blocks may include one code block whose data length is 512 bits and that is corresponding to a code length of 1024 bits, one code block whose data length is 48 bits and that is corresponding to a code length of 128 bits, and one code block whose data length is 24 bits and that is corresponding to a code length of 64 bits.

(B) in FIG. 4 is a diagram of a presentation form of segmented data to which a check code needs to be added. As shown in (B) in FIG. 4, a segmentation rule corresponding to this example is obtaining, based on the total data length of the information bit, $C_{0b}$ code blocks corresponding to the code length $N_0$, $C_{1b}$ code blocks corresponding to the code length $N_1$, ..., and $C_{(S-1)b}$ code blocks corresponding to the code length $N_{S-1}$, where each code block includes an information bit and a check code for the included information bit, and data lengths of check codes in code blocks corresponding to a same code length are the same, for example, data lengths of check codes in the $C_{0b}$ code blocks corresponding to the code length $N_0$ are all $CRC_0$, and data lengths of check codes in the $C_{1b}$ code blocks corresponding to the code length $N_1$ are all $CRC_1$.... According to the segmentation rule, a data length of each code block is a sum of a data length of the information bit included in the code block and a data length of a check code. The scenario 1 is still used as an example. It is assumed that a preset or preconfigured data length of a check code is 24 bits. In this case, the C segmented code blocks may include: one code block whose data length is 512 bits and that is corresponding to a code length of 1024 bits, where the code block includes a 488-bit information bit and a 24-bit check code; one code block whose data length is 96 bits and that is corresponding to a code length of 256 bits, where the code block includes a 72-bit information bit and a 24-bit check code; and one code block whose data length is 48 bits and that is corresponding to a code length of 128 bits, where the code block includes a 24-bit information bit and a 24-bit check code.

(C) in FIG. 4 is a diagram of another presentation form of segmented data to which a check code needs to be added. As shown in (C) in FIG. 4, a segmentation rule corresponding to this example is obtaining, based on the total data length of the information bit, $C_{10}$ first code blocks corresponding to the code length $N_0$ and $C_{20}$ second code blocks corresponding to L of the code lengths $N_1$ to $N_{S-1}$, where each of the $C_{10}$ first code blocks includes an information bit and a first check code for the included information bit, a data length of the first check code included in each first code block is $CRC_0$, the $C_{20}$ second code blocks include remaining information bits other than information bits included in the $C_{10}$ first code blocks and a second check code for the remaining information bits, a data length of the second check code is $CRC_{ls}$, L is a positive integer greater than or equal to 0, and $C_{10}$ is a positive integer and $C_{20}$ is an integer greater than or equal to 0, or $C_{10}$ is an integer greater than or equal to 0 and $C_{20}$ is a positive integer. According to the segmentation rule, a data length of each first code block is a sum of a data length of the information bit included in the first code block and the data length of the first check code, and a data length of the $C_{20}$ second code blocks is a sum of a data length of information bits included in the $C_{20}$ second code blocks and the data length of the second check code. The scenario 1 is still used as an example. It is assumed that both a preset or preconfigured data length $CRC_0$ of the first check code and a preset or preconfigured data length $CRC_{ls}$ of the second check code are 24 bits. In this case, the C segmented code blocks may include: one first code block whose data length is 512 bits and that is corresponding to a code length of 1024 bits, where the first code block includes a 488-bit information bit and a 24-bit first check code; one second code block whose data length is 96 bits and that is corresponding to a code length of 256 bits, where the second code block includes a 96-bit information bit; and one second code block whose data length is 24 bits and that is corresponding to a code length of 64 bits, where the second code block includes a 24-bit second check code.

The foregoing three segmentation rules are compared. According to the segmentation rule used in (A) in FIG. 4, because no check code is added, all information bits need to be retransmitted when a transmission error occurs. According to the segmentation rules used in (B) in FIG. 4 and (C) in FIG. 4, because a check code is added, only a part of code blocks on which a check code error occurs need to be retransmitted when a transmission error occurs. This helps reduce a retransmission delay. In addition, according to the segmentation rule used in (B) in FIG. 4, a check code is added to each code block, and a length of a code block is not considered. However, according to the segmentation rule used in (C) in FIG. 4, a check code is added to each long code block with the largest code length $N_0$, and no check code is added to each short code block with a non-largest code length. Instead, one check code is added to all short code blocks with a non-largest code length. This segmentation rule helps reduce a total data length of segmented code blocks while adding a necessary check code, and helps reduce air interface overheads.

In addition, it should be noted that, in the foregoing examples, a large code block corresponding to a large code length is used to carry as many information bits as possible to reduce a quantity of code blocks. Certainly, if the quantity of code blocks is not considered, there may be a plurality of segmentation manners under a same segmentation rule. For example, according to the segmentation rule used in (C) in FIG. 4, the C segmented code blocks corresponding to the scenario 1 may further include: two first code blocks whose data lengths are 512 bits and that are corresponding to a code length of 1024 bits. A total data length of the two first code blocks is 1024 bits. In 512 bits of each first code block, 24 bits are used to carry a respective first check code. In the remaining 976 bits of the two first code blocks, 584 bits are used to carry information bits, and the remaining 392 bits are unwanted bits. The unwanted bits may be subsequently padded or subtracted from the data length. However, a specific first code block in which the unwanted bits are operated is not limited. When a plurality of segmentation results exist in a same segmentation rule, which segmentation form is finally selected may be determined based on an actual requirement. For example, if a quantity of unwanted bits needs to be reduced as much as possible to reduce air interface overheads, a segmentation result including one first code block corresponding to a code length of 1024 bits, one code block corresponding to a code length of 256 bits, and one code block corresponding to a code length of 64 bits may be selected. If segments need to be reduced as much as possible to reduce transmission complexity, a segmentation result including two first code blocks corresponding to a code length of 1024 bits may be selected.

Step 303: The transmit end device encodes the C code blocks to obtain codewords obtained after the C code blocks are encoded.

In step 303, after determining a segmentation result (for example, including a specific quantity of first code blocks, a specific quantity of second code blocks, a data length of an information bit included in each first code block, and a data length of an information bit included in each second code block) according to a used segmentation rule, the transmit end device may segment an entire information bit based on the segmentation result, construct the C code blocks based on each segment of information bit obtained through segmentation (where a code block may include an information bit, or may not include an information bit, but is only used to carry a CRC), add a CRC to one or more of the C code blocks according to the segmentation rule, and perform polar code encoding on the code block to which the CRC is added, to obtain a codeword of each code block.

For example, after obtaining the C code blocks, the transmit end device may further perform one or more of operations such as bit mapping, high-order modulation, or symbol interleaving. An order of operations such as encoding the C code blocks, bit mapping, high-order modulation, or symbol interleaving is not specifically limited. For example, these operations may be performed at a time, may be performed sequentially, or may be performed in parallel. In a possible implementation, after one or more of the operations are completed, the codewords of the C code blocks form a complete sequence. A codeword of each first code block and a codeword of each second code block in the sequence may be concatenated in a preset or preconfigured order, and the order may be preset or preconfigured for the receive end device, or may be notified by the transmit end device to the receive end device by using a message, so that the receive end device can subsequently perform segmentation in the same order to obtain the entire information bit. Specific implementations of these operations are not described or limited in this application.

It should be noted that for a code block, a data length of the code block refers to a quantity of bits included in the code block before the code block is encoded, and a code length refers to a quantity of bits of a codeword in the code block obtained after the code block is encoded. For example, if a data length corresponding to a code block is 384 bits, and a corresponding code length is 1024 bits, it means that the code block includes 3 84-bit data before encoding, and includes a 1024-bit codeword after encoding. In this way, because the transmit end device obtains the code block based on a preset or preconfigured code length that meets the positive integer power of 2, a code length of each encoded code block can match a code length of the positive integer power of 2 that is met by a codeword after polar encoding, so that the transmit end device can encode the code block and send a codeword obtained after the code block is encoded, without performing rate matching on the code block to which a CRC is added.

Step 304: The transmit end device sends the codewords obtained after the C code blocks are encoded to the receive end device.

For example, the transmit end device may carry the codewords of the C code blocks in a message, and send the message to the receive end device through a channel. The codewords of the C code blocks may be presented as a complete sequence in the message, and the receive end device needs to segment a codeword of each of the C code blocks from the sequence.

Step 305: The receive end device decodes, based on the total data length of the information bit and the preset first code rate, the codewords obtained after the C code blocks are encoded, to obtain information bits included in the C code blocks.

In step 305, the total data length of the information bit may be sent by the transmit end device to the receive end device by using a message, and the receive end device can obtain the total data length of the information bit by parsing the message. The message that carries the total data length of the information bit may be the message that carries the codewords obtained after the C code blocks are encoded, or may be another message, for example, an additional message that is sent, or a message that carries other information. This is not specifically limited.

For example, when the codewords of the C code blocks are presented as a complete sequence, after receiving a message that carries the sequence, the receive end device may determine a segmentation result based on the total data length of the information bit and the preset first code rate according to a segmentation rule consistent with that of the transmit end device, segment, based on a quantity of various code blocks indicated in the segmentation result and a code length of each code block (for example, a quantity of first code blocks, a code length of each first code block, a quantity of second code blocks, and/or a code length of each second code block), the sequence that is carried in the message and that includes the codewords obtained after the C code blocks are encoded, to obtain a codeword obtained after each code block is encoded, and then decode the codewords obtained after the C code blocks are encoded, to obtain the C code blocks. After obtaining the codewords obtained after the C code blocks are encoded, the receive end device may further perform one or more of operations such as symbol de-interleaving, high-order demodulation, or bit mapping. An order of operations such as decoding the codewords obtained after the C code blocks are encoded, symbol de-interleaving, high-order modulation, or bit mapping is not specifically limited. For example, these operations may be performed at a time, may be performed sequentially, or may be performed in parallel. Specific implementations of these operations are not described or limited in this application.

Further, for example, when the codewords obtained after the C code blocks are encoded are obtained by the transmit end device by encoding the C code blocks by using a polar code, the receive end device may decode the codewords obtained after the C code blocks are encoded by using a corresponding polar code, to obtain the C code blocks. In addition, the segmentation result determined by the receive end device according to the segmentation rule consistent with that of the transmit end device may further include a data length of an information bit and a data length of a check code that are included in each code block. In this way, the receive end device may further obtain, based on the segmentation result, the information bit and/or the check code from each code block. In addition, when the check code is included, the receive end device may further check the code block. For example, when the check code is a CRC check code, if the transmit end device obtains the CRC check code by using a generator polynomial, one or more code blocks corresponding to each CRC check code are definitely divisible by the generator polynomial. Therefore, the receive end device may use the same generator polynomial (where the generator polynomial is pre-agreed by the transmit end device and the receive end device, and remains unchanged in an entire transmission process of the transmit end device and the receive end device) to divide the one or more code blocks corresponding to the CRC check code. If a remainder is 0, it means that the one or more code blocks corresponding to the CRC check code have no error. The receive end device may obtain an information bit included in the one or more code blocks. Conversely, if the remainder is not 0, it means that an error occurs on one or more bits in the one or more code blocks corresponding to the CRC check code. The receive end device may require the transmit end device to retransmit code blocks that fail CRC check, and perform concatenation after the retransmission succeeds.

Further, for example, when no error occurs on the C code blocks, the receive end device may further concatenate information bits included in the C code blocks to obtain a complete information bit. The complete information bit is the information bit to be sent by the transmit end device to the receive end device. The receive end device may use the complete information bit to complete a subsequent related operation. It should be noted that concatenation is only an example, and concatenation may not be performed in an actual operation. For example, an information bit included in each code block may be separately used to complete an operation related to each code block. Alternatively, information bits included in some code blocks may be concatenated to complete operations related to the some code blocks, and the like. This is not specifically limited.

In Embodiment 1, the C code blocks match the code length of the positive integer power of 2 that is met by the codeword after polar encoding, so that the codewords obtained after the C code blocks are encoded can be directly transmitted or received after polar encoding/decoding, and a rate matching module does not need to be additionally configured. This effectively simplifies a system design for polar encoding/decoding, and reduces system power consumption for polar encoding/decoding.

The following uses the segmentation rule shown in (C) in FIG. 4 as an example to describe a further implementation of the data processing method based on Embodiment 2.

## Embodiment 2

FIG. 5A and FIG. 5B are an example of a schematic interaction flowchart of another data processing method according to an embodiment of this application. The method is applicable to a transmit end device and a receive end device. The transmit end device and the receive end device may be any two apparatuses, nodes, chips, or the like that support a communication function in this embodiment of this application. As shown in FIG. 5A and FIG. 5B, the procedure includes the following steps.

Step 501: The transmit end device obtains an information bit.

Step 502: The transmit end device determines, based on a preset or preconfigured data length of a preset first code rate at a largest code length and a preset or preconfigured data length of a first check code, a data length of an information bit included in one first code block.

In step 502, it can be learned according to the segmentation rule illustrated in (C) in FIG. 4 that, each first code block includes an information bit and a first check code for the information bit included in the first code block. In other words, a data length of each first code block is equal to a sum of a data length of the information bit included in the first code block and a data length of the first check code. Therefore, the data length of the information bit included in each first code block is equal to a difference between the data length of the first code block and the data length of the first check code included in the first code block. Based on this, it is assumed that the preset or preconfigured data length of the first check code is $CRC_0$, and the preset or preconfigured data length of the preset first code rate at the largest code length $N_0$ is specified as Ko in the K table (that is, a data length of a first code block is specified as Ko in the K table). In this case, a data length of an information bit included in the first code block is $K_0$-$CRC_0$.

Step 503: The transmit end device determines whether a ratio of a total data length of the information bit to the data length of the information bit included in one first code block is an integer, and if the ratio of the total data length of the information bit to the data length of the information bit included in one first code block is an integer, step 504 is performed, or if the ratio of the total data length of the information bit to the data length of the information bit included in one first code block is not an integer, step 505 is performed.

Step 504: The transmit end device determines that a quantity of first code blocks is the ratio and a quantity of second code blocks is 0 (that is, no second code block exists), and then performs step 507.

In step 504, that the ratio of the total data length of the information bit to the data length of the information bit included in the first code block is an integer means that all information bits may be carried by the first code blocks, and no remaining information bit exists. In this case, the transmit end device may directly use the ratio as the quantity $C_{10}$ of the first code blocks, set the quantity of the second code blocks to 0, and then perform step 507. In this case, because the quantity of the second code blocks is 0, that is, no second code block exists, all the C segmented code blocks are first code blocks, and $C_{10}$ is equal to C.

Step 505: The transmit end device uses a largest integer not greater than the ratio as an initial quantity of first code blocks, and determines a data length of remaining to-be-segmented data based on the total data length of the information bit, a data length of information bits included in the first code blocks of the initial quantity, and a preset or preconfigured data length of a second check code.

In step 505, it is assumed that the total data length of the information bit is $K_{input}$. In this case, the initial quantity $C_{0'}$ of the first code blocks may meet the following formula (5.1):

$$C_{0'}=floor(K_{input}/(K_0-CRC_0)) \quad (5.1)$$

Herein, floor() is a round-down function, and is also referred to as rounding down or rounding toward zero, that is, taking a largest integer not greater than a value in parentheses. For example, floor(1.5) is taking a largest integer not greater than 1.5, and a calculation result is 1; and floor (2) is taking a largest integer not greater than 2, and a calculation result is 2. In this way, the initial quantity of the first code blocks that is calculated by using the formula (5.1) may indicate a largest quantity of the first code blocks that carry a data length not exceeding the total data length of the information bit.

Further, the total data length of the information bit is $K_{input}$, and a data length of an information bit included in each first code block in the first code blocks of the initial quantity $C_{0'}$ is K0-$CRC_0$. Therefore, a data length $K_{ls}$ of a remaining information bit other than information bits included in the $C_{0'}$ first code blocks may meet the following formula (5.2):

$$K_{ls}=K_{input}-C_{0'}\times(K_0-CRC_0) \quad (5.2)$$

According to the segmentation rule shown in (C) in FIG. 4, it can be learned that the second check code for the entire remaining information bit is further added after the remaining information bit, that is, the remaining to-be-segmented data includes the remaining information bit and the second check code. It is assumed that the preset or preconfigured data length of the second check code is $CRC_{ls}$. In this case, the data length $D_{ls}$ of the remaining to-be-segmented data may meet the following formula (5.3):

$$D_{ls}=K_{ls}+CRC_{ls} \quad (5.3)$$

The remaining to-be-segmented data may be carried in $C_{20}$ second code blocks, or may be carried in one first code block in the future.

For ease of understanding, a specific scenario (referred to as a scenario 2 for short) is used as an example to describe the foregoing calculation process. It is assumed that the total data length of the information bit is 1000 bits, the data length of the first check code and the data length of the second check code are preset or preconfigured to be 24 bits, and the first code rate is 3/8. In this case, it can be learned by looking up the K table shown in Table 2.11(B) that, the preset or preconfigured data length of the code rate 3/8 with the largest code length of 1024 bits is 384 bits, that is, it is specified in the K table that a length of a first code block corresponding to the largest code length of 1024 bits at the code rate 3/8 is 384 bits. In this way, a data length of an information bit included in the first code block is: 384 bits-24 bits=360 bits, and the ratio of the total data length 1000 bits of the information bit to the data length 360 bits of the information bit included in the first code block is 1000/360, which is about 2.78. Because the ratio 2.78 is not an integer, it may be determined that the initial quantity of the first code blocks is a largest integer not greater than the ratio 2.78, that is, 2. Further, because the ratio 2.78 is not an integer, it means that in addition to the information bits included in the two first code blocks, there are some remaining information bits, and a data length of the some remaining information bits is: 1000 bits-2×360 bits=280 bits. Because the second check code is further concatenated after the remaining information bits, the data length of the remaining to-be-segmented data is: 280 bits+24 bits=304 bits.

Step 506: The transmit end device determines, based on the initial quantity of the first code blocks, the data length of the remaining to-be-segmented data, and a preset or preconfigured data length of the preset first code rate at each non-largest code length, a quantity of first code blocks and a quantity of second code blocks corresponding to each non-largest code length.

For example, the transmit end device may determine the quantity of the first code blocks and the quantity of the second code blocks corresponding to each non-largest code length according to a segment quantity-first rule or a bit quantity-first rule. A rule used by the transmit end device may be set in a preset or preconfigured manner, and may further be consistent with that used by the receive end device. For example, the transmit end device and the receive end device are indicated, in a preset or preconfigured manner, to use a same rule. Alternatively, the transmit end device sends, to the receive end device, an indication message indicating a used rule, so that the receive end device performs decoding or the like by using the same rule based on the indication message. The indication message indicating the used rule may be carried in a message in which codewords obtained after C code blocks are encoded are located, or may be carried in an additional message, or may be carried in a message in which other information is located. In addition, the indication message may be represented by using one or more of a word, a character, a number, or another form. For example, in a possible example, when the indication message is 0, it means that the transmit end device uses the segment quantity-first rule. When the indication message is 1, it means that the transmit end device uses the bit quantity-first rule. There are a large quantity of manners of ensuring that the transmit end device and the receive end device use a same rule. Details are not described herein again.

Further, refer to the K table shown in Table 1.1. In the segment quantity-first rule, it is considered that a data length corresponding to a largest code length is determined based on a current code rate, and a data length corresponding to a non-largest code length is determined based on an upper-order code rate. Therefore, when there is a large amount of to-be-segmented data, if the to-be-segmented data is allocated to short code blocks corresponding to the non-largest code length, converted code lengths of the short code blocks at the current code rate may already exceed the largest code length, and further, a transmission delay of the code blocks is long. Therefore, to ensure a small transmission delay, a quantity of code blocks cannot be large. In the bit quantity-first rule, a larger quantity of unwanted bits included in a code block indicates a larger air interface loss required for transmitting the code block when a code rate difference between code blocks is not large. Therefore, to ensure a low air interface loss, a total data length of the C segmented code blocks needs to be controlled as close as possible to a total data length of valid data. The valid data includes the information bit and the first check code and/or the second check code. The following describes in detail possible segmentation manners under the two rules.

Segment quantity-first rule

In the segment quantity-first rule, when the data length of the remaining to-be-segmented data is long, a large quantity of code blocks may be obtained by segmenting the remaining to-be-segmented data. This is unfavorable to reducing a data transmission delay. In this case, the transmit end device may no longer segment the remaining to-be-segmented data, but additionally use a first code block with the largest code length to carry the entire remaining to-be-segmented data. In this case, the C code blocks include the first code block but do not include the second code block, and a value of C is equal to a value of the quantity $C_{10}$ of the first code blocks, that is, the initial quantity of the first code blocks is increased by 1. Conversely, when the data length of the remaining to-be-segmented data is short, even if the remaining to-be-segmented data is segmented, only a few code blocks may be obtained, and segmentation has little impact on the data transmission delay. In this case, the transmit end device may segment the remaining to-be-segmented data with reference to a preset or preconfigured data length of the preset first code rate at S-1 non-largest code lengths, and segment the remaining to-be-segmented data into second code blocks corresponding to L non-largest code lengths.

The quantity of the second code blocks corresponding to each non-largest code length may be 1, 2, or an integer greater than 2. This is not specifically limited. In this way, segmentation is performed when there is a small amount of remaining to-be-segmented data, so that when a quantity of segments meets a transmission delay, a small code block with a small code length can be used as much as possible to carry the remaining to-be-segmented data, to effectively reduce a quantity of unwanted bits carried in the code block.

The following describes several possible segmentation manners under the segment quantity-first rule by using examples.

Segmentation manner 1-1

In Segmentation manner 1-1, a reference for determining whether to perform segmentation is a preset data length threshold. When the data length of the remaining to-be-segmented data is greater than the preset data length threshold, the transmit end device may set the quantity of the first code blocks to be a smallest integer greater than the initial quantity of the first code blocks (that is, the initial quantity of the first code blocks plus 1), and the quantity of the second code blocks is 0, that is, no second code block exists. When the data length of the remaining to-be-segmented data is not greater than the preset data length threshold, the transmit end device may set the quantity of the first code blocks to be the initial quantity of the first code blocks, successively determine initial quantities of code blocks corresponding to the S-1 non-largest code lengths in descending order of code lengths with reference to the calculation method for determining the initial quantity of the first code blocks corresponding to the largest code length in step 502, step 503, and step 505, use an initial quantity of code blocks corresponding to the non-smallest code length as a quantity of code blocks corresponding to the non-smallest code length, use a smallest integer not less than an initial quantity of code blocks corresponding to the smallest code length as a quantity of code blocks corresponding to the smallest code length, and then use a quantity of code blocks corresponding to the L non-largest code lengths and whose quantity is not 0 in the S-1 non-largest code lengths as a quantity of L types of second code blocks.

The scenario 2 is still used as an example to describe a specific calculation process of Segmentation manner 1-1. In the scenario 2, the data length of the remaining to-be-segmented data is 304 bits. It is assumed that the preset data length threshold is 246 bits. In this case, the data length 304 bits of the remaining to-be-segmented data is greater than the preset data length threshold 246 bits. Therefore, the transmit end device may directly use a first code block whose data length is 384 bits and corresponding to a largest code length 1024 bits to carry the entire remaining to-be-segmented data. In other words, in the first code block of 384 bits, 304 bits are used to carry the remaining to-be-segmented data, and the remaining 80 bits are unwanted bits.

In another scenario (referred to as a scenario 3 for short), it is assumed that the remaining to-be-segmented data is 200 bits, and the first code rate is 3/8. With reference to the K table shown in Table 2.11(B), it can be learned that, at the code rate 3/8, a preset or preconfigured data length corresponding to the 512-bit code length is 128 bits. Therefore, a quantity of code blocks corresponding to the 512-bit code length is: floor(200/128)=1. The data length $D_{ls}$ of the remaining to-be-segmented data is updated to be: 200 bits-128 bits=72 bits. At the code rate 3/8, a preset or preconfigured data length corresponding to the 256-bit code length is 64 bits. Therefore, a quantity of code blocks corresponding to the 256-bit code length is: floor(72/64)=1. The data length $D_{ls}$ of the remaining to-be-segmented data is updated to be: 72 bits-64 bits=8 bits. At the code rate 3/8, a preset or preconfigured data length corresponding to the 128-bit code length is 32 bits. Therefore, a quantity of code blocks corresponding to the 128-bit code length is: floor(8/32)=0. The data length $D_{ls}$ of the remaining to-be-segmented data is still 8 bits. At the code rate 3/8, a preset or preconfigured data length corresponding to the 64-bit code length (namely, the smallest code length) is 16 bits. Therefore, a quantity of code blocks corresponding to the 64-bit code length is: ceil(8/16)=1. Because quantities of code blocks corresponding to non-largest code lengths 512 bits, 256 bits, 128 bits, and 64 bits are respectively 1, 1, 0, and 1, there are the following three types of second code blocks in total. For a first type of second code block, a code length is 512 bits, a quantity is 1, and a data length is 128 bits. For a second type of second code block, a code length is 256 bits, a quantity is 1, and a data length is 64 bits. For a third type of second code block, a code length is 64 bits, a quantity is 1, and a data length is 16 bits. A total data length of the three second code blocks is 208 bits, where 200 bits are used to carry the remaining to-be-segmented data, and remaining 8 bits are unwanted bits and may be subsequently padded or subtracted from the data length.

Segmentation manner 1-2

In Segmentation manner 1-2, a reference for determining whether to perform segmentation may be a quantity threshold corresponding to any code length. The smallest code length is used as an example. The transmit end device may first convert the remaining to-be-segmented data into a code block corresponding to the smallest code length, to obtain an estimated quantity of code blocks corresponding to the smallest code length. If the estimated quantity is greater than a quantity threshold corresponding to the smallest code length, the transmit end device sets the quantity of the first code blocks to be a smallest integer greater than the initial quantity of the first code blocks, and the quantity of the second code blocks is 0, that is, no second code block exists. If the estimated quantity is not greater than a preset quantity threshold corresponding to the smallest code length, the transmit end device may set the quantity of the first code blocks to be the initial quantity of the first code blocks, calculate the estimated quantity of the code blocks corresponding to the smallest code length with reference to a ratio of a preset or preconfigured data length of the preset first code rate at the S-1 non-largest code lengths to a preset or preconfigured data length of the preset first code rate at the smallest code length $N_{S-1}$, to obtain quantities of code blocks corresponding to the S-1 non-largest code lengths, and then use a quantity of code blocks corresponding to the L non-largest code lengths and whose quantity is not 0 as the quantity of the L types of second code blocks.

It is assumed that the preset or preconfigured data length of the preset first code rate at the smallest code length $N_{S-1}$ specified in the K table is $K_{S-1}$ (that is, the data length of the code block corresponding to the smallest code length specified in the K table is $K_{S-1}$). In this case, an estimated quantity $C_{S-1'}$ of code blocks corresponding to the smallest code length $N_{S-1}$ may meet the following formula (5.4):

$$C_{S-1'}=\text{ceil}(K_{ls}/K_{S-1}) \quad (5.4)$$

Herein, ceil() is a round-up function, that is, taking a smallest integer not less than a value in parentheses. For example, ceil(1.5) is taking a smallest integer not less than 1.5, and a calculation result is 2; and ceil(2) is taking a smallest integer not less than 2, and a calculation result is 2. In this way, the estimated quantity $C_{S-1'}$ that is of the code blocks corresponding to the smallest code length $N_{S-1}$ and that is calculated by using the formula (5.4) may indicate a smallest quantity of smallest code blocks that carry a data length not less than a total data length of the remaining to-be-segmented data. The smallest quantity can ensure that all remaining to-be-segmented data is included, to avoid missing to-be-segmented data.

Further, it is considered that there are S-1 non-largest code lengths $N_1$ to $N_{S-1}$ in total, and as the data length of the remaining to-be-segmented data gradually increases, the remaining to-be-segmented data is sequentially allocated to the code blocks corresponding to the non-largest code lengths $N_{S-1}$ to $N_1$ in ascending order of code lengths. After the remaining to-be-segmented data is allocated to the code blocks corresponding to the non-largest code length $N_1$, the remaining to-be-segmented data is allocated to the code blocks corresponding to the non-largest code lengths $N_{S-1}$ to $N_1$ in ascending order of code lengths again. In other words, a quantity of code blocks corresponding to each non-largest code length may be greater than 1. Based on this, in a possible example, the non-largest code length $N_{S-1}$ may be used as a critical point of an allowed quantity of segments, a preset quantity threshold is preset or preconfigured to be $2^{S-1}$-1, and the preset quantity threshold $2^{S-1}$-1 is used as a reference for determining whether segmentation can be performed. Therefore, it can be ensured as much as possible that a quantity of code blocks corresponding to each non-largest code length into which the remaining to-be-segmented data is segmented is not greater than 1. Correspondingly, according to the rule, if the preset data length threshold is used as a segmentation reference by using the foregoing solution in Segmentation manner 1-1, the preset data length threshold may be correspondingly set as $K_{S-1}\times(2^{S-1}-1)$.

Based on this, when the estimated quantity $C_{S-1'}$ of code blocks corresponding to the smallest code length is greater than the quantity threshold $2^{S-1}$-1 corresponding to the smallest code length, the transmit end device may obtain $C_{0'}$+1 first code blocks. For example, in the scenario 2, because the data length of the remaining to-be-segmented data is 304 bits, and a preset or preconfigured data length of the code rate 3/8 at the smallest code length 64 bits is 16, the estimated quantity of code blocks corresponding to the smallest code length 64 bits is a smallest integer not less than a ratio of 304 to 16, and the ratio of 304 to 16 is 19. Therefore, the estimated quantity of code blocks corresponding to the smallest code length 64 bits is 19. Still refer to Table 2.11. There are five code lengths in total in the K table, that is, a value of S is 5. Therefore, when the preset quantity threshold is set as $2^{S-1}$-1, the preset quantity threshold is: 2-1=15. However, the estimated quantity 19 that is of the code blocks corresponding to the smallest code length 64 bits and that is calculated in the scenario 2 is greater than the preset quantity threshold 15. Therefore, the transmit end device may no longer segment the remaining to-be-segmented data, but set another first code block to carry the entire remaining to-be-segmented data. It is assumed that unwanted bits are placed in a last first code block. Because the initial quantity of the first code blocks is 2, the C segmented code blocks may include three first code blocks whose data lengths are 384 bits. The 1st first code block includes a 360-bit information bit and a 24-bit first check code, the 2nd first code block includes a 360-bit information bit and a 24-bit first check code, and the 3rd first code block includes a 280-bit information bit and a 24-bit first check code, and further includes 80-bit unwanted bits that may be subsequently padded or subtracted from the data length.

Conversely, when the estimated quantity $C_{S-1'}$ of code blocks corresponding to the smallest code length is not greater than the quantity threshold $2^{S-1}$-1 corresponding to the smallest code length, it may be learned based on a row of data corresponding to a same code rate in the K table shown in Table 1.1 that, for any non-largest code length $N_j$ (where j is a positive integer less than or equal to S-2) in the non-largest code lengths $N_1$ to $N_{S-1}$, a ratio of a preset or preconfigured data length corresponding to the non-largest code length $N_j$ to a preset or preconfigured data length corresponding to the smallest code length $N_{S-1}$ is equal to a ratio of the non-largest code length $N_j$ to the smallest code length $N_{S-1}$. In other words, a ratio of a quantity obtained by segmenting data of a same data length into code blocks corresponding to the non-largest code length $N_j$ to a quantity obtained by segmenting the data of the same data length into code blocks corresponding to the smallest code length $N_{S-1}$ is equal to a ratio of the smallest code length $N_{S-1}$ to the non-largest code length $N_j$. For example, when the K table is specifically represented as Table 2.11 (B), the non-largest code lengths $N_1$ to $N_{S-1}$ are respectively 512 bits, 256 bits, 128 bits, and 64 bits, and the smallest code length $N_{S-1}$ is 64 bits. Ratios of preset or preconfigured data lengths corresponding to the non-largest code lengths 512 bits, 256 bits, 128 bits, and 64 bits to preset or preconfigured data lengths corresponding to smallest code length 64 bits at a same code rate are respectively: 8:1, 4:1, 2:1, and 1:1. To be specific, eight code blocks corresponding to the smallest code length 64 bits can be converted into one code block corresponding to the non-largest code length 512 bits, four code blocks corresponding to the smallest code length 64 bits can be converted into one code block corresponding to the non-largest code length 256 bits, two code blocks corresponding to the smallest code length 64 bits can be converted into one code block corresponding to the non-largest code length 128 bits, and one code block corresponding to the smallest code length 64 bits can be converted into one code block corresponding to the non-largest code length 64 bits.

Based on this, when determining that the estimated quantity $C_{S-1'}$ of code blocks corresponding to the smallest code length $N_{S-1}$ is not greater than the quantity threshold $2^{S-1}$-1 corresponding to the smallest code length, the transmit end device may segment the remaining to-be-segmented data in either of Segmentation manner 1-21 or Segmentation manner 1-22.

Segmentation manner 1-21

In an implementation, the transmit end device may sequentially determine, in descending order of code lengths, a quantity of code blocks corresponding to each of the S-1 non-largest code lengths $N_1$ to $N_{S-1}$.

In a first step, a quantity $C_1$ of code blocks corresponding to a largest non-largest code length $N_1$ in the S-1 non-largest code lengths $N_1$ to $N_{S-1}$ may meet the following formula (5.51):

$$C1=\text{floor}(C_{S-1'}/(N_1/N_{S-1}))\ (5.51)$$

According to the formula (5.51), an estimated quantity of code blocks corresponding to the smallest code length $N_{S-1}$ is converted into the largest non-largest code length $N_1$ as much as possible. For example, when the largest non-largest code length $N_1$ and the smallest code length $N_{S-1}$ are respectively 512 bits and 64 bits shown in Table 2.11(B), the formula (5.51) may be simplified as:

$$C1=\text{floor}(C_{S-1'}/8).$$

In a second step, when $C_1$ is not 0, because a part of the estimated quantity $C_{S-1'}$ of code blocks corresponding to the smallest code length $N_{S-1}$ is converted into the code blocks corresponding to the non-largest code length $N_1$, the estimated quantity $C_{S-1'}$ of code blocks corresponding to the smallest code length $N_{S-1}$ may be updated, and an updated estimated quantity $C_{S-1'}$ meets the following formula (5.52):

$$C_{S-1'}=C_{S-1'}-C_1\times(N_1/N_{S-1})\ (5.52)$$

When the largest non-largest code length $N_1$ and the smallest code length $N_{S-1}$ are respectively 512 bits and 64 bits shown in Table 2.11(B), the formula (5.52) may be simplified as:

$$C_{S-1'}=C_{S-1'}-8C_1.$$

In a third step, a quantity $C_2$ of code blocks corresponding to a largest non-largest code length $N_2$ in remaining S-2 non-largest code lengths $N_2$ to $N_{S-1}$ may meet the following formula (5.53):

$$C_2=\text{floor}(C_{S-1'}/(N_2/N_{S-1}))\ (5.53)$$

According to the formula (5.53), an estimated remaining quantity of code blocks corresponding to the smallest code length $N_{S-1}$ is converted into the largest non-largest code length $N_2$ in the remaining S-2 non-largest code lengths $N_2$ to $N_{S-1}$ as much as possible. When the non-largest code length $N_2$ and the smallest code length $N_{S-1}$ are respectively 256 bits and 64 bits shown in Table 2.11(B), the formula (5.53) may be simplified as: $C_2$=floor($C_{S-1'}$/4).

In a fourth step, when $C_2$ is not 0, because a part of the estimated remaining quantity $C_{S-1'}$ of code blocks corresponding to the smallest code length $N_{S-1}$ is converted into the code blocks corresponding to the non-largest code length $N_2$, the estimated quantity $C_{S-1'}$ of code blocks corresponding to the smallest code length $N_{S-1}$ is further updated, and an updated estimated quantity $C_{S-1'}$ meets the following formula (5.54):

$$C_{S-1'}=C_{S-1'}-C_2\times(N_2/N_{S-1})\ (5.54)$$

When the non-largest code length $N_2$ and the smallest code length $N_{S-1}$ are respectively 256 bits and 64 bits shown in Table 2.11(B), the formula (5.54) may be simplified as: $C_{S-1'}=C_{S-1'}-4C_2$.

The foregoing process is continuously performed until a smallest non-largest code length $N_{S-2}$ is sequentially traversed, and an estimated quantity $C_{S-1'}$ of code blocks corresponding to an updated smallest code length $N_{S-1}$ meets the following formula (5.55):

$$C_{S-1'}=C_{S-1'}-C_{S-2}\times(N_{S-2}/N_{S-1})\ (5.55)$$

When the non-largest code length $N_{S-2}$ and the smallest code length $N_{S-1}$ are respectively 128 bits and 64 bits shown in Table 2.11(B), the formula (5.55) may be simplified as:

$$C_{S-1'}=C_{S-1'}-2C_{S-2}.$$

In a last step, because the non-largest code length $N_{S-1}$ is the smallest code length, a quantity $C_{S-1}$ of code blocks corresponding to a non-smallest code length $N_{S-1}$ may meet the following formula (5.56):

$$C_{S-1}=C_{S-1'}\ (5.56)$$

According to the foregoing calculation steps, the transmit end device may finally obtain a quantity of code blocks corresponding to each of the S-1 non-largest code lengths $N_1$ to $N_{S-1}$, and a quantity of code blocks corresponding to any non-largest code length may be 0 (that is, there is no code block corresponding to the non-largest code length), or may not be 0. The transmit end device may use a quantity of code blocks corresponding to L non-largest code lengths and whose quantity is not 0 as the quantity of the L types of second code blocks.

The scenario 3 is still used as an example. Because the data length of the remaining to-be-segmented data is 200 bits, the preset or preconfigured data length corresponding to the smallest code length 64 bits is 16 bits in the K table shown in Table 2.11(B). Therefore, an estimated quantity of code blocks corresponding to the smallest code length 64 bits is: ceil(200 bits/16 bits)=13. Based on the estimated quantity 13, the transmit end device may sequentially perform the following analysis in descending order of code lengths: First, a ratio of a largest non-largest code length 512 bits to the smallest code length 64 bits is 8: 1. This means that eight code blocks corresponding to the smallest code length 64 bits may be converted into one code block corresponding to the non-largest code length 512 bits, and one code block corresponding to the non-largest code length 512 bits may be converted from the estimated quantity 13 of code blocks corresponding to the smallest code length 64 bits. Therefore, a quantity of code blocks corresponding to the non-largest code length 512 bits is 1, and an estimated quantity of remaining code blocks corresponding to the smallest code length 64 bits after conversion is: 13-1×8=5. Then, a ratio of a non-largest code length 256 bits to the smallest code length 64 bits is 4:1. This means that four code blocks corresponding to the smallest code length 64 bits may be converted into one code block corresponding to the non-largest code length 256 bits, and one code block corresponding to the non-largest code length 256 bits may be converted from the estimated quantity 5 of remaining code blocks corresponding to the smallest code length 64 bits. Therefore, a quantity of code blocks corresponding to the non-largest code length 256 bits is 1, and an estimated quantity of remaining code blocks corresponding to the smallest code length 64 bits after conversion is: 5-1×4=1. Next, a ratio of a non-largest code length 128 bits to the smallest code length 64 bits is 2: 1. This means that two code blocks corresponding to the smallest code length 64 bits may be converted into one code block corresponding to the non-largest code length 128 bits, and one code block corresponding to the non-largest code length 128 bits cannot be converted from the estimated quantity 1 of remaining code blocks corresponding to the smallest code length 64 bits. Therefore, a quantity of code blocks corresponding to the non-largest code length 128 bits is 0 (that is, there is no code block corresponding to the non-largest code length 128 bits). Because conversion is not performed, an estimated quantity of remaining code blocks corresponding to the smallest code length 64 bits is still 1. Finally, a quantity of code blocks corresponding to the non-largest code length 64 bits is equal to the estimated quantity 1 of remaining code blocks corresponding to the smallest code length 64 bits. It is assumed that unwanted bits are placed in the 1st second code block. Because quantities of code blocks corresponding to the non-largest code lengths 512 bits, 256 bits, 128 bits, and 64 bits are respectively 1, 1, 0, and 1, the C code blocks include the following three types of second code blocks in total. For a first type of second code block, a code length is 512 bits, a quantity is 1, and a data length is 128 bits, where 120 bits of the 128 bits are used to store information bits, and the remaining 8 bits are unwanted bits and may be subsequently padded or subtracted from the data length. For a second type of second code block, a code length is 256 bits, a quantity is 1, and a data length is 64 bits, where 56 bits of the 64 bits are used to store information bits, and the remaining 8 bits are used to store 8 bits of information of the second check code. For a third type of second code block, a code length is 64 bits, a quantity is 1, and a data length is 16 bits. The 16 bits are used to store remaining 16 bits of information of the second check code.

Segmentation manner 1-22

Refer to the K table shown in Table 1.1. It is considered that ratios of the S-1 non-largest code lengths $N_1$ to Ns-i to the smallest code length Ns-i sequentially satisfy $2^{S-2}$, $2^{S-3}$, ..., $2^1$, and $2^0$. Therefore, when a quantity of second code blocks corresponding to each non-largest code length is not greater than 1, a conversion relationship between the quantity of code blocks corresponding to the smallest code length $N_{S-1}$ and the quantity of code blocks corresponding to the S-1 non-largest code lengths $N_1$ to $N_{S-1}$ may be represented by S-1 bits of binary data. Based on this, after obtaining the estimated quantity $C_{S-1'}$ of code blocks corresponding to the smallest code length $N_{S-1}$, the transmit end device may convert $C_{S-1'}$ into S-1 bits of binary data. The S-1 bits from a high-order bit to a low-order bit in the binary data are in a one-to-one correspondence with the S-1 non-largest code lengths $N_1$ to $N_{S-1}$ in descending order of code lengths. The transmit end device may use values of L bits whose values are not 0 in the binary data as the quantity of the L types of second code blocks. A data length of each type of the L types of second code blocks is a preset or preconfigured data length of a non-largest code length corresponding to a corresponding bit.

The scenario 3 is still used as an example to describe a specific calculation process of Segmentation manner 1-22. In the K table shown in Table 2.11(B), there are four non-largest code lengths 512 bits, 256 bits, 128 bits, and 64 bits in total. Therefore, after the estimated quantity 13 of code blocks corresponding to the smallest code length 64 bits is obtained, the decimal value 13 may be converted into 4-bit binary data 1101 (that is, $13=2^3+2^2+2^0$). Values 1, 1, 0, and 1 of the four bits in the binary data 1101 respectively correspond to the quantity of code blocks corresponding to the non-largest code length 512 bits, the quantity of code blocks corresponding to the non-largest code length 256 bits, the quantity of code blocks corresponding to the non-largest code length 128 bits, and the quantity of code blocks corresponding to the non-largest code length 64 bits. In terms of a low-order bit to a high-order bit, because bits whose values are not 0 are the first bit, the second bit, and the fourth bit, the to-be-segmented data may be segmented into three types of second code blocks. For a first type of second code block, a code length is 512 bits, and a quantity is 1. For a second type of second code block, a code length is 256 bits, and a quantity is 1. For a third type of second code block, a code length is 64 bits, and a quantity is 1.

In Segmentation manner 1-2, the remaining to-be-segmented data is first converted into the code blocks corresponding to the smallest code length, to obtain the estimated quantity of code blocks corresponding to the smallest code length, and then the estimated quantity of code blocks corresponding to the smallest code length is converted into code blocks corresponding to each non-largest code length based on a ratio relationship between preset or preconfigured data lengths corresponding to non-largest code lengths. Because data lengths of the code blocks corresponding to the smallest code length are the smallest, conversion into the code blocks corresponding to the smallest code length can ensure as much as possible that a smallest quantity of unwanted bits are generated during segmentation. This effectively reduces complexity of subsequent operations such as padding or subtraction from the data length, and helps reduce air interface overheads.

Segmentation manner 1-3

In Segmentation manner 1-1, real-time calculation needs to be performed based on the data length of the remaining to-be-segmented data. In Segmentation manner 1-2, real-time calculation needs to be performed based on the estimated quantity $C_{S-1'}$ of code blocks corresponding to the smallest code length $N_{S-1}$. In Segmentation manner 1-3, a quantity of each type of the L types of second code blocks can be directly obtained based on the data length of the remaining to-be-segmented data and/or the estimated quantity $C_{S-1'}$ of code blocks corresponding to the smallest code length $N_{S-1}$ by querying a preset correspondence among a code rate, a code length, the data length of the remaining to-be-segmented data and/or the estimated quantity of code blocks corresponding to the smallest code length, and a quantity of code blocks corresponding to each code length. The preset correspondence among a code rate, a code length, the data length of the remaining to-be-segmented data and/or the estimated quantity of code blocks corresponding to the smallest code length, and a quantity of code blocks corresponding to each code length may be represented in any form of a table, a database, a stack, or the like. This is not specifically limited.

For example, when the preset correspondence among a code rate, a code length, the data length of the remaining to-be-segmented data and/or the estimated quantity of code blocks corresponding to the smallest code length, and a quantity of code blocks corresponding to each code length is represented in a table, Table 4 is a schematic table of a preset correspondence among a code rate, a code length, the data length of the remaining to-be-segmented data and/or the estimated quantity of code blocks corresponding to the smallest code length, and a quantity of code blocks corresponding to each code length according to this embodiment of this application. Table 4(A) is a schematic table of a quantity of code blocks corresponding to each code length at the code rate 1/4. Table 4(B) is a schematic table of a quantity of code blocks corresponding to each code length at the code rate 3/8. Table 4(C) is a schematic table of a quantity of code blocks corresponding to each code length at the code rate 1/2. Table 4(D) is a schematic table of a quantity of code blocks corresponding to each code length at the code rate 5/8. Table 4(E) is a schematic table of a quantity of code blocks corresponding to each code length at the code rate 3/4. Table 4(F) is a schematic table of a quantity of code blocks corresponding to each code length at the code rate 7/8.

In Table 4(A) to Table 4(F), $K_{ls}$ is the data length of the remaining information bit other than the information bit included in the first code block with the largest code length, and a unit is bit. $D_{ls}$ is the data length of the remaining to-be-segmented data, and a unit is bit. $D_{ls}$ is a sum of the data length $K_{ls}$ of the remaining information bit and the data length $CRC_{ls}$ of the second check code. The data length $CRC_{ls}$ of the second check code is preset or preconfigured to be 24 bits. N is the code length, and a unit is bit. Cs-r is the estimated quantity of code blocks corresponding to the smallest code length 64 bits. In addition to the information, the correspondence table may further include one or more of the following content:

$C_{ls}$ refers to a quantity of code blocks that carry the remaining to-be-segmented data. When the estimated quantity $C_{S-1'}$ of code blocks corresponding to the smallest code length 64 bits is greater than a preset quantity threshold (in Table 4(A) to Table 4(F), because there are five code lengths in total, the preset quantity threshold is set as $2^{5-1}$-1=15), because all the remaining to-be-segmented data is carried in a first code block corresponding to the largest code length, a value of $C_{ls}$ is 1. For example, in Table 4(A), starting from $C_{S-1'}$ being greater than 15 (that is, a number 13 to a number 29), values of $C_{ls}$ are all 1. When the estimated quantity $C_{S-1'}$ is not greater than the preset quantity threshold, the remaining to-be-segmented data is carried in the second code blocks corresponding to the $C_{20}$ non-largest code lengths, and a value of $C_{ls}$ changes with the estimated quantity $C_{S-1'}$. For example, in Table 4(A), when $C_{S-1'}$ is 6 (that is, a number 3), a value of $C_{ls}$ is 2, but when $C_{S-1'}$ is 7 (that is, a number 4), a value of $C_{ls}$ is 3.

$K_{Diff}$ refers to a bit difference between a total data length of the code blocks that carry the remaining to-be-segmented data and the data length of the remaining to-be-segmented data in the segmentation manners given in Table 4(A) to Table 4(F), and a unit is bit. These bit differences are used to indicate a quantity of existing unwanted bits. When the estimated quantity $C_{S-1'}$ of code blocks corresponding to the smallest code length 64 bits is greater than the preset quantity threshold, because all the remaining to-be-segmented data is carried in the first code block corresponding to the largest code length, and a data length of the first code block corresponding to the largest code length is long, the quantity $K_{Diff}$ of unwanted bits is generally large. For example, in Table 4(A), starting from $C_{S-1'}$ being greater than 15 (that is, the number 13 to the number 29) values of $K_{Diff}$ mostly reach hundreds of bits. When the estimated quantity $C_{S-1'}$ of code blocks corresponding to the smallest code length 64 bits is not greater than the preset quantity threshold, the remaining to-be-segmented data is carried in second code blocks corresponding to one or more non-largest code lengths. However, a data length of the second code block corresponding to the non-largest code length is short. Therefore, the quantity $K_{Diff}$ of unwanted bits is generally small. For example, when $C_{S-1'}$ is not greater than 15, values of $K_{Diff}$ in Table 4(A) are all 0 (that is, no unwanted bit exists), values of Koiff in Table 4(B) cycle in 0 bits and 8 bits, values of Koiff in Table 4(C) cycle in 0 bits, 8 bits, and 16 bits, values of $K_{Diff}$ in Table 4(D) cycle in 0 bits, 8 bits, 16 bits, and 24 bits, values of $K_{Diff}$ in Table 4 (E) cycle in 0 bits, 8 bits, 16 bits, 24 bits, and 32 bits, and values of $K_{Diff}$ in Table 4(F) cycle in 0 bits, 8 bits, 16 bits, 24 bits, 32 bits, and 40 bits. It can be learned that, for any code rate shown in Table 4(A) to Table 4(F), a largest $K_{Diff}$ does not exceed 40 bits, which is very small compared with hundreds of bits carried by using the first code block.

It should be noted that the correspondence tables shown in Table 4(A) to Table 4(F) may further include some other information, for example, a total data length of an information bit, or a quantity of first code blocks. This is not specifically limited.

**Table 4(A): A schematic table of a quantity of code blocks corresponding to each code length at the code rate 1/4**

| R=1/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 1 | 0 | 0 | 0 | 1 | 4 |
| 2 | 16 | 40 | 0 | 0 | 1 | 0 | 1 | 0 | 2 | 5 |
| 3 | 24 | 48 | 0 | 0 | 1 | 1 | 0 | 0 | 2 | 6 |
| 4 | 32 | 56 | 0 | 0 | 1 | 1 | 1 | 0 | 3 | 7 |
| 5 | 40 | 64 | 0 | 1 | 0 | 0 | 0 | 0 | 1 | 8 |
| 6 | 48 | 72 | 0 | 1 | 0 | 0 | 1 | 0 | 2 | 9 |
| 7 | 56 | 80 | 0 | 1 | 0 | 1 | 0 | 0 | 2 | 10 |
| 8 | 64 | 88 | 0 | 1 | 0 | 1 | 1 | 0 | 3 | 11 |
| 9 | 72 | 96 | 0 | 1 | 1 | 0 | 0 | 0 | 2 | 12 |
| 10 | 80 | 104 | 0 | 1 | 1 | 0 | 1 | 0 | 3 | 13 |
| 11 | 88 | 112 | 0 | 1 | 1 | 1 | 0 | 0 | 3 | 14 |
| 12 | 96 | 120 | 0 | 1 | 1 | 1 | 1 | 0 | 4 | 15 |
| 13 | 104 | 128 | 1 | 0 | 0 | 0 | 0 | 128 | 1 | 16 |
| 14 | 112 | 136 | 1 | 0 | 0 | 0 | 0 | 120 | 1 | 17 |
| 15 | 120 | 144 | 1 | 0 | 0 | 0 | 0 | 112 | 1 | 18 |
| 16 | 128 | 152 | 1 | 0 | 0 | 0 | 0 | 104 | 1 | 19 |
| 17 | 136 | 160 | 1 | 0 | 0 | 0 | 0 | 96 | 1 | 20 |
| 18 | 144 | 168 | 1 | 0 | 0 | 0 | 0 | 88 | 1 | 21 |
| 19 | 152 | 176 | 1 | 0 | 0 | 0 | 0 | 80 | 1 | 22 |
| 20 | 160 | 184 | 1 | 0 | 0 | 0 | 0 | 72 | 1 | 23 |
| 21 | 168 | 192 | 1 | 0 | 0 | 0 | 0 | 64 | 1 | 24 |
| 22 | 176 | 200 | 1 | 0 | 0 | 0 | 0 | 56 | 1 | 25 |
| 23 | 184 | 208 | 1 | 0 | 0 | 0 | 0 | 48 | 1 | 26 |
| 24 | 192 | 216 | 1 | 0 | 0 | 0 | 0 | 40 | 1 | 27 |
| 25 | 200 | 224 | 1 | 0 | 0 | 0 | 0 | 32 | 1 | 28 |
| 26 | 208 | 232 | 1 | 0 | 0 | 0 | 0 | 24 | 1 | 29 |
| 27 | 216 | 240 | 1 | 0 | 0 | 0 | 0 | 16 | 1 | 30 |
| 28 | 224 | 248 | 1 | 0 | 0 | 0 | 0 | 8 | 1 | 31 |
| 29 | 232 | 256 | 1 | 0 | 0 | 0 | 0 | 0 | 1 | 0 |

**Table 4(B): A schematic table of a quantity of code blocks corresponding to each code length at the code rate 3/8**

| R=3/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 0 | 1 | 0 | 0 | 1 | 2 |
| 2 | 16 | 40 | 0 | 0 | 0 | 1 | 1 | 8 | 2 | 3 |
| 3 | 24 | 48 | 0 | 0 | 0 | 1 | 1 | 0 | 2 | 3 |
| 4 | 32 | 56 | 0 | 0 | 1 | 0 | 0 | 8 | 1 | 4 |
| 5 | 40 | 64 | 0 | 0 | 1 | 0 | 0 | 0 | 1 | 4 |
| 6 | 48 | 72 | 0 | 0 | 1 | 0 | 1 | 8 | 2 | 5 |
| 7 | 56 | 80 | 0 | 0 | 1 | 0 | 1 | 0 | 2 | 5 |
| 8 | 64 | 88 | 0 | 0 | 1 | 1 | 0 | 8 | 2 | 6 |
| 9 | 72 | 96 | 0 | 0 | 1 | 1 | 0 | 0 | 2 | 6 |
| 10 | 80 | 104 | 0 | 0 | 1 | 1 | 1 | 8 | 3 | 7 |
| 11 | 88 | 112 | 0 | 0 | 1 | 1 | 1 | 0 | 3 | 7 |
| 12 | 96 | 120 | 0 | 1 | 0 | 0 | 0 | 8 | 1 | 8 |
| 13 | 104 | 128 | 0 | 1 | 0 | 0 | 0 | 0 | 1 | 8 |
| 14 | 112 | 136 | 0 | 1 | 0 | 0 | 1 | 8 | 2 | 9 |
| 15 | 120 | 144 | 0 | 1 | 0 | 0 | 1 | 0 | 2 | 9 |
| 16 | 128 | 152 | 0 | 1 | 0 | 1 | 0 | 8 | 2 | 10 |
| 17 | 136 | 160 | 0 | 1 | 0 | 1 | 0 | 0 | 2 | 10 |
| 18 | 144 | 168 | 0 | 1 | 0 | 1 | 1 | 8 | 3 | 11 |
| 19 | 152 | 176 | 0 | 1 | 0 | 1 | 1 | 0 | 3 | 11 |
| 20 | 160 | 184 | 0 | 1 | 1 | 0 | 0 | 8 | 2 | 12 |
| 21 | 168 | 192 | 0 | 1 | 1 | 0 | 0 | 0 | 2 | 12 |
| 22 | 176 | 200 | 0 | 1 | 1 | 0 | 1 | 8 | 3 | 13 |
| 23 | 184 | 208 | 0 | 1 | 1 | 0 | 1 | 0 | 3 | 13 |
| 24 | 192 | 216 | 0 | 1 | 1 | 1 | 0 | 8 | 3 | 14 |
| 25 | 200 | 224 | 0 | 1 | 1 | 1 | 0 | 0 | 3 | 14 |
| 26 | 208 | 232 | 0 | 1 | 1 | 1 | 1 | 8 | 4 | 15 |
| 27 | 216 | 240 | 0 | 1 | 1 | 1 | 1 | 0 | 4 | 15 |
| 28 | 224 | 248 | 1 | 0 | 0 | 0 | 0 | 136 | 1 | 16 |
| 29 | 232 | 256 | 1 | 0 | 0 | 0 | 0 | 128 | 1 | 16 |
| 30 | 240 | 264 | 1 | 0 | 0 | 0 | 0 | 120 | 1 | 17 |
| 31 | 248 | 272 | 1 | 0 | 0 | 0 | 0 | 112 | 1 | 17 |
| 32 | 256 | 280 | 1 | 0 | 0 | 0 | 0 | 104 | 1 | 18 |
| 33 | 264 | 288 | 1 | 0 | 0 | 0 | 0 | 96 | 1 | 18 |
| 34 | 272 | 296 | 1 | 0 | 0 | 0 | 0 | 88 | 1 | 19 |
| 35 | 280 | 304 | 1 | 0 | 0 | 0 | 0 | 80 | 1 | 19 |

(continued)

| R=3/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 36 | 288 | 312 | 1 | 0 | 0 | 0 | 0 | 72 | 1 | 20 |
| 37 | 296 | 320 | 1 | 0 | 0 | 0 | 0 | 64 | 1 | 20 |
| 38 | 304 | 328 | 1 | 0 | 0 | 0 | 0 | 56 | 1 | 21 |
| 39 | 312 | 336 | 1 | 0 | 0 | 0 | 0 | 48 | 1 | 21 |
| 40 | 320 | 344 | 1 | 0 | 0 | 0 | 0 | 40 | 1 | 22 |
| 41 | 328 | 352 | 1 | 0 | 0 | 0 | 0 | 32 | 1 | 22 |
| 42 | 336 | 360 | 1 | 0 | 0 | 0 | 0 | 24 | 1 | 23 |
| 43 | 344 | 368 | 1 | 0 | 0 | 0 | 0 | 16 | 1 | 23 |
| 44 | 352 | 376 | 1 | 0 | 0 | 0 | 0 | 8 | 1 | 24 |
| 45 | 360 | 384 | 1 | 0 | 0 | 0 | 0 | 0 | 1 | 0 |

**Table 4(C): A schematic table of a quantity of code blocks corresponding to each code length at the code rate 1/2**

| R=1/2 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 0 | 1 | 0 | 16 | 1 | 2 |
| 2 | 16 | 40 | 0 | 0 | 0 | 1 | 0 | 8 | 1 | 2 |
| 3 | 24 | 48 | 0 | 0 | 0 | 1 | 0 | 0 | 1 | 2 |
| 4 | 32 | 56 | 0 | 0 | 0 | 1 | 1 | 16 | 2 | 3 |
| 5 | 40 | 64 | 0 | 0 | 0 | 1 | 1 | 8 | 2 | 3 |
| 6 | 48 | 72 | 0 | 0 | 0 | 1 | 1 | 0 | 2 | 3 |
| 7 | 56 | 80 | 0 | 0 | 1 | 0 | 0 | 16 | 1 | 4 |
| 8 | 64 | 88 | 0 | 0 | 1 | 0 | 0 | 8 | 1 | 4 |
| 9 | 72 | 96 | 0 | 0 | 1 | 0 | 0 | 0 | 1 | 4 |
| 10 | 80 | 104 | 0 | 0 | 1 | 0 | 1 | 16 | 2 | 5 |
| 11 | 88 | 112 | 0 | 0 | 1 | 0 | 1 | 8 | 2 | 5 |
| 12 | 96 | 120 | 0 | 0 | 1 | 0 | 1 | 0 | 2 | 5 |
| 13 | 104 | 128 | 0 | 0 | 1 | 1 | 0 | 16 | 2 | 6 |
| 14 | 112 | 136 | 0 | 0 | 1 | 1 | 0 | 8 | 2 | 6 |
| 15 | 120 | 144 | 0 | 0 | 1 | 1 | 0 | 0 | 2 | 6 |
| 16 | 128 | 152 | 0 | 0 | 1 | 1 | 1 | 16 | 3 | 7 |
| 17 | 136 | 160 | 0 | 0 | 1 | 1 | 1 | 8 | 3 | 7 |
| 18 | 144 | 168 | 0 | 0 | 1 | 1 | 1 | 0 | 3 | 7 |
| 19 | 152 | 176 | 0 | 1 | 0 | 0 | 0 | 16 | 1 | 8 |
| 20 | 160 | 184 | 0 | 1 | 0 | 0 | 0 | 8 | 1 | 8 |

(continued)

| R=1/2 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 21 | 168 | 192 | 0 | 1 | 0 | 0 | 0 | 0 | 1 | 8 |
| 22 | 176 | 200 | 0 | 1 | 0 | 0 | 1 | 16 | 2 | 9 |
| 23 | 184 | 208 | 0 | 1 | 0 | 0 | 1 | 8 | 2 | 9 |
| 24 | 192 | 216 | 0 | 1 | 0 | 0 | 1 | 0 | 2 | 9 |
| 25 | 200 | 224 | 0 | 1 | 0 | 1 | 0 | 16 | 2 | 10 |
| 26 | 208 | 232 | 0 | 1 | 0 | 1 | 0 | 8 | 2 | 10 |
| 27 | 216 | 240 | 0 | 1 | 0 | 1 | 0 | 0 | 2 | 10 |
| 28 | 224 | 248 | 0 | 1 | 0 | 1 | 1 | 16 | 3 | 11 |
| 29 | 232 | 256 | 0 | 1 | 0 | 1 | 1 | 8 | 3 | 11 |
| 30 | 240 | 264 | 0 | 1 | 0 | 1 | 1 | 0 | 3 | 11 |
| 31 | 248 | 272 | 0 | 1 | 1 | 0 | 0 | 16 | 2 | 12 |
| 32 | 256 | 280 | 0 | 1 | 1 | 0 | 0 | 8 | 2 | 12 |
| 33 | 264 | 288 | 0 | 1 | 1 | 0 | 0 | 0 | 2 | 12 |
| 34 | 272 | 296 | 0 | 1 | 1 | 0 | 1 | 16 | 3 | 13 |
| 35 | 280 | 304 | 0 | 1 | 1 | 0 | 1 | 8 | 3 | 13 |
| 36 | 288 | 312 | 0 | 1 | 1 | 0 | 1 | 0 | 3 | 13 |
| 37 | 296 | 320 | 0 | 1 | 1 | 1 | 0 | 16 | 3 | 14 |
| 38 | 304 | 328 | 0 | 1 | 1 | 1 | 0 | 8 | 3 | 14 |
| 39 | 312 | 336 | 0 | 1 | 1 | 1 | 0 | 0 | 3 | 14 |
| 40 | 320 | 344 | 0 | 1 | 1 | 1 | 1 | 16 | 4 | 15 |
| 41 | 328 | 352 | 0 | 1 | 1 | 1 | 1 | 8 | 4 | 15 |
| 42 | 336 | 360 | 0 | 1 | 1 | 1 | 1 | 0 | 4 | 15 |
| 43 | 344 | 368 | 1 | 0 | 0 | 0 | 0 | 144 | 1 | 16 |
| 44 | 352 | 376 | 1 | 0 | 0 | 0 | 0 | 136 | 1 | 16 |
| 45 | 360 | 384 | 1 | 0 | 0 | 0 | 0 | 128 | 1 | 16 |
| 46 | 368 | 392 | 1 | 0 | 0 | 0 | 0 | 120 | 1 | 17 |
| 47 | 376 | 400 | 1 | 0 | 0 | 0 | 0 | 112 | 1 | 17 |
| 48 | 384 | 408 | 1 | 0 | 0 | 0 | 0 | 104 | 1 | 17 |
| 49 | 392 | 416 | 1 | 0 | 0 | 0 | 0 | 96 | 1 | 18 |
| 50 | 400 | 424 | 1 | 0 | 0 | 0 | 0 | 88 | 1 | 18 |
| 51 | 408 | 432 | 1 | 0 | 0 | 0 | 0 | 80 | 1 | 18 |
| 52 | 416 | 440 | 1 | 0 | 0 | 0 | 0 | 72 | 1 | 19 |
| 53 | 424 | 448 | 1 | 0 | 0 | 0 | 0 | 64 | 1 | 19 |
| 54 | 432 | 456 | 1 | 0 | 0 | 0 | 0 | 56 | 1 | 19 |
| 55 | 440 | 464 | 1 | 0 | 0 | 0 | 0 | 48 | 1 | 20 |
| 56 | 448 | 472 | 1 | 0 | 0 | 0 | 0 | 40 | 1 | 20 |

(continued)

| R=1/2 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 57 | 456 | 480 | 1 | 0 | 0 | 0 | 0 | 32 | 1 | 20 |
| 58 | 464 | 488 | 1 | 0 | 0 | 0 | 0 | 24 | 1 | 21 |
| 59 | 472 | 496 | 1 | 0 | 0 | 0 | 0 | 16 | 1 | 21 |
| 60 | 480 | 504 | 1 | 0 | 0 | 0 | 0 | 8 | 1 | 21 |
| 61 | 488 | 512 | 1 | 0 | 0 | 0 | 0 | 0 | 1 | 0 |

**Table 4(D): A schematic table of a quantity of code blocks corresponding to each code length at the code rate 5/8**

| R=5/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 0 | 0 | 1 | 0 | 1 | 1 |
| 2 | 16 | 40 | 0 | 0 | 0 | 1 | 0 | 24 | 1 | 2 |
| 3 | 24 | 48 | 0 | 0 | 0 | 1 | 0 | 16 | 1 | 2 |
| 4 | 32 | 56 | 0 | 0 | 0 | 1 | 0 | 8 | 1 | 2 |
| 5 | 40 | 64 | 0 | 0 | 0 | 1 | 0 | 0 | 1 | 2 |
| 6 | 48 | 72 | 0 | 0 | 0 | 1 | 1 | 24 | 2 | 3 |
| 7 | 56 | 80 | 0 | 0 | 0 | 1 | 1 | 16 | 2 | 3 |
| 8 | 64 | 88 | 0 | 0 | 0 | 1 | 1 | 8 | 2 | 3 |
| 9 | 72 | 96 | 0 | 0 | 0 | 1 | 1 | 0 | 2 | 3 |
| 10 | 80 | 104 | 0 | 0 | 1 | 0 | 0 | 24 | 1 | 4 |
| 11 | 88 | 112 | 0 | 0 | 1 | 0 | 0 | 16 | 1 | 4 |
| 12 | 96 | 120 | 0 | 0 | 1 | 0 | 0 | 8 | 1 | 4 |
| 13 | 104 | 128 | 0 | 0 | 1 | 0 | 0 | 0 | 1 | 4 |
| 14 | 112 | 136 | 0 | 0 | 1 | 0 | 1 | 24 | 2 | 5 |
| 15 | 120 | 144 | 0 | 0 | 1 | 0 | 1 | 16 | 2 | 5 |
| 16 | 128 | 152 | 0 | 0 | 1 | 0 | 1 | 8 | 2 | 5 |
| 17 | 136 | 160 | 0 | 0 | 1 | 0 | 1 | 0 | 2 | 5 |
| 18 | 144 | 168 | 0 | 0 | 1 | 1 | 0 | 24 | 2 | 6 |
| 19 | 152 | 176 | 0 | 0 | 1 | 1 | 0 | 16 | 2 | 6 |
| 20 | 160 | 184 | 0 | 0 | 1 | 1 | 0 | 8 | 2 | 6 |
| 21 | 168 | 192 | 0 | 0 | 1 | 1 | 0 | 0 | 2 | 6 |
| 22 | 176 | 200 | 0 | 0 | 1 | 1 | 1 | 24 | 3 | 7 |
| 23 | 184 | 208 | 0 | 0 | 1 | 1 | 1 | 16 | 3 | 7 |
| 24 | 192 | 216 | 0 | 0 | 1 | 1 | 1 | 8 | 3 | 7 |
| 25 | 200 | 224 | 0 | 0 | 1 | 1 | 1 | 0 | 3 | 7 |

(continued)

| R=5/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 26 | 208 | 232 | 0 | 1 | 0 | 0 | 0 | 24 | 1 | 8 |
| 27 | 216 | 240 | 0 | 1 | 0 | 0 | 0 | 16 | 1 | 8 |
| 28 | 224 | 248 | 0 | 1 | 0 | 0 | 0 | 8 | 1 | 8 |
| 29 | 232 | 256 | 0 | 1 | 0 | 0 | 0 | 0 | 1 | 8 |
| 30 | 240 | 264 | 0 | 1 | 0 | 0 | 1 | 24 | 2 | 9 |
| 31 | 248 | 272 | 0 | 1 | 0 | 0 | 1 | 16 | 2 | 9 |
| 32 | 256 | 280 | 0 | 1 | 0 | 0 | 1 | 8 | 2 | 9 |
| 33 | 264 | 288 | 0 | 1 | 0 | 0 | 1 | 0 | 2 | 9 |
| 34 | 272 | 296 | 0 | 1 | 0 | 1 | 0 | 24 | 2 | 10 |
| 35 | 280 | 304 | 0 | 1 | 0 | 1 | 0 | 16 | 2 | 10 |
| 36 | 288 | 312 | 0 | 1 | 0 | 1 | 0 | 8 | 2 | 10 |
| 37 | 296 | 320 | 0 | 1 | 0 | 1 | 0 | 0 | 2 | 10 |
| 38 | 304 | 328 | 0 | 1 | 0 | 1 | 1 | 24 | 3 | 11 |
| 39 | 312 | 336 | 0 | 1 | 0 | 1 | 1 | 16 | 3 | 11 |
| 40 | 320 | 344 | 0 | 1 | 0 | 1 | 1 | 8 | 3 | 11 |
| 41 | 328 | 352 | 0 | 1 | 0 | 1 | 1 | 0 | 3 | 11 |
| 42 | 336 | 360 | 0 | 1 | 1 | 0 | 0 | 24 | 2 | 12 |
| 43 | 344 | 368 | 0 | 1 | 1 | 0 | 0 | 16 | 2 | 12 |
| 44 | 352 | 376 | 0 | 1 | 1 | 0 | 0 | 8 | 2 | 12 |
| 45 | 360 | 384 | 0 | 1 | 1 | 0 | 0 | 0 | 2 | 12 |
| 46 | 368 | 392 | 0 | 1 | 1 | 0 | 1 | 24 | 3 | 13 |
| 47 | 376 | 400 | 0 | 1 | 1 | 0 | 1 | 16 | 3 | 13 |
| 48 | 384 | 408 | 0 | 1 | 1 | 0 | 1 | 8 | 3 | 13 |
| 49 | 392 | 416 | 0 | 1 | 1 | 0 | 1 | 0 | 3 | 13 |
| 50 | 400 | 424 | 0 | 1 | 1 | 1 | 0 | 24 | 3 | 14 |
| 51 | 408 | 432 | 0 | 1 | 1 | 1 | 0 | 16 | 3 | 14 |
| 52 | 416 | 440 | 0 | 1 | 1 | 1 | 0 | 8 | 3 | 14 |
| 53 | 424 | 448 | 0 | 1 | 1 | 1 | 0 | 0 | 3 | 14 |
| 54 | 432 | 456 | 0 | 1 | 1 | 1 | 1 | 24 | 4 | 15 |
| 55 | 440 | 464 | 0 | 1 | 1 | 1 | 1 | 16 | 4 | 15 |
| 56 | 448 | 472 | 0 | 1 | 1 | 1 | 1 | 8 | 4 | 15 |
| 57 | 456 | 480 | 0 | 1 | 1 | 1 | 1 | 0 | 4 | 15 |
| 58 | 464 | 488 | 1 | 0 | 0 | 0 | 0 | 152 | 1 | 16 |
| 59 | 472 | 496 | 1 | 0 | 0 | 0 | 0 | 144 | 1 | 16 |
| 60 | 480 | 504 | 1 | 0 | 0 | 0 | 0 | 136 | 1 | 16 |
| 61 | 488 | 512 | 1 | 0 | 0 | 0 | 0 | 128 | 1 | 16 |

(continued)

| R=5/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 62 | 496 | 520 | 1 | 0 | 0 | 0 | 0 | 120 | 1 | 17 |
| 63 | 504 | 528 | 1 | 0 | 0 | 0 | 0 | 112 | 1 | 17 |
| 64 | 512 | 536 | 1 | 0 | 0 | 0 | 0 | 104 | 1 | 17 |
| 65 | 520 | 544 | 1 | 0 | 0 | 0 | 0 | 96 | 1 | 17 |
| 66 | 528 | 552 | 1 | 0 | 0 | 0 | 0 | 88 | 1 | 18 |
| 67 | 536 | 560 | 1 | 0 | 0 | 0 | 0 | 80 | 1 | 18 |
| 68 | 544 | 568 | 1 | 0 | 0 | 0 | 0 | 72 | 1 | 18 |
| 69 | 552 | 576 | 1 | 0 | 0 | 0 | 0 | 64 | 1 | 18 |
| 70 | 560 | 584 | 1 | 0 | 0 | 0 | 0 | 56 | 1 | 19 |
| 71 | 568 | 592 | 1 | 0 | 0 | 0 | 0 | 48 | 1 | 19 |
| 72 | 576 | 600 | 1 | 0 | 0 | 0 | 0 | 40 | 1 | 19 |
| 73 | 584 | 608 | 1 | 0 | 0 | 0 | 0 | 32 | 1 | 19 |
| 74 | 592 | 616 | 1 | 0 | 0 | 0 | 0 | 24 | 1 | 20 |
| 75 | 600 | 624 | 1 | 0 | 0 | 0 | 0 | 16 | 1 | 20 |
| 76 | 608 | 632 | 1 | 0 | 0 | 0 | 0 | 8 | 1 | 20 |
| 77 | 616 | 640 | 1 | 0 | 0 | 0 | 0 | 0 | 1 | 0 |

**Table 4(E): A schematic table of a quantity of code blocks corresponding to each code length at the code rate 3/4**

| R=3/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 0 | 0 | 1 | 8 | 1 | 1 |
| 2 | 16 | 40 | 0 | 0 | 0 | 0 | 1 | 0 | 1 | 1 |
| 3 | 24 | 48 | 0 | 0 | 0 | 1 | 0 | 32 | 1 | 2 |
| 4 | 32 | 56 | 0 | 0 | 0 | 1 | 0 | 24 | 1 | 2 |
| 5 | 40 | 64 | 0 | 0 | 0 | 1 | 0 | 16 | 1 | 2 |
| 6 | 48 | 72 | 0 | 0 | 0 | 1 | 0 | 8 | 1 | 2 |
| 7 | 56 | 80 | 0 | 0 | 0 | 1 | 0 | 0 | 1 | 2 |
| 8 | 64 | 88 | 0 | 0 | 0 | 1 | 1 | 32 | 2 | 3 |
| 9 | 72 | 96 | 0 | 0 | 0 | 1 | 1 | 24 | 2 | 3 |
| 10 | 80 | 104 | 0 | 0 | 0 | 1 | 1 | 16 | 2 | 3 |
| 11 | 88 | 112 | 0 | 0 | 0 | 1 | 1 | 8 | 2 | 3 |
| 12 | 96 | 120 | 0 | 0 | 0 | 1 | 1 | 0 | 2 | 3 |
| 13 | 104 | 128 | 0 | 0 | 1 | 0 | 0 | 32 | 1 | 4 |
| 14 | 112 | 136 | 0 | 0 | 1 | 0 | 0 | 24 | 1 | 4 |

(continued)

| R=3/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 15 | 120 | 144 | 0 | 0 | 1 | 0 | 0 | 16 | 1 | 4 |
| 16 | 128 | 152 | 0 | 0 | 1 | 0 | 0 | 8 | 1 | 4 |
| 17 | 136 | 160 | 0 | 0 | 1 | 0 | 0 | 0 | 1 | 4 |
| 18 | 144 | 168 | 0 | 0 | 1 | 0 | 1 | 32 | 2 | 5 |
| 19 | 152 | 176 | 0 | 0 | 1 | 0 | 1 | 24 | 2 | 5 |
| 20 | 160 | 184 | 0 | 0 | 1 | 0 | 1 | 16 | 2 | 5 |
| 21 | 168 | 192 | 0 | 0 | 1 | 0 | 1 | 8 | 2 | 5 |
| 22 | 176 | 200 | 0 | 0 | 1 | 0 | 1 | 0 | 2 | 5 |
| 23 | 184 | 208 | 0 | 0 | 1 | 1 | 0 | 32 | 2 | 6 |
| 24 | 192 | 216 | 0 | 0 | 1 | 1 | 0 | 24 | 2 | 6 |
| 25 | 200 | 224 | 0 | 0 | 1 | 1 | 0 | 16 | 2 | 6 |
| 26 | 208 | 232 | 0 | 0 | 1 | 1 | 0 | 8 | 2 | 6 |
| 27 | 216 | 240 | 0 | 0 | 1 | 1 | 0 | 0 | 2 | 6 |
| 28 | 224 | 248 | 0 | 0 | 1 | 1 | 1 | 32 | 3 | 7 |
| 29 | 232 | 256 | 0 | 0 | 1 | 1 | 1 | 24 | 3 | 7 |
| 30 | 240 | 264 | 0 | 0 | 1 | 1 | 1 | 16 | 3 | 7 |
| 31 | 248 | 272 | 0 | 0 | 1 | 1 | 1 | 8 | 3 | 7 |
| 32 | 256 | 280 | 0 | 0 | 1 | 1 | 1 | 0 | 3 | 7 |
| 33 | 264 | 288 | 0 | 1 | 0 | 0 | 0 | 32 | 1 | 8 |
| 34 | 272 | 296 | 0 | 1 | 0 | 0 | 0 | 24 | 1 | 8 |
| 35 | 280 | 304 | 0 | 1 | 0 | 0 | 0 | 16 | 1 | 8 |
| 36 | 288 | 312 | 0 | 1 | 0 | 0 | 0 | 8 | 1 | 8 |
| 37 | 296 | 320 | 0 | 1 | 0 | 0 | 0 | 0 | 1 | 8 |
| 38 | 304 | 328 | 0 | 1 | 0 | 0 | 1 | 32 | 2 | 9 |
| 39 | 312 | 336 | 0 | 1 | 0 | 0 | 1 | 24 | 2 | 9 |
| 40 | 320 | 344 | 0 | 1 | 0 | 0 | 1 | 16 | 2 | 9 |
| 41 | 328 | 352 | 0 | 1 | 0 | 0 | 1 | 8 | 2 | 9 |
| 42 | 336 | 360 | 0 | 1 | 0 | 0 | 1 | 0 | 2 | 9 |
| 43 | 344 | 368 | 0 | 1 | 0 | 1 | 0 | 32 | 2 | 10 |
| 44 | 352 | 376 | 0 | 1 | 0 | 1 | 0 | 24 | 2 | 10 |
| 45 | 360 | 384 | 0 | 1 | 0 | 1 | 0 | 16 | 2 | 10 |
| 46 | 368 | 392 | 0 | 1 | 0 | 1 | 0 | 8 | 2 | 10 |
| 47 | 376 | 400 | 0 | 1 | 0 | 1 | 0 | 0 | 2 | 10 |
| 48 | 384 | 408 | 0 | 1 | 0 | 1 | 1 | 32 | 3 | 11 |
| 49 | 392 | 416 | 0 | 1 | 0 | 1 | 1 | 24 | 3 | 11 |
| 50 | 400 | 424 | 0 | 1 | 0 | 1 | 1 | 16 | 3 | 11 |

(continued)

| R=3/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 51 | 408 | 432 | 0 | 1 | 0 | 1 | 1 | 8 | 3 | 11 |
| 52 | 416 | 440 | 0 | 1 | 0 | 1 | 1 | 0 | 3 | 11 |
| 53 | 424 | 448 | 0 | 1 | 1 | 0 | 0 | 32 | 2 | 12 |
| 54 | 432 | 456 | 0 | 1 | 1 | 0 | 0 | 24 | 2 | 12 |
| 55 | 440 | 464 | 0 | 1 | 1 | 0 | 0 | 16 | 2 | 12 |
| 56 | 448 | 472 | 0 | 1 | 1 | 0 | 0 | 8 | 2 | 12 |
| 57 | 456 | 480 | 0 | 1 | 1 | 0 | 0 | 0 | 2 | 12 |
| 58 | 464 | 488 | 0 | 1 | 1 | 0 | 1 | 32 | 3 | 13 |
| 59 | 472 | 496 | 0 | 1 | 1 | 0 | 1 | 24 | 3 | 13 |
| 60 | 480 | 504 | 0 | 1 | 1 | 0 | 1 | 16 | 3 | 13 |
| 61 | 488 | 512 | 0 | 1 | 1 | 0 | 1 | 8 | 3 | 13 |
| 62 | 496 | 520 | 0 | 1 | 1 | 0 | 1 | 0 | 3 | 13 |
| 63 | 504 | 528 | 0 | 1 | 1 | 1 | 0 | 32 | 3 | 14 |
| 64 | 512 | 536 | 0 | 1 | 1 | 1 | 0 | 24 | 3 | 14 |
| 65 | 520 | 544 | 0 | 1 | 1 | 1 | 0 | 16 | 3 | 14 |
| 66 | 528 | 552 | 0 | 1 | 1 | 1 | 0 | 8 | 3 | 14 |
| 67 | 536 | 560 | 0 | 1 | 1 | 1 | 0 | 0 | 3 | 14 |
| 68 | 544 | 568 | 0 | 1 | 1 | 1 | 1 | 32 | 4 | 15 |
| 69 | 552 | 576 | 0 | 1 | 1 | 1 | 1 | 24 | 4 | 15 |
| 70 | 560 | 584 | 0 | 1 | 1 | 1 | 1 | 16 | 4 | 15 |
| 71 | 568 | 592 | 0 | 1 | 1 | 1 | 1 | 8 | 4 | 15 |
| 72 | 576 | 600 | 0 | 1 | 1 | 1 | 1 | 0 | 4 | 15 |
| 73 | 584 | 608 | 1 | 0 | 0 | 0 | 0 | 160 | 1 | 16 |
| 74 | 592 | 616 | 1 | 0 | 0 | 0 | 0 | 152 | 1 | 16 |
| 75 | 600 | 624 | 1 | 0 | 0 | 0 | 0 | 144 | 1 | 16 |
| 76 | 608 | 632 | 1 | 0 | 0 | 0 | 0 | 136 | 1 | 16 |
| 77 | 616 | 640 | 1 | 0 | 0 | 0 | 0 | 128 | 1 | 16 |
| 78 | 624 | 648 | 1 | 0 | 0 | 0 | 0 | 120 | 1 | 17 |
| 79 | 632 | 656 | 1 | 0 | 0 | 0 | 0 | 112 | 1 | 17 |
| 80 | 640 | 664 | 1 | 0 | 0 | 0 | 0 | 104 | 1 | 17 |
| 81 | 648 | 672 | 1 | 0 | 0 | 0 | 0 | 96 | 1 | 17 |
| 82 | 656 | 680 | 1 | 0 | 0 | 0 | 0 | 88 | 1 | 17 |
| 83 | 664 | 688 | 1 | 0 | 0 | 0 | 0 | 80 | 1 | 18 |
| 84 | 672 | 696 | 1 | 0 | 0 | 0 | 0 | 72 | 1 | 18 |
| 85 | 680 | 704 | 1 | 0 | 0 | 0 | 0 | 64 | 1 | 18 |
| 86 | 688 | 712 | 1 | 0 | 0 | 0 | 0 | 56 | 1 | 18 |

(continued)

| R=3/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 87 | 696 | 720 | 1 | 0 | 0 | 0 | 0 | 48 | 1 | 18 |
| 88 | 704 | 728 | 1 | 0 | 0 | 0 | 0 | 40 | 1 | 19 |
| 89 | 712 | 736 | 1 | 0 | 0 | 0 | 0 | 32 | 1 | 19 |
| 90 | 720 | 744 | 1 | 0 | 0 | 0 | 0 | 24 | 1 | 19 |
| 91 | 728 | 752 | 1 | 0 | 0 | 0 | 0 | 16 | 1 | 19 |
| 92 | 736 | 760 | 1 | 0 | 0 | 0 | 0 | 8 | 1 | 19 |
| 93 | 744 | 768 | 1 | 0 | 0 | 0 | 0 | 0 | 1 | 0 |

**Table 4(F): A schematic table of a quantity of code blocks corresponding to each code length at the code rate 7/8**

| R=7/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 0 | 0 | 1 | 16 | 1 | 1 |
| 2 | 16 | 40 | 0 | 0 | 0 | 0 | 1 | 8 | 1 | 1 |
| 3 | 24 | 48 | 0 | 0 | 0 | 0 | 1 | 0 | 1 | 1 |
| 4 | 32 | 56 | 0 | 0 | 0 | 1 | 0 | 40 | 1 | 2 |
| 5 | 40 | 64 | 0 | 0 | 0 | 1 | 0 | 32 | 1 | 2 |
| 6 | 48 | 72 | 0 | 0 | 0 | 1 | 0 | 24 | 1 | 2 |
| 7 | 56 | 80 | 0 | 0 | 0 | 1 | 0 | 16 | 1 | 2 |
| 8 | 64 | 88 | 0 | 0 | 0 | 1 | 0 | 8 | 1 | 2 |
| 9 | 72 | 96 | 0 | 0 | 0 | 1 | 0 | 0 | 1 | 2 |
| 10 | 80 | 104 | 0 | 0 | 0 | 1 | 1 | 40 | 2 | 3 |
| 11 | 88 | 112 | 0 | 0 | 0 | 1 | 1 | 32 | 2 | 3 |
| 12 | 96 | 120 | 0 | 0 | 0 | 1 | 1 | 24 | 2 | 3 |
| 13 | 104 | 128 | 0 | 0 | 0 | 1 | 1 | 16 | 2 | 3 |
| 14 | 112 | 136 | 0 | 0 | 0 | 1 | 1 | 8 | 2 | 3 |
| 15 | 120 | 144 | 0 | 0 | 0 | 1 | 1 | 0 | 2 | 3 |
| 16 | 128 | 152 | 0 | 0 | 1 | 0 | 0 | 40 | 1 | 4 |
| 17 | 136 | 160 | 0 | 0 | 1 | 0 | 0 | 32 | 1 | 4 |
| 18 | 144 | 168 | 0 | 0 | 1 | 0 | 0 | 24 | 1 | 4 |
| 19 | 152 | 176 | 0 | 0 | 1 | 0 | 0 | 16 | 1 | 4 |
| 20 | 160 | 184 | 0 | 0 | 1 | 0 | 0 | 8 | 1 | 4 |
| 21 | 168 | 192 | 0 | 0 | 1 | 0 | 0 | 0 | 1 | 4 |
| 22 | 176 | 200 | 0 | 0 | 1 | 0 | 1 | 40 | 2 | 5 |
| 23 | 184 | 208 | 0 | 0 | 1 | 0 | 1 | 32 | 2 | 5 |

(continued)

| R=7/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 24 | 192 | 216 | 0 | 0 | 1 | 0 | 1 | 24 | 2 | 5 |
| 25 | 200 | 224 | 0 | 0 | 1 | 0 | 1 | 16 | 2 | 5 |
| 26 | 208 | 232 | 0 | 0 | 1 | 0 | 1 | 8 | 2 | 5 |
| 27 | 216 | 240 | 0 | 0 | 1 | 0 | 1 | 0 | 2 | 5 |
| 28 | 224 | 248 | 0 | 0 | 1 | 1 | 0 | 40 | 2 | 6 |
| 29 | 232 | 256 | 0 | 0 | 1 | 1 | 0 | 32 | 2 | 6 |
| 30 | 240 | 264 | 0 | 0 | 1 | 1 | 0 | 24 | 2 | 6 |
| 31 | 248 | 272 | 0 | 0 | 1 | 1 | 0 | 16 | 2 | 6 |
| 32 | 256 | 280 | 0 | 0 | 1 | 1 | 0 | 8 | 2 | 6 |
| 33 | 264 | 288 | 0 | 0 | 1 | 1 | 0 | 0 | 2 | 6 |
| 34 | 272 | 296 | 0 | 0 | 1 | 1 | 1 | 40 | 3 | 7 |
| 35 | 280 | 304 | 0 | 0 | 1 | 1 | 1 | 32 | 3 | 7 |
| 36 | 288 | 312 | 0 | 0 | 1 | 1 | 1 | 24 | 3 | 7 |
| 37 | 296 | 320 | 0 | 0 | 1 | 1 | 1 | 16 | 3 | 7 |
| 38 | 304 | 328 | 0 | 0 | 1 | 1 | 1 | 8 | 3 | 7 |
| 39 | 312 | 336 | 0 | 0 | 1 | 1 | 1 | 0 | 3 | 7 |
| 40 | 320 | 344 | 0 | 1 | 0 | 0 | 0 | 40 | 1 | 8 |
| 41 | 328 | 352 | 0 | 1 | 0 | 0 | 0 | 32 | 1 | 8 |
| 42 | 336 | 360 | 0 | 1 | 0 | 0 | 0 | 24 | 1 | 8 |
| 43 | 344 | 368 | 0 | 1 | 0 | 0 | 0 | 16 | 1 | 8 |
| 44 | 352 | 376 | 0 | 1 | 0 | 0 | 0 | 8 | 1 | 8 |
| 45 | 360 | 384 | 0 | 1 | 0 | 0 | 0 | 0 | 1 | 8 |
| 46 | 368 | 392 | 0 | 1 | 0 | 0 | 1 | 40 | 2 | 9 |
| 47 | 376 | 400 | 0 | 1 | 0 | 0 | 1 | 32 | 2 | 9 |
| 48 | 384 | 408 | 0 | 1 | 0 | 0 | 1 | 24 | 2 | 9 |
| 49 | 392 | 416 | 0 | 1 | 0 | 0 | 1 | 16 | 2 | 9 |
| 50 | 400 | 424 | 0 | 1 | 0 | 0 | 1 | 8 | 2 | 9 |
| 51 | 408 | 432 | 0 | 1 | 0 | 0 | 1 | 0 | 2 | 9 |
| 52 | 416 | 440 | 0 | 1 | 0 | 1 | 0 | 40 | 2 | 10 |
| 53 | 424 | 448 | 0 | 1 | 0 | 1 | 0 | 32 | 2 | 10 |
| 54 | 432 | 456 | 0 | 1 | 0 | 1 | 0 | 24 | 2 | 10 |
| 55 | 440 | 464 | 0 | 1 | 0 | 1 | 0 | 16 | 2 | 10 |
| 56 | 448 | 472 | 0 | 1 | 0 | 1 | 0 | 8 | 2 | 10 |
| 57 | 456 | 480 | 0 | 1 | 0 | 1 | 0 | 0 | 2 | 10 |
| 58 | 464 | 488 | 0 | 1 | 0 | 1 | 1 | 40 | 3 | 11 |
| 59 | 472 | 496 | 0 | 1 | 0 | 1 | 1 | 32 | 3 | 11 |

(continued)

| R=7/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 60 | 480 | 504 | 0 | 1 | 0 | 1 | 1 | 24 | 3 | 11 |
| 61 | 488 | 512 | 0 | 1 | 0 | 1 | 1 | 16 | 3 | 11 |
| 62 | 496 | 520 | 0 | 1 | 0 | 1 | 1 | 8 | 3 | 11 |
| 63 | 504 | 528 | 0 | 1 | 0 | 1 | 1 | 0 | 3 | 11 |
| 64 | 512 | 536 | 0 | 1 | 1 | 0 | 0 | 40 | 2 | 12 |
| 65 | 520 | 544 | 0 | 1 | 1 | 0 | 0 | 32 | 2 | 12 |
| 66 | 528 | 552 | 0 | 1 | 1 | 0 | 0 | 24 | 2 | 12 |
| 67 | 536 | 560 | 0 | 1 | 1 | 0 | 0 | 16 | 2 | 12 |
| 68 | 544 | 568 | 0 | 1 | 1 | 0 | 0 | 8 | 2 | 12 |
| 69 | 552 | 576 | 0 | 1 | 1 | 0 | 0 | 0 | 2 | 12 |
| 70 | 560 | 584 | 0 | 1 | 1 | 0 | 1 | 40 | 3 | 13 |
| 71 | 568 | 592 | 0 | 1 | 1 | 0 | 1 | 32 | 3 | 13 |
| 72 | 576 | 600 | 0 | 1 | 1 | 0 | 1 | 24 | 3 | 13 |
| 73 | 584 | 608 | 0 | 1 | 1 | 0 | 1 | 16 | 3 | 13 |
| 74 | 592 | 616 | 0 | 1 | 1 | 0 | 1 | 8 | 3 | 13 |
| 75 | 600 | 624 | 0 | 1 | 1 | 0 | 1 | 0 | 3 | 13 |
| 76 | 608 | 632 | 0 | 1 | 1 | 1 | 0 | 40 | 3 | 14 |
| 77 | 616 | 640 | 0 | 1 | 1 | 1 | 0 | 32 | 3 | 14 |
| 78 | 624 | 648 | 0 | 1 | 1 | 1 | 0 | 24 | 3 | 14 |
| 79 | 632 | 656 | 0 | 1 | 1 | 1 | 0 | 16 | 3 | 14 |
| 80 | 640 | 664 | 0 | 1 | 1 | 1 | 0 | 8 | 3 | 14 |
| 81 | 648 | 672 | 0 | 1 | 1 | 1 | 0 | 0 | 3 | 14 |
| 82 | 656 | 680 | 0 | 1 | 1 | 1 | 1 | 40 | 4 | 15 |
| 83 | 664 | 688 | 0 | 1 | 1 | 1 | 1 | 32 | 4 | 15 |
| 84 | 672 | 696 | 0 | 1 | 1 | 1 | 1 | 24 | 4 | 15 |
| 85 | 680 | 704 | 0 | 1 | 1 | 1 | 1 | 16 | 4 | 15 |
| 86 | 688 | 712 | 0 | 1 | 1 | 1 | 1 | 8 | 4 | 15 |
| 87 | 696 | 720 | 0 | 1 | 1 | 1 | 1 | 0 | 4 | 15 |
| 88 | 704 | 728 | 1 | 0 | 0 | 0 | 0 | 168 | 1 | 16 |
| 89 | 712 | 736 | 1 | 0 | 0 | 0 | 0 | 160 | 1 | 16 |
| 90 | 720 | 744 | 1 | 0 | 0 | 0 | 0 | 152 | 1 | 16 |
| 91 | 728 | 752 | 1 | 0 | 0 | 0 | 0 | 144 | 1 | 16 |
| 92 | 736 | 760 | 1 | 0 | 0 | 0 | 0 | 136 | 1 | 16 |
| 93 | 744 | 768 | 1 | 0 | 0 | 0 | 0 | 128 | 1 | 16 |
| 94 | 752 | 776 | 1 | 0 | 0 | 0 | 0 | 120 | 1 | 17 |
| 95 | 760 | 784 | 1 | 0 | 0 | 0 | 0 | 112 | 1 | 17 |

(continued)

| R=7/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 96 | 768 | 792 | 1 | 0 | 0 | 0 | 0 | 104 | 1 | 17 |
| 97 | 776 | 800 | 1 | 0 | 0 | 0 | 0 | 96 | 1 | 17 |
| 98 | 784 | 808 | 1 | 0 | 0 | 0 | 0 | 88 | 1 | 17 |
| 99 | 792 | 816 | 1 | 0 | 0 | 0 | 0 | 80 | 1 | 17 |
| 100 | 800 | 824 | 1 | 0 | 0 | 0 | 0 | 72 | 1 | 18 |
| 101 | 808 | 832 | 1 | 0 | 0 | 0 | 0 | 64 | 1 | 18 |
| 102 | 816 | 840 | 1 | 0 | 0 | 0 | 0 | 56 | 1 | 18 |
| 103 | 824 | 848 | 1 | 0 | 0 | 0 | 0 | 48 | 1 | 18 |
| 104 | 832 | 856 | 1 | 0 | 0 | 0 | 0 | 40 | 1 | 18 |
| 105 | 840 | 864 | 1 | 0 | 0 | 0 | 0 | 32 | 1 | 18 |
| 106 | 848 | 872 | 1 | 0 | 0 | 0 | 0 | 24 | 1 | 19 |
| 107 | 856 | 880 | 1 | 0 | 0 | 0 | 0 | 16 | 1 | 19 |
| 108 | 864 | 888 | 1 | 0 | 0 | 0 | 0 | 8 | 1 | 19 |
| 109 | 872 | 896 | 1 | 0 | 0 | 0 | 0 | 0 | 1 | 0 |

For ease of understanding, the scenario 2 and scenario 3 are still used as an example to describe a specific calculation process of Segmentation manner 1-3.

In the scenario 2, the data length $D_{ls}$ of the remaining to-be-segmented data is 304 bits, the first code rate is 3/8, and the estimated quantity of code blocks corresponding to the smallest code length 64 bits is 19. The transmit end device may directly query, based on the information, the preset correspondence among a code rate, a code length, the data length of the remaining to-be-segmented data and/or the estimated quantity of code blocks corresponding to the smallest code length, and a quantity of code blocks corresponding to each code length, and obtain the following information (for example, when the correspondence is carried in the correspondence tables shown in Table 4(A) to Table 4(F), the correspondence table shown in Table 4(B) may be queried to obtain a row of data whose number is 35): a quantity of code blocks corresponding to a 1024-bit code length is 1, and quantities of code blocks corresponding to a 512-bit code length, a 256-bit code length, a 128-bit code length, and a 64-bit code length are all 0 (that is, there is no code block corresponding to the 512-bit code length, the 256-bit code length, the 128-bit code length, and the 64-bit code length). Therefore, all the remaining to-be-segmented data is carried in a first code block with a code length of 1024 bits. A data length of the first code block is 384 bits, where 304 bits are used to carry the remaining to-be-segmented data, and remaining 80 bits are unwanted bits.

In the scenario 3, the data length $D_{ls}$ of the remaining to-be-segmented data is 200 bits, the first code rate is 3/8, and the estimated quantity of code blocks corresponding to the smallest code length 64 bits is 13. A data segmentation apparatus may query, based on the information, the preset correspondence among a code rate, a code length, the data length of the remaining to-be-segmented data and/or the estimated quantity of code blocks corresponding to the smallest code length, and a quantity of code blocks corresponding to each code length, and obtain the following information (for example, when the correspondence is carried in the correspondence tables shown in Table 4(A) to Table 4(F), the correspondence table shown in Table 4(B) may be queried to obtain a row of data whose number is 22): a quantity of code blocks corresponding to a 1024-bit code length is 0 (that is, there is no code block corresponding to the 1024-bit code length), a quantity of code blocks corresponding to a 512-bit code length is 1, a quantity of code blocks corresponding to a 256-bit code length is 1, a quantity of code blocks corresponding to a 128-bit code length is 0 (that is, there is no code block corresponding to the 128-bit code length), and a quantity of code blocks corresponding to a 64-bit code length is 1. Therefore, the remaining to-be-segmented data may be carried in one second code block with a code length of 512 bits, one second code block with a code length of 256 bits, and one second code block with a code length of 64 bits. In addition, in the three second code blocks, in addition to the carried remaining to-be-segmented data, there are also 8 bits of unwanted bits.

It should be noted that, in the preset correspondence among a code rate, a code length, the data length of the remaining to-be-segmented data and/or the estimated quantity of code blocks corresponding to the smallest code length, and a quantity of code blocks corresponding to each code length, a quantity of code blocks corresponding to the largest code length 1024 bits is a quantity of first code blocks used to carry the remaining to-be-segmented data $D_{ls}$, instead of a quantity of first code blocks carrying information bits. For example, Table 4(A) is used as an example. Although quantities of code blocks corresponding to the largest code length 1024 bits in numbers 1 to 9 are all 0, this only limits the remaining to-be-segmented data $D_{ls}$ not being carried in the first code block. However, a quantity of information bits that are other than the remaining information bits $K_{ls}$ included in the remaining to-be-segmented data $D_{ls}$ and that are carried in the first code block may be 0, or may be 1, 2, or more than 2. This is not specifically limited.

In the foregoing segment quantity-first rule, information bits are first carried in the first code block with the largest code length as much as possible, and then different segmentation operations are performed based on a quantity of remaining information bits, and no segmentation is performed when there are a large quantity of remaining information bits. Instead, a first code block with the largest code length is additionally used to carry an entire remaining information bit, so that a low data transmission delay can be maintained by avoiding a large quantity of short code blocks being segmented. When there are a small quantity of remaining information bits, a short code block corresponding to a small code length is used for segmentation. In addition, when a data transmission delay is low, a quantity of unwanted bits included in a code block can be reduced by performing finer segmentation, to effectively reduce air interface overheads generated during data transmission. Further, when there are a small quantity of remaining information bits, the second code block corresponding to the small code length is used to carry the remaining information bits, and the data length of the second code block is smaller than that of the first code block corresponding to the largest code length. Therefore, even if the remaining information bits need to be retransmitted, the second code block with a smaller data length can be retransmitted without retransmitting the first code block, to further reduce a retransmitted data volume and a retransmission delay.

Bit quantity-first rule

In the bit quantity-first rule, it is considered that the data length of the first code block corresponding to the largest code length is greater than the data length of the second code block corresponding to the non-largest code length, if the first code block with the largest code length is used to carry the entire to-be-segmented data, the first code block may include a large quantity of unwanted bits. This invisibly increases a transmitted data volume, and is unfavorable to reducing an air interface loss of data transmission. Based on this, after obtaining the initial quantity of the first code blocks and the data length of the remaining to-be-segmented data, the transmit end device may directly use the initial quantity of the first code blocks as the quantity of the first code blocks, and segment the remaining to-be-segmented data by using the non-largest code length, without concerning a specific data length of the remaining to-be-segmented data. According to the rule, in various scenarios, a short code block corresponding to a small code length can be used as much as possible to carry the remaining to-be-segmented data. This helps reduce a quantity of unwanted bits included in a segmented code block, and further reduces an air interface loss generated during data transmission.

The following describes several possible segmentation manners under the bit quantity-first rule by using examples.

Segmentation manner 2-1

In Segmentation manner 2-1, segmentation may be performed based on the data length of the remaining to-be-segmented data. In an implementation, the transmit end device may set the initial quantity of the first code blocks as the quantity of the first code blocks, successively determine initial quantities of code blocks corresponding to the S-1 non-largest code lengths in descending order of code lengths with reference to the calculation method for determining the initial quantity of the first code blocks corresponding to the largest code length in step 502, step 503, and step 505, use an initial quantity of code blocks corresponding to the non-smallest code length as a quantity of code blocks corresponding to the non-smallest code length, use a smallest integer not less than an initial quantity of code blocks corresponding to the smallest code length as a quantity of code blocks corresponding to the smallest code length, and then use a quantity of code blocks corresponding to the L non-largest code lengths and whose quantity is not 0 in the S-1 non-largest code lengths as the quantity of the L types of second code blocks.

The scenario 2 is still used as an example to describe a specific calculation process of Segmentation manner 2-1. In the scenario 2, the data length of the remaining to-be-segmented data is 304 bits. With reference to the K table shown in Table 2.11(B), it can be learned that, at the code rate 3/8, a preset or preconfigured data length corresponding to the 512-bit code length is 128 bits. Therefore, a quantity of code blocks corresponding to the 512-bit code length is: floor(304/128)=2. The data length $D_{ls}$ of the remaining to-be-segmented data is updated to be: 304 bits-2$\times$ 128 bits=48 bits. At the code rate 3/8, a preset or preconfigured data length corresponding to the 256-bit code length is 64 bits.

Therefore, a quantity of code blocks corresponding to the 256-bit code length is: floor(48/64)=0. The data length $D_{ls}$ of the remaining to-be-segmented data is still 48 bits. At the code rate 3/8, a preset or preconfigured data length corresponding to the 128-bit code length is 32 bits. Therefore, a quantity of code blocks corresponding to the 128-bit code length is: floor(48/32)=1. The data length $D_{ls}$ of the remaining to-be-segmented data is updated to be: 48 bits-32 bits=16 bits. At the code rate 3/8, a preset or preconfigured data length corresponding to the smallest code length 64 bits is 16 bits. Therefore, a quantity of code blocks corresponding to the smallest code length 64 bits is: ceil(16/16)=1. Because quantities of code blocks corresponding to non-largest code lengths 512 bits, 256 bits, 128 bits, and 64 bits are respectively 2, 0, 1, and 1, there are the following three types of second code blocks in total. For a first type of second code block, a code length is 512 bits, a quantity is 2, and a data length of each second code block is 128 bits, where 128 bits of each of the two second code blocks store information bits. For a second type of second code block, a code length is 128 bits, a quantity is 1, and a data length is 32 bits, where 24 bits of the 32 bits store information bits, and the remaining 8 bits store 8 bits of information of the second check code. For a third type of second code block, a code length is 64 bits, a quantity is 1, and a data length is 16 bits, where the 16 bits store remaining 16 bits of information of the second check code.

Segmentation manner 2-2

In Segmentation manner 2-2, segmentation may be performed based on the estimated quantity $C_{S-1'}$ of code blocks corresponding to the smallest code length. In an implementation, the transmit end device may use the initial quantity of the first code blocks as the quantity of the first code blocks, sequentially obtain the quantities of code blocks corresponding to the S-1 non-largest code lengths $N_1$ to $N_{S-1}$ according to the formula (5.51) to the formula (5.56) in Segmentation manner 1-21, select L non-largest code lengths whose quantity of code blocks is not 0 from the S-1 non-largest code lengths $N_1$ to $N_{S-1}$, and use a quantity of code blocks corresponding to the L non-largest code lengths as the quantity of the L types of second code blocks.

The scenario 2 is still used as an example to describe a specific calculation process of Segmentation manner 2-2. In the scenario 2, the data length of the remaining to-be-segmented data is 304 bits, and the data length is converted into code blocks corresponding to the smallest code length 64 bits at the code rate 3/8, to obtain the estimated quantity 19 of code blocks corresponding to the smallest code length 64 bits. According to the estimated quantity 19, the transmit end device may sequentially perform the following analysis in descending order of code lengths: First, a ratio of the largest non-largest code length 512 bits to the smallest code length 64 bits is 8: 1, and two code blocks corresponding to the non-largest code length 512 bits may be converted from the estimated quantity 19 of code blocks corresponding to the smallest code length 64 bits. Therefore, a quantity of code blocks corresponding to the non-largest code length 512 bits is 2, and an estimated quantity of remaining code blocks corresponding to the smallest code length 64 bits after conversion is: $19-2\times8=3$. Then, a ratio of the non-largest code length 256 bits to the smallest code length 64 bits is 4: 1, and one code block corresponding to the non-largest code length 256 bits cannot be converted from the estimated quantity 3 of remaining code blocks corresponding to the smallest code length 64 bits. Therefore, a quantity of code blocks corresponding to the non-largest code length 256 bits is 0 (that is, there is no code block corresponding to the non-largest code length 256 bits). Because conversion is not performed, the estimated quantity of remaining code blocks corresponding to the smallest code length 64 bits is still 3. Next, a ratio of the non-largest code length 128 bits to the smallest code length 64 bits is 2: 1, and one code block corresponding to the non-largest code length 128 bits may be converted from the estimated quantity 3 of remaining code blocks corresponding to the smallest code length 64 bits. Therefore, a quantity of code blocks corresponding to the non-largest code length 128 bits is 1, and an estimated quantity of remaining code blocks corresponding to the smallest code length 64 bits after conversion is: $3-2\times1=1$. Finally, a quantity of code blocks corresponding to the non-largest code length 64 bits is equal to the estimated quantity 1 of remaining code blocks corresponding to the smallest code length 64 bits. Because quantities of code blocks corresponding to non-largest code lengths 512 bits, 256 bits, 128 bits, and 64 bits are respectively 2, 0, 1, and 1, there are the following three types of second code blocks in total. For a first type of second code block, a code length is 512 bits, a quantity is 2, and a data length of each second code block is 128 bits. For a second type of second code block, a code length is 128 bits, a quantity is 1, and a data length is 32 bits. For a third type of second code block, a code length is 64 bits, a quantity is 1, and a data length is 16 bits.

Segmentation manner 2-3

In Segmentation manner 2-1, real-time calculation needs to be performed based on the data length of the remaining to-be-segmented data. In Segmentation manner 2-2, real-time calculation needs to be performed based on the estimated quantity $C_{S-1'}$ of code blocks corresponding to the smallest code length $N_{S-1}$. In Segmentation manner 2-3, a quantity of each type of the L types of second code blocks can be directly obtained based on the data length of the remaining to-be-segmented data and/or the estimated quantity $C_{S-1'}$ of code blocks corresponding to the smallest code length $N_{S-1}$ by querying a preset correspondence among a code rate, a code length, the data length of the remaining to-be-segmented data and/or the estimated quantity of code blocks corresponding to the smallest code length, and a quantity of code blocks corresponding to each code length. The preset correspondence among a code rate, a code length, the data length of the remaining to-be-segmented data and/or the estimated quantity of code blocks corresponding to the smallest code length, and a quantity of code blocks corresponding to each code length may be represented in any form of a table, a database, a stack, or the like. This is not specifically limited.

For example, when the preset correspondence among a code rate, a code length, the data length of the remaining to-be-segmented data and/or the estimated quantity of code blocks corresponding to the smallest code length, and a quantity of code blocks corresponding to each code length is represented in a correspondence table, Table 5 is a schematic table of a preset correspondence among a code rate, a code length, the data length of the remaining to-be-segmented data and/or the estimated quantity of code blocks corresponding to the smallest code length, and a quantity of code blocks corresponding to each code length according to this embodiment of this application. Table 5(A) is a schematic table of a quantity of code blocks corresponding to each code length at the code rate 1/4. Table 5(B) is a schematic table of a quantity of code blocks corresponding to each code length at the code rate 3/8. Table 5(C) is a schematic table of a quantity of code blocks corresponding to each code length at the code rate 1/2. Table 5(D) is a schematic table of a quantity of code blocks corresponding to each code length at the code rate 5/8. Table 5(E) is a schematic table of a quantity of code blocks corresponding to each code length at the code rate 3/4. Table 5(F) is a schematic table of a quantity of code blocks corresponding to each code length at the code rate 7/8. Information (for example, $K_{ls}$, $D_{ls}$, N, $C_{S-1'}$, $C_{ls}$, and $K_{Diff}$) in Table 5(A) to Table 5(F) is consistent with that in Table 4(A) to Table 4(F). Details are not described herein again.

**Table 5(A): A schematic table of a quantity of code blocks corresponding to each code length at the code rate 1/4**

| R=1/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 1 | 0 | 0 | 0 | 1 | 4 |
| 2 | 16 | 40 | 0 | 0 | 1 | 0 | 1 | 0 | 2 | 5 |
| 3 | 24 | 48 | 0 | 0 | 1 | 1 | 0 | 0 | 2 | 6 |
| 4 | 32 | 56 | 0 | 0 | 1 | 1 | 1 | 0 | 3 | 7 |
| 5 | 40 | 64 | 0 | 1 | 0 | 0 | 0 | 0 | 1 | 8 |
| 6 | 48 | 72 | 0 | 1 | 0 | 0 | 1 | 0 | 2 | 9 |
| 7 | 56 | 80 | 0 | 1 | 0 | 1 | 0 | 0 | 2 | 10 |
| 8 | 64 | 88 | 0 | 1 | 0 | 1 | 1 | 0 | 3 | 11 |
| 9 | 72 | 96 | 0 | 1 | 1 | 0 | 0 | 0 | 2 | 12 |
| 10 | 80 | 104 | 0 | 1 | 1 | 0 | 1 | 0 | 3 | 13 |
| 11 | 88 | 112 | 0 | 1 | 1 | 1 | 0 | 0 | 3 | 14 |
| 12 | 96 | 120 | 0 | 1 | 1 | 1 | 1 | 0 | 4 | 15 |
| 13 | 104 | 128 | 0 | 2 | 0 | 0 | 0 | 0 | 2 | 16 |
| 14 | 112 | 136 | 0 | 2 | 0 | 0 | 1 | 0 | 3 | 17 |
| 15 | 120 | 144 | 0 | 2 | 0 | 1 | 0 | 0 | 3 | 18 |
| 16 | 128 | 152 | 0 | 2 | 0 | 1 | 1 | 0 | 4 | 19 |
| 17 | 136 | 160 | 0 | 2 | 1 | 0 | 0 | 0 | 3 | 20 |
| 18 | 144 | 168 | 0 | 2 | 1 | 0 | 1 | 0 | 4 | 21 |
| 19 | 152 | 176 | 0 | 2 | 1 | 1 | 0 | 0 | 4 | 22 |
| 20 | 160 | 184 | 0 | 2 | 1 | 1 | 1 | 0 | 5 | 23 |
| 21 | 168 | 192 | 0 | 3 | 0 | 0 | 0 | 0 | 3 | 24 |

(continued)

| R=1/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 22 | 176 | 200 | 0 | 3 | 0 | 0 | 1 | 0 | 4 | 25 |
| 23 | 184 | 208 | 0 | 3 | 0 | 1 | 0 | 0 | 4 | 26 |
| 24 | 192 | 216 | 0 | 3 | 0 | 1 | 1 | 0 | 5 | 27 |
| 25 | 200 | 224 | 0 | 3 | 1 | 0 | 0 | 0 | 4 | 28 |
| 26 | 208 | 232 | 0 | 3 | 1 | 0 | 1 | 0 | 5 | 29 |
| 27 | 216 | 240 | 0 | 3 | 1 | 1 | 0 | 0 | 5 | 30 |
| 28 | 224 | 248 | 0 | 3 | 1 | 1 | 1 | 0 | 6 | 31 |
| 29 | 232 | 256 | 1 | 0 | 0 | 0 | 0 | 0 | 1 | 0 |

**Table 5(B): A schematic table of a quantity of code blocks corresponding to each code length at the code rate 3/8**

| R=3/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 0 | 1 | 0 | 0 | 1 | 2 |
| 2 | 16 | 40 | 0 | 0 | 0 | 1 | 1 | 8 | 2 | 3 |
| 3 | 24 | 48 | 0 | 0 | 0 | 1 | 1 | 0 | 2 | 3 |
| 4 | 32 | 56 | 0 | 0 | 1 | 0 | 0 | 8 | 1 | 4 |
| 5 | 40 | 64 | 0 | 0 | 1 | 0 | 0 | 0 | 1 | 4 |
| 6 | 48 | 72 | 0 | 0 | 1 | 0 | 1 | 8 | 2 | 5 |
| 7 | 56 | 80 | 0 | 0 | 1 | 0 | 1 | 0 | 2 | 5 |
| 8 | 64 | 88 | 0 | 0 | 1 | 1 | 0 | 8 | 2 | 6 |
| 9 | 72 | 96 | 0 | 0 | 1 | 1 | 0 | 0 | 2 | 6 |
| 10 | 80 | 104 | 0 | 0 | 1 | 1 | 1 | 8 | 3 | 7 |
| 11 | 88 | 112 | 0 | 0 | 1 | 1 | 1 | 0 | 3 | 7 |
| 12 | 96 | 120 | 0 | 1 | 0 | 0 | 0 | 8 | 1 | 8 |
| 13 | 104 | 128 | 0 | 1 | 0 | 0 | 0 | 0 | 1 | 8 |
| 14 | 112 | 136 | 0 | 1 | 0 | 0 | 1 | 8 | 2 | 9 |
| 15 | 120 | 144 | 0 | 1 | 0 | 0 | 1 | 0 | 2 | 9 |
| 16 | 128 | 152 | 0 | 1 | 0 | 1 | 0 | 8 | 2 | 10 |
| 17 | 136 | 160 | 0 | 1 | 0 | 1 | 0 | 0 | 2 | 10 |
| 18 | 144 | 168 | 0 | 1 | 0 | 1 | 1 | 8 | 3 | 11 |
| 19 | 152 | 176 | 0 | 1 | 0 | 1 | 1 | 0 | 3 | 11 |
| 20 | 160 | 184 | 0 | 1 | 1 | 0 | 0 | 8 | 2 | 12 |
| 21 | 168 | 192 | 0 | 1 | 1 | 0 | 0 | 0 | 2 | 12 |
| 22 | 176 | 200 | 0 | 1 | 1 | 0 | 1 | 8 | 3 | 13 |

(continued)

| R=3/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 23 | 184 | 208 | 0 | 1 | 1 | 0 | 1 | 0 | 3 | 13 |
| 24 | 192 | 216 | 0 | 1 | 1 | 1 | 0 | 8 | 3 | 14 |
| 25 | 200 | 224 | 0 | 1 | 1 | 1 | 0 | 0 | 3 | 14 |
| 26 | 208 | 232 | 0 | 1 | 1 | 1 | 1 | 8 | 4 | 15 |
| 27 | 216 | 240 | 0 | 1 | 1 | 1 | 1 | 0 | 4 | 15 |
| 28 | 224 | 248 | 0 | 2 | 0 | 0 | 0 | 8 | 2 | 16 |
| 29 | 232 | 256 | 0 | 2 | 0 | 0 | 0 | 0 | 2 | 16 |
| 30 | 240 | 264 | 0 | 2 | 0 | 0 | 1 | 8 | 3 | 17 |
| 31 | 248 | 272 | 0 | 2 | 0 | 0 | 1 | 0 | 3 | 17 |
| 32 | 256 | 280 | 0 | 2 | 0 | 1 | 0 | 8 | 3 | 18 |
| 33 | 264 | 288 | 0 | 2 | 0 | 1 | 0 | 0 | 3 | 18 |
| 34 | 272 | 296 | 0 | 2 | 0 | 1 | 1 | 8 | 4 | 19 |
| 35 | 280 | 304 | 0 | 2 | 0 | 1 | 1 | 0 | 4 | 19 |
| 36 | 288 | 312 | 0 | 2 | 1 | 0 | 0 | 8 | 3 | 20 |
| 37 | 296 | 320 | 0 | 2 | 1 | 0 | 0 | 0 | 3 | 20 |
| 38 | 304 | 328 | 0 | 2 | 1 | 0 | 1 | 8 | 4 | 21 |
| 39 | 312 | 336 | 0 | 2 | 1 | 0 | 1 | 0 | 4 | 21 |
| 40 | 320 | 344 | 0 | 2 | 1 | 1 | 0 | 8 | 4 | 22 |
| 41 | 328 | 352 | 0 | 2 | 1 | 1 | 0 | 0 | 4 | 22 |
| 42 | 336 | 360 | 0 | 2 | 1 | 1 | 1 | 8 | 5 | 23 |
| 43 | 344 | 368 | 0 | 2 | 1 | 1 | 1 | 0 | 5 | 23 |
| 44 | 352 | 376 | 0 | 3 | 0 | 0 | 0 | 8 | 3 | 24 |
| 45 | 360 | 384 | 1 | 0 | 0 | 0 | 0 | 0 | 1 | 0 |

**Table 5(C): A schematic table of a quantity of code blocks corresponding to each code length at the code rate 1/2**

| R=1/2 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 0 | 1 | 0 | 16 | 1 | 2 |
| 2 | 16 | 40 | 0 | 0 | 0 | 1 | 0 | 8 | 1 | 2 |
| 3 | 24 | 48 | 0 | 0 | 0 | 1 | 0 | 0 | 1 | 2 |
| 4 | 32 | 56 | 0 | 0 | 0 | 1 | 1 | 16 | 2 | 3 |
| 5 | 40 | 64 | 0 | 0 | 0 | 1 | 1 | 8 | 2 | 3 |
| 6 | 48 | 72 | 0 | 0 | 0 | 1 | 1 | 0 | 2 | 3 |
| 7 | 56 | 80 | 0 | 0 | 1 | 0 | 0 | 16 | 1 | 4 |

(continued)

| R=1/2 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 8 | 64 | 88 | 0 | 0 | 1 | 0 | 0 | 8 | 1 | 4 |
| 9 | 72 | 96 | 0 | 0 | 1 | 0 | 0 | 0 | 1 | 4 |
| 10 | 80 | 104 | 0 | 0 | 1 | 0 | 1 | 16 | 2 | 5 |
| 11 | 88 | 112 | 0 | 0 | 1 | 0 | 1 | 8 | 2 | 5 |
| 12 | 96 | 120 | 0 | 0 | 1 | 0 | 1 | 0 | 2 | 5 |
| 13 | 104 | 128 | 0 | 0 | 1 | 1 | 0 | 16 | 2 | 6 |
| 14 | 112 | 136 | 0 | 0 | 1 | 1 | 0 | 8 | 2 | 6 |
| 15 | 120 | 144 | 0 | 0 | 1 | 1 | 0 | 0 | 2 | 6 |
| 16 | 128 | 152 | 0 | 0 | 1 | 1 | 1 | 16 | 3 | 7 |
| 17 | 136 | 160 | 0 | 0 | 1 | 1 | 1 | 8 | 3 | 7 |
| 18 | 144 | 168 | 0 | 0 | 1 | 1 | 1 | 0 | 3 | 7 |
| 19 | 152 | 176 | 0 | 1 | 0 | 0 | 0 | 16 | 1 | 8 |
| 20 | 160 | 184 | 0 | 1 | 0 | 0 | 0 | 8 | 1 | 8 |
| 21 | 168 | 192 | 0 | 1 | 0 | 0 | 0 | 0 | 1 | 8 |
| 22 | 176 | 200 | 0 | 1 | 0 | 0 | 1 | 16 | 2 | 9 |
| 23 | 184 | 208 | 0 | 1 | 0 | 0 | 1 | 8 | 2 | 9 |
| 24 | 192 | 216 | 0 | 1 | 0 | 0 | 1 | 0 | 2 | 9 |
| 25 | 200 | 224 | 0 | 1 | 0 | 1 | 0 | 16 | 2 | 10 |
| 26 | 208 | 232 | 0 | 1 | 0 | 1 | 0 | 8 | 2 | 10 |
| 27 | 216 | 240 | 0 | 1 | 0 | 1 | 0 | 0 | 2 | 10 |
| 28 | 224 | 248 | 0 | 1 | 0 | 1 | 1 | 16 | 3 | 11 |
| 29 | 232 | 256 | 0 | 1 | 0 | 1 | 1 | 8 | 3 | 11 |
| 30 | 240 | 264 | 0 | 1 | 0 | 1 | 1 | 0 | 3 | 11 |
| 31 | 248 | 272 | 0 | 1 | 1 | 0 | 0 | 16 | 2 | 12 |
| 32 | 256 | 280 | 0 | 1 | 1 | 0 | 0 | 8 | 2 | 12 |
| 33 | 264 | 288 | 0 | 1 | 1 | 0 | 0 | 0 | 2 | 12 |
| 34 | 272 | 296 | 0 | 1 | 1 | 0 | 1 | 16 | 3 | 13 |
| 35 | 280 | 304 | 0 | 1 | 1 | 0 | 1 | 8 | 3 | 13 |
| 36 | 288 | 312 | 0 | 1 | 1 | 0 | 1 | 0 | 3 | 13 |
| 37 | 296 | 320 | 0 | 1 | 1 | 1 | 0 | 16 | 3 | 14 |
| 38 | 304 | 328 | 0 | 1 | 1 | 1 | 0 | 8 | 3 | 14 |
| 39 | 312 | 336 | 0 | 1 | 1 | 1 | 0 | 0 | 3 | 14 |
| 40 | 320 | 344 | 0 | 1 | 1 | 1 | 1 | 16 | 4 | 15 |
| 41 | 328 | 352 | 0 | 1 | 1 | 1 | 1 | 8 | 4 | 15 |
| 42 | 336 | 360 | 0 | 1 | 1 | 1 | 1 | 0 | 4 | 15 |
| 43 | 344 | 368 | 0 | 2 | 0 | 0 | 0 | 16 | 2 | 16 |

(continued)

| R=1/2 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 44 | 352 | 376 | 0 | 2 | 0 | 0 | 0 | 8 | 2 | 16 |
| 45 | 360 | 384 | 0 | 2 | 0 | 0 | 0 | 0 | 2 | 16 |
| 46 | 368 | 392 | 0 | 2 | 0 | 0 | 1 | 16 | 3 | 17 |
| 47 | 376 | 400 | 0 | 2 | 0 | 0 | 1 | 8 | 3 | 17 |
| 48 | 384 | 408 | 0 | 2 | 0 | 0 | 1 | 0 | 3 | 17 |
| 49 | 392 | 416 | 0 | 2 | 0 | 1 | 0 | 16 | 3 | 18 |
| 50 | 400 | 424 | 0 | 2 | 0 | 1 | 0 | 8 | 3 | 18 |
| 51 | 408 | 432 | 0 | 2 | 0 | 1 | 0 | 0 | 3 | 18 |
| 52 | 416 | 440 | 0 | 2 | 0 | 1 | 1 | 16 | 4 | 19 |
| 53 | 424 | 448 | 0 | 2 | 0 | 1 | 1 | 8 | 4 | 19 |
| 54 | 432 | 456 | 0 | 2 | 0 | 1 | 1 | 0 | 4 | 19 |
| 55 | 440 | 464 | 0 | 2 | 1 | 0 | 0 | 16 | 3 | 20 |
| 56 | 448 | 472 | 0 | 2 | 1 | 0 | 0 | 8 | 3 | 20 |
| 57 | 456 | 480 | 0 | 2 | 1 | 0 | 0 | 0 | 3 | 20 |
| 58 | 464 | 488 | 0 | 2 | 1 | 0 | 1 | 16 | 4 | 21 |
| 59 | 472 | 496 | 0 | 2 | 1 | 0 | 1 | 8 | 4 | 21 |
| 60 | 480 | 504 | 0 | 2 | 1 | 0 | 1 | 0 | 4 | 21 |
| 61 | 488 | 512 | 1 | 0 | 0 | 0 | 0 | 0 | 1 | 0 |

**Table 5(D): A schematic table of a quantity of code blocks corresponding to each code length at the code rate 5/8**

| R=5/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 0 | 0 | 1 | 0 | 1 | 1 |
| 2 | 16 | 40 | 0 | 0 | 0 | 1 | 0 | 24 | 1 | 2 |
| 3 | 24 | 48 | 0 | 0 | 0 | 1 | 0 | 16 | 1 | 2 |
| 4 | 32 | 56 | 0 | 0 | 0 | 1 | 0 | 8 | 1 | 2 |
| 5 | 40 | 64 | 0 | 0 | 0 | 1 | 0 | 0 | 1 | 2 |
| 6 | 48 | 72 | 0 | 0 | 0 | 1 | 1 | 24 | 2 | 3 |
| 7 | 56 | 80 | 0 | 0 | 0 | 1 | 1 | 16 | 2 | 3 |
| 8 | 64 | 88 | 0 | 0 | 0 | 1 | 1 | 8 | 2 | 3 |
| 9 | 72 | 96 | 0 | 0 | 0 | 1 | 1 | 0 | 2 | 3 |
| 10 | 80 | 104 | 0 | 0 | 1 | 0 | 0 | 24 | 1 | 4 |
| 11 | 88 | 112 | 0 | 0 | 1 | 0 | 0 | 16 | 1 | 4 |
| 12 | 96 | 120 | 0 | 0 | 1 | 0 | 0 | 8 | 1 | 4 |

(continued)

| R=5/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 13 | 104 | 128 | 0 | 0 | 1 | 0 | 0 | 0 | 1 | 4 |
| 14 | 112 | 136 | 0 | 0 | 1 | 0 | 1 | 24 | 2 | 5 |
| 15 | 120 | 144 | 0 | 0 | 1 | 0 | 1 | 16 | 2 | 5 |
| 16 | 128 | 152 | 0 | 0 | 1 | 0 | 1 | 8 | 2 | 5 |
| 17 | 136 | 160 | 0 | 0 | 1 | 0 | 1 | 0 | 2 | 5 |
| 18 | 144 | 168 | 0 | 0 | 1 | 1 | 0 | 24 | 2 | 6 |
| 19 | 152 | 176 | 0 | 0 | 1 | 1 | 0 | 16 | 2 | 6 |
| 20 | 160 | 184 | 0 | 0 | 1 | 1 | 0 | 8 | 2 | 6 |
| 21 | 168 | 192 | 0 | 0 | 1 | 1 | 0 | 0 | 2 | 6 |
| 22 | 176 | 200 | 0 | 0 | 1 | 1 | 1 | 24 | 3 | 7 |
| 23 | 184 | 208 | 0 | 0 | 1 | 1 | 1 | 16 | 3 | 7 |
| 24 | 192 | 216 | 0 | 0 | 1 | 1 | 1 | 8 | 3 | 7 |
| 25 | 200 | 224 | 0 | 0 | 1 | 1 | 1 | 0 | 3 | 7 |
| 26 | 208 | 232 | 0 | 1 | 0 | 0 | 0 | 24 | 1 | 8 |
| 27 | 216 | 240 | 0 | 1 | 0 | 0 | 0 | 16 | 1 | 8 |
| 28 | 224 | 248 | 0 | 1 | 0 | 0 | 0 | 8 | 1 | 8 |
| 29 | 232 | 256 | 0 | 1 | 0 | 0 | 0 | 0 | 1 | 8 |
| 30 | 240 | 264 | 0 | 1 | 0 | 0 | 1 | 24 | 2 | 9 |
| 31 | 248 | 272 | 0 | 1 | 0 | 0 | 1 | 16 | 2 | 9 |
| 32 | 256 | 280 | 0 | 1 | 0 | 0 | 1 | 8 | 2 | 9 |
| 33 | 264 | 288 | 0 | 1 | 0 | 0 | 1 | 0 | 2 | 9 |
| 34 | 272 | 296 | 0 | 1 | 0 | 1 | 0 | 24 | 2 | 10 |
| 35 | 280 | 304 | 0 | 1 | 0 | 1 | 0 | 16 | 2 | 10 |
| 36 | 288 | 312 | 0 | 1 | 0 | 1 | 0 | 8 | 2 | 10 |
| 37 | 296 | 320 | 0 | 1 | 0 | 1 | 0 | 0 | 2 | 10 |
| 38 | 304 | 328 | 0 | 1 | 0 | 1 | 1 | 24 | 3 | 11 |
| 39 | 312 | 336 | 0 | 1 | 0 | 1 | 1 | 16 | 3 | 11 |
| 40 | 320 | 344 | 0 | 1 | 0 | 1 | 1 | 8 | 3 | 11 |
| 41 | 328 | 352 | 0 | 1 | 0 | 1 | 1 | 0 | 3 | 11 |
| 42 | 336 | 360 | 0 | 1 | 1 | 0 | 0 | 24 | 2 | 12 |
| 43 | 344 | 368 | 0 | 1 | 1 | 0 | 0 | 16 | 2 | 12 |
| 44 | 352 | 376 | 0 | 1 | 1 | 0 | 0 | 8 | 2 | 12 |
| 45 | 360 | 384 | 0 | 1 | 1 | 0 | 0 | 0 | 2 | 12 |
| 46 | 368 | 392 | 0 | 1 | 1 | 0 | 1 | 24 | 3 | 13 |
| 47 | 376 | 400 | 0 | 1 | 1 | 0 | 1 | 16 | 3 | 13 |
| 48 | 384 | 408 | 0 | 1 | 1 | 0 | 1 | 8 | 3 | 13 |

(continued)

| R=5/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 49 | 392 | 416 | 0 | 1 | 1 | 0 | 1 | 0 | 3 | 13 |
| 50 | 400 | 424 | 0 | 1 | 1 | 1 | 0 | 24 | 3 | 14 |
| 51 | 408 | 432 | 0 | 1 | 1 | 1 | 0 | 16 | 3 | 14 |
| 52 | 416 | 440 | 0 | 1 | 1 | 1 | 0 | 8 | 3 | 14 |
| 53 | 424 | 448 | 0 | 1 | 1 | 1 | 0 | 0 | 3 | 14 |
| 54 | 432 | 456 | 0 | 1 | 1 | 1 | 1 | 24 | 4 | 15 |
| 55 | 440 | 464 | 0 | 1 | 1 | 1 | 1 | 16 | 4 | 15 |
| 56 | 448 | 472 | 0 | 1 | 1 | 1 | 1 | 8 | 4 | 15 |
| 57 | 456 | 480 | 0 | 1 | 1 | 1 | 1 | 0 | 4 | 15 |
| 58 | 464 | 488 | 0 | 2 | 0 | 0 | 0 | 24 | 2 | 16 |
| 59 | 472 | 496 | 0 | 2 | 0 | 0 | 0 | 16 | 2 | 16 |
| 60 | 480 | 504 | 0 | 2 | 0 | 0 | 0 | 8 | 2 | 16 |
| 61 | 488 | 512 | 0 | 2 | 0 | 0 | 0 | 0 | 2 | 16 |
| 62 | 496 | 520 | 0 | 2 | 0 | 0 | 1 | 24 | 3 | 17 |
| 63 | 504 | 528 | 0 | 2 | 0 | 0 | 1 | 16 | 3 | 17 |
| 64 | 512 | 536 | 0 | 2 | 0 | 0 | 1 | 8 | 3 | 17 |
| 65 | 520 | 544 | 0 | 2 | 0 | 0 | 1 | 0 | 3 | 17 |
| 66 | 528 | 552 | 0 | 2 | 0 | 1 | 0 | 24 | 3 | 18 |
| 67 | 536 | 560 | 0 | 2 | 0 | 1 | 0 | 16 | 3 | 18 |
| 68 | 544 | 568 | 0 | 2 | 0 | 1 | 0 | 8 | 3 | 18 |
| 69 | 552 | 576 | 0 | 2 | 0 | 1 | 0 | 0 | 3 | 18 |
| 70 | 560 | 584 | 0 | 2 | 0 | 1 | 1 | 24 | 4 | 19 |
| 71 | 568 | 592 | 0 | 2 | 0 | 1 | 1 | 16 | 4 | 19 |
| 72 | 576 | 600 | 0 | 2 | 0 | 1 | 1 | 8 | 4 | 19 |
| 73 | 584 | 608 | 0 | 2 | 0 | 1 | 1 | 0 | 4 | 19 |
| 74 | 592 | 616 | 0 | 2 | 1 | 0 | 0 | 24 | 3 | 20 |
| 75 | 600 | 624 | 0 | 2 | 1 | 0 | 0 | 16 | 3 | 20 |
| 76 | 608 | 632 | 0 | 2 | 1 | 0 | 0 | 8 | 3 | 20 |
| 77 | 616 | 640 | 1 | 0 | 0 | 0 | 0 | 0 | 1 | 0 |

**Table 5(E): A schematic table of a quantity of code blocks corresponding to each code length at the code rate 3/4**

| R=3/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 0 | 0 | 1 | 8 | 1 | 1 |

(continued)

| R=3/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 2 | 16 | 40 | 0 | 0 | 0 | 0 | 1 | 0 | 1 | 1 |
| 3 | 24 | 48 | 0 | 0 | 0 | 1 | 0 | 32 | 1 | 2 |
| 4 | 32 | 56 | 0 | 0 | 0 | 1 | 0 | 24 | 1 | 2 |
| 5 | 40 | 64 | 0 | 0 | 0 | 1 | 0 | 16 | 1 | 2 |
| 6 | 48 | 72 | 0 | 0 | 0 | 1 | 0 | 8 | 1 | 2 |
| 7 | 56 | 80 | 0 | 0 | 0 | 1 | 0 | 0 | 1 | 2 |
| 8 | 64 | 88 | 0 | 0 | 0 | 1 | 1 | 32 | 2 | 3 |
| 9 | 72 | 96 | 0 | 0 | 0 | 1 | 1 | 24 | 2 | 3 |
| 10 | 80 | 104 | 0 | 0 | 0 | 1 | 1 | 16 | 2 | 3 |
| 11 | 88 | 112 | 0 | 0 | 0 | 1 | 1 | 8 | 2 | 3 |
| 12 | 96 | 120 | 0 | 0 | 0 | 1 | 1 | 0 | 2 | 3 |
| 13 | 104 | 128 | 0 | 0 | 1 | 0 | 0 | 32 | 1 | 4 |
| 14 | 112 | 136 | 0 | 0 | 1 | 0 | 0 | 24 | 1 | 4 |
| 15 | 120 | 144 | 0 | 0 | 1 | 0 | 0 | 16 | 1 | 4 |
| 16 | 128 | 152 | 0 | 0 | 1 | 0 | 0 | 8 | 1 | 4 |
| 17 | 136 | 160 | 0 | 0 | 1 | 0 | 0 | 0 | 1 | 4 |
| 18 | 144 | 168 | 0 | 0 | 1 | 0 | 1 | 32 | 2 | 5 |
| 19 | 152 | 176 | 0 | 0 | 1 | 0 | 1 | 24 | 2 | 5 |
| 20 | 160 | 184 | 0 | 0 | 1 | 0 | 1 | 16 | 2 | 5 |
| 21 | 168 | 192 | 0 | 0 | 1 | 0 | 1 | 8 | 2 | 5 |
| 22 | 176 | 200 | 0 | 0 | 1 | 0 | 1 | 0 | 2 | 5 |
| 23 | 184 | 208 | 0 | 0 | 1 | 1 | 0 | 32 | 2 | 6 |
| 24 | 192 | 216 | 0 | 0 | 1 | 1 | 0 | 24 | 2 | 6 |
| 25 | 200 | 224 | 0 | 0 | 1 | 1 | 0 | 16 | 2 | 6 |
| 26 | 208 | 232 | 0 | 0 | 1 | 1 | 0 | 8 | 2 | 6 |
| 27 | 216 | 240 | 0 | 0 | 1 | 1 | 0 | 0 | 2 | 6 |
| 28 | 224 | 248 | 0 | 0 | 1 | 1 | 1 | 32 | 3 | 7 |
| 29 | 232 | 256 | 0 | 0 | 1 | 1 | 1 | 24 | 3 | 7 |
| 30 | 240 | 264 | 0 | 0 | 1 | 1 | 1 | 16 | 3 | 7 |
| 31 | 248 | 272 | 0 | 0 | 1 | 1 | 1 | 8 | 3 | 7 |
| 32 | 256 | 280 | 0 | 0 | 1 | 1 | 1 | 0 | 3 | 7 |
| 33 | 264 | 288 | 0 | 1 | 0 | 0 | 0 | 32 | 1 | 8 |
| 34 | 272 | 296 | 0 | 1 | 0 | 0 | 0 | 24 | 1 | 8 |
| 35 | 280 | 304 | 0 | 1 | 0 | 0 | 0 | 16 | 1 | 8 |
| 36 | 288 | 312 | 0 | 1 | 0 | 0 | 0 | 8 | 1 | 8 |
| 37 | 296 | 320 | 0 | 1 | 0 | 0 | 0 | 0 | 1 | 8 |

(continued)

| R=3/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 38 | 304 | 328 | 0 | 1 | 0 | 0 | 1 | 32 | 2 | 9 |
| 39 | 312 | 336 | 0 | 1 | 0 | 0 | 1 | 24 | 2 | 9 |
| 40 | 320 | 344 | 0 | 1 | 0 | 0 | 1 | 16 | 2 | 9 |
| 41 | 328 | 352 | 0 | 1 | 0 | 0 | 1 | 8 | 2 | 9 |
| 42 | 336 | 360 | 0 | 1 | 0 | 0 | 1 | 0 | 2 | 9 |
| 43 | 344 | 368 | 0 | 1 | 0 | 1 | 0 | 32 | 2 | 10 |
| 44 | 352 | 376 | 0 | 1 | 0 | 1 | 0 | 24 | 2 | 10 |
| 45 | 360 | 384 | 0 | 1 | 0 | 1 | 0 | 16 | 2 | 10 |
| 46 | 368 | 392 | 0 | 1 | 0 | 1 | 0 | 8 | 2 | 10 |
| 47 | 376 | 400 | 0 | 1 | 0 | 1 | 0 | 0 | 2 | 10 |
| 48 | 384 | 408 | 0 | 1 | 0 | 1 | 1 | 32 | 3 | 11 |
| 49 | 392 | 416 | 0 | 1 | 0 | 1 | 1 | 24 | 3 | 11 |
| 50 | 400 | 424 | 0 | 1 | 0 | 1 | 1 | 16 | 3 | 11 |
| 51 | 408 | 432 | 0 | 1 | 0 | 1 | 1 | 8 | 3 | 11 |
| 52 | 416 | 440 | 0 | 1 | 0 | 1 | 1 | 0 | 3 | 11 |
| 53 | 424 | 448 | 0 | 1 | 1 | 0 | 0 | 32 | 2 | 12 |
| 54 | 432 | 456 | 0 | 1 | 1 | 0 | 0 | 24 | 2 | 12 |
| 55 | 440 | 464 | 0 | 1 | 1 | 0 | 0 | 16 | 2 | 12 |
| 56 | 448 | 472 | 0 | 1 | 1 | 0 | 0 | 8 | 2 | 12 |
| 57 | 456 | 480 | 0 | 1 | 1 | 0 | 0 | 0 | 2 | 12 |
| 58 | 464 | 488 | 0 | 1 | 1 | 0 | 1 | 32 | 3 | 13 |
| 59 | 472 | 496 | 0 | 1 | 1 | 0 | 1 | 24 | 3 | 13 |
| 60 | 480 | 504 | 0 | 1 | 1 | 0 | 1 | 16 | 3 | 13 |
| 61 | 488 | 512 | 0 | 1 | 1 | 0 | 1 | 8 | 3 | 13 |
| 62 | 496 | 520 | 0 | 1 | 1 | 0 | 1 | 0 | 3 | 13 |
| 63 | 504 | 528 | 0 | 1 | 1 | 1 | 0 | 32 | 3 | 14 |
| 64 | 512 | 536 | 0 | 1 | 1 | 1 | 0 | 24 | 3 | 14 |
| 65 | 520 | 544 | 0 | 1 | 1 | 1 | 0 | 16 | 3 | 14 |
| 66 | 528 | 552 | 0 | 1 | 1 | 1 | 0 | 8 | 3 | 14 |
| 67 | 536 | 560 | 0 | 1 | 1 | 1 | 0 | 0 | 3 | 14 |
| 68 | 544 | 568 | 0 | 1 | 1 | 1 | 1 | 32 | 4 | 15 |
| 69 | 552 | 576 | 0 | 1 | 1 | 1 | 1 | 24 | 4 | 15 |
| 70 | 560 | 584 | 0 | 1 | 1 | 1 | 1 | 16 | 4 | 15 |
| 71 | 568 | 592 | 0 | 1 | 1 | 1 | 1 | 8 | 4 | 15 |
| 72 | 576 | 600 | 0 | 1 | 1 | 1 | 1 | 0 | 4 | 15 |
| 73 | 584 | 608 | 0 | 2 | 0 | 0 | 0 | 32 | 3 | 16 |

(continued)

| R=3/4 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 74 | 592 | 616 | 0 | 2 | 0 | 0 | 0 | 24 | 3 | 16 |
| 75 | 600 | 624 | 0 | 2 | 0 | 0 | 0 | 16 | 3 | 16 |
| 76 | 608 | 632 | 0 | 2 | 0 | 0 | 0 | 8 | 3 | 16 |
| 77 | 616 | 640 | 0 | 2 | 0 | 0 | 0 | 0 | 3 | 16 |
| 78 | 624 | 648 | 0 | 2 | 0 | 0 | 0 | 32 | 3 | 17 |
| 79 | 632 | 656 | 0 | 2 | 0 | 0 | 1 | 24 | 3 | 17 |
| 80 | 640 | 664 | 0 | 2 | 0 | 0 | 1 | 16 | 3 | 17 |
| 81 | 648 | 672 | 0 | 2 | 0 | 0 | 1 | 8 | 3 | 17 |
| 82 | 656 | 680 | 0 | 2 | 0 | 0 | 1 | 0 | 3 | 17 |
| 83 | 664 | 688 | 0 | 2 | 0 | 1 | 0 | 32 | 3 | 18 |
| 84 | 672 | 696 | 0 | 2 | 0 | 1 | 0 | 24 | 3 | 18 |
| 85 | 680 | 704 | 0 | 2 | 0 | 1 | 0 | 16 | 3 | 18 |
| 86 | 688 | 712 | 0 | 2 | 0 | 1 | 0 | 8 | 3 | 18 |
| 87 | 696 | 720 | 0 | 2 | 0 | 1 | 0 | 0 | 3 | 18 |
| 88 | 704 | 728 | 0 | 2 | 0 | 1 | 1 | 32 | 4 | 19 |
| 89 | 712 | 736 | 0 | 2 | 0 | 1 | 1 | 24 | 4 | 19 |
| 90 | 720 | 744 | 0 | 2 | 0 | 1 | 1 | 16 | 4 | 19 |
| 91 | 728 | 752 | 0 | 2 | 0 | 1 | 1 | 8 | 4 | 19 |
| 92 | 736 | 760 | 0 | 2 | 0 | 1 | 1 | 0 | 4 | 19 |
| 93 | 744 | 768 | 1 | 0 | 0 | 0 | 0 | 0 | 1 | 0 |

**Table 5(F): A schematic table of a quantity of code blocks corresponding to each code length at the code rate 7/8**

| R=7/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 1 | 8 | 32 | 0 | 0 | 0 | 0 | 1 | 16 | 1 | 1 |
| 2 | 16 | 40 | 0 | 0 | 0 | 0 | 1 | 8 | 1 | 1 |
| 3 | 24 | 48 | 0 | 0 | 0 | 0 | 1 | 0 | 1 | 1 |
| 4 | 32 | 56 | 0 | 0 | 0 | 1 | 0 | 40 | 1 | 2 |
| 5 | 40 | 64 | 0 | 0 | 0 | 1 | 0 | 32 | 1 | 2 |
| 6 | 48 | 72 | 0 | 0 | 0 | 1 | 0 | 24 | 1 | 2 |
| 7 | 56 | 80 | 0 | 0 | 0 | 1 | 0 | 16 | 1 | 2 |
| 8 | 64 | 88 | 0 | 0 | 0 | 1 | 0 | 8 | 1 | 2 |
| 9 | 72 | 96 | 0 | 0 | 0 | 1 | 0 | 0 | 1 | 2 |
| 10 | 80 | 104 | 0 | 0 | 0 | 1 | 1 | 40 | 2 | 3 |

(continued)

| R=7/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 11 | 88 | 112 | 0 | 0 | 0 | 1 | 1 | 32 | 2 | 3 |
| 12 | 96 | 120 | 0 | 0 | 0 | 1 | 1 | 24 | 2 | 3 |
| 13 | 104 | 128 | 0 | 0 | 0 | 1 | 1 | 16 | 2 | 3 |
| 14 | 112 | 136 | 0 | 0 | 0 | 1 | 1 | 8 | 2 | 3 |
| 15 | 120 | 144 | 0 | 0 | 0 | 1 | 1 | 0 | 2 | 3 |
| 16 | 128 | 152 | 0 | 0 | 1 | 0 | 0 | 40 | 1 | 4 |
| 17 | 136 | 160 | 0 | 0 | 1 | 0 | 0 | 32 | 1 | 4 |
| 18 | 144 | 168 | 0 | 0 | 1 | 0 | 0 | 24 | 1 | 4 |
| 19 | 152 | 176 | 0 | 0 | 1 | 0 | 0 | 16 | 1 | 4 |
| 20 | 160 | 184 | 0 | 0 | 1 | 0 | 0 | 8 | 1 | 4 |
| 21 | 168 | 192 | 0 | 0 | 1 | 0 | 0 | 0 | 1 | 4 |
| 22 | 176 | 200 | 0 | 0 | 1 | 0 | 1 | 40 | 2 | 5 |
| 23 | 184 | 208 | 0 | 0 | 1 | 0 | 1 | 32 | 2 | 5 |
| 24 | 192 | 216 | 0 | 0 | 1 | 0 | 1 | 24 | 2 | 5 |
| 25 | 200 | 224 | 0 | 0 | 1 | 0 | 1 | 16 | 2 | 5 |
| 26 | 208 | 232 | 0 | 0 | 1 | 0 | 1 | 8 | 2 | 5 |
| 27 | 216 | 240 | 0 | 0 | 1 | 0 | 1 | 0 | 2 | 5 |
| 28 | 224 | 248 | 0 | 0 | 1 | 1 | 0 | 40 | 2 | 6 |
| 29 | 232 | 256 | 0 | 0 | 1 | 1 | 0 | 32 | 2 | 6 |
| 30 | 240 | 264 | 0 | 0 | 1 | 1 | 0 | 24 | 2 | 6 |
| 31 | 248 | 272 | 0 | 0 | 1 | 1 | 0 | 16 | 2 | 6 |
| 32 | 256 | 280 | 0 | 0 | 1 | 1 | 0 | 8 | 2 | 6 |
| 33 | 264 | 288 | 0 | 0 | 1 | 1 | 0 | 0 | 2 | 6 |
| 34 | 272 | 296 | 0 | 0 | 1 | 1 | 1 | 40 | 3 | 7 |
| 35 | 280 | 304 | 0 | 0 | 1 | 1 | 1 | 32 | 3 | 7 |
| 36 | 288 | 312 | 0 | 0 | 1 | 1 | 1 | 24 | 3 | 7 |
| 37 | 296 | 320 | 0 | 0 | 1 | 1 | 1 | 16 | 3 | 7 |
| 38 | 304 | 328 | 0 | 0 | 1 | 1 | 1 | 8 | 3 | 7 |
| 39 | 312 | 336 | 0 | 0 | 1 | 1 | 1 | 0 | 3 | 7 |
| 40 | 320 | 344 | 0 | 1 | 0 | 0 | 0 | 40 | 1 | 8 |
| 41 | 328 | 352 | 0 | 1 | 0 | 0 | 0 | 32 | 1 | 8 |
| 42 | 336 | 360 | 0 | 1 | 0 | 0 | 0 | 24 | 1 | 8 |
| 43 | 344 | 368 | 0 | 1 | 0 | 0 | 0 | 16 | 1 | 8 |
| 44 | 352 | 376 | 0 | 1 | 0 | 0 | 0 | 8 | 1 | 8 |
| 45 | 360 | 384 | 0 | 1 | 0 | 0 | 0 | 0 | 1 | 8 |
| 46 | 368 | 392 | 0 | 1 | 0 | 0 | 1 | 40 | 2 | 9 |

(continued)

| R=7/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 47 | 376 | 400 | 0 | 1 | 0 | 0 | 1 | 32 | 2 | 9 |
| 48 | 384 | 408 | 0 | 1 | 0 | 0 | 1 | 24 | 2 | 9 |
| 49 | 392 | 416 | 0 | 1 | 0 | 0 | 1 | 16 | 2 | 9 |
| 50 | 400 | 424 | 0 | 1 | 0 | 0 | 1 | 8 | 2 | 9 |
| 51 | 408 | 432 | 0 | 1 | 0 | 0 | 1 | 0 | 2 | 9 |
| 52 | 416 | 440 | 0 | 1 | 0 | 1 | 0 | 40 | 2 | 10 |
| 53 | 424 | 448 | 0 | 1 | 0 | 1 | 0 | 32 | 2 | 10 |
| 54 | 432 | 456 | 0 | 1 | 0 | 1 | 0 | 24 | 2 | 10 |
| 55 | 440 | 464 | 0 | 1 | 0 | 1 | 0 | 16 | 2 | 10 |
| 56 | 448 | 472 | 0 | 1 | 0 | 1 | 0 | 8 | 2 | 10 |
| 57 | 456 | 480 | 0 | 1 | 0 | 1 | 0 | 0 | 2 | 10 |
| 58 | 464 | 488 | 0 | 1 | 0 | 1 | 1 | 40 | 3 | 11 |
| 59 | 472 | 496 | 0 | 1 | 0 | 1 | 1 | 32 | 3 | 11 |
| 60 | 480 | 504 | 0 | 1 | 0 | 1 | 1 | 24 | 3 | 11 |
| 61 | 488 | 512 | 0 | 1 | 0 | 1 | 1 | 16 | 3 | 11 |
| 62 | 496 | 520 | 0 | 1 | 0 | 1 | 1 | 8 | 3 | 11 |
| 63 | 504 | 528 | 0 | 1 | 0 | 1 | 1 | 0 | 3 | 11 |
| 64 | 512 | 536 | 0 | 1 | 1 | 0 | 0 | 40 | 2 | 12 |
| 65 | 520 | 544 | 0 | 1 | 1 | 0 | 0 | 32 | 2 | 12 |
| 66 | 528 | 552 | 0 | 1 | 1 | 0 | 0 | 24 | 2 | 12 |
| 67 | 536 | 560 | 0 | 1 | 1 | 0 | 0 | 16 | 2 | 12 |
| 68 | 544 | 568 | 0 | 1 | 1 | 0 | 0 | 8 | 2 | 12 |
| 69 | 552 | 576 | 0 | 1 | 1 | 0 | 0 | 0 | 2 | 12 |
| 70 | 560 | 584 | 0 | 1 | 1 | 0 | 1 | 40 | 3 | 13 |
| 71 | 568 | 592 | 0 | 1 | 1 | 0 | 1 | 32 | 3 | 13 |
| 72 | 576 | 600 | 0 | 1 | 1 | 0 | 1 | 24 | 3 | 13 |
| 73 | 584 | 608 | 0 | 1 | 1 | 0 | 1 | 16 | 3 | 13 |
| 74 | 592 | 616 | 0 | 1 | 1 | 0 | 1 | 8 | 3 | 13 |
| 75 | 600 | 624 | 0 | 1 | 1 | 0 | 1 | 0 | 3 | 13 |
| 76 | 608 | 632 | 0 | 1 | 1 | 1 | 0 | 40 | 3 | 14 |
| 77 | 616 | 640 | 0 | 1 | 1 | 1 | 0 | 32 | 3 | 14 |
| 78 | 624 | 648 | 0 | 1 | 1 | 1 | 0 | 24 | 3 | 14 |
| 79 | 632 | 656 | 0 | 1 | 1 | 1 | 0 | 16 | 3 | 14 |
| 80 | 640 | 664 | 0 | 1 | 1 | 1 | 0 | 8 | 3 | 14 |
| 81 | 648 | 672 | 0 | 1 | 1 | 1 | 0 | 0 | 3 | 14 |
| 82 | 656 | 680 | 0 | 1 | 1 | 1 | 1 | 40 | 4 | 15 |

(continued)

| R=7/8 | | | | | | | | | | |
|---|---|---|---|---|---|---|---|---|---|---|
| Number | $K_{ls}$ | $D_{ls}$ | N | | | | | $K_{Diff}$ | $C_{ls}$ | $C_{S-1'}$ |
| | | | 1024 | 512 | 256 | 128 | 64 | | | |
| 83 | 664 | 688 | 0 | 1 | 1 | 1 | 1 | 32 | 4 | 15 |
| 84 | 672 | 696 | 0 | 1 | 1 | 1 | 1 | 24 | 4 | 15 |
| 85 | 680 | 704 | 0 | 1 | 1 | 1 | 1 | 16 | 4 | 15 |
| 86 | 688 | 712 | 0 | 1 | 1 | 1 | 1 | 8 | 4 | 15 |
| 87 | 696 | 720 | 0 | 1 | 1 | 1 | 1 | 0 | 4 | 15 |
| 88 | 704 | 728 | 0 | 2 | 0 | 0 | 0 | 40 | 2 | 16 |
| 89 | 712 | 736 | 0 | 2 | 0 | 0 | 0 | 32 | 2 | 16 |
| 90 | 720 | 744 | 0 | 2 | 0 | 0 | 0 | 24 | 2 | 16 |
| 91 | 728 | 752 | 0 | 2 | 0 | 0 | 0 | 16 | 2 | 16 |
| 92 | 736 | 760 | 0 | 2 | 0 | 0 | 0 | 8 | 2 | 16 |
| 93 | 744 | 768 | 0 | 2 | 0 | 0 | 0 | 0 | 2 | 16 |
| 94 | 752 | 776 | 0 | 2 | 0 | 0 | 1 | 40 | 3 | 17 |
| 95 | 760 | 784 | 0 | 2 | 0 | 0 | 1 | 32 | 3 | 17 |
| 96 | 768 | 792 | 0 | 2 | 0 | 0 | 1 | 24 | 3 | 17 |
| 97 | 776 | 800 | 0 | 2 | 0 | 0 | 1 | 16 | 3 | 17 |
| 98 | 784 | 808 | 0 | 2 | 0 | 0 | 1 | 8 | 3 | 17 |
| 99 | 792 | 816 | 0 | 2 | 0 | 0 | 1 | 0 | 3 | 17 |
| 100 | 800 | 824 | 0 | 2 | 0 | 1 | 0 | 40 | 3 | 18 |
| 101 | 808 | 832 | 0 | 2 | 0 | 1 | 0 | 32 | 3 | 18 |
| 102 | 816 | 840 | 0 | 2 | 0 | 1 | 0 | 24 | 3 | 18 |
| 103 | 824 | 848 | 0 | 2 | 0 | 1 | 0 | 16 | 3 | 18 |
| 104 | 832 | 856 | 0 | 2 | 0 | 1 | 0 | 8 | 3 | 18 |
| 105 | 840 | 864 | 0 | 2 | 0 | 1 | 0 | 0 | 3 | 18 |
| 106 | 848 | 872 | 0 | 2 | 0 | 1 | 1 | 40 | 4 | 19 |
| 107 | 856 | 880 | 0 | 2 | 0 | 1 | 1 | 32 | 4 | 19 |
| 108 | 864 | 888 | 0 | 2 | 0 | 1 | 1 | 24 | 4 | 19 |
| 109 | 872 | 896 | 1 | 0 | 0 | 0 | 0 | 0 | 1 | 0 |

The scenario 2 is still used as an example to describe a specific calculation process of Segmentation manner 2-3. In the scenario 2, the data length $D_{ls}$ of the remaining to-be-segmented data is 304 bits, the first code rate is 3/8, and the estimated quantity of code blocks corresponding to the smallest code length 64 bits is 19. The transmit end device may query, based on the information, the preset correspondence among a code rate, a code length, the data length of the remaining to-be-segmented data and/or the estimated quantity of code blocks corresponding to the smallest code length, and a quantity of code blocks corresponding to each code length, and obtain the following information (for example, when the correspondence is carried in the correspondence tables shown in Table 5(A) to Table 5(F), the correspondence table shown in Table 5(B) may be queried to obtain a row of data whose number is 35): a quantity of code blocks corresponding to a 1024-bit code length is 0 (that is, there is no code block corresponding to the 1024-bit code length), a quantity of code blocks corresponding to a 512-bit code length is 2, a quantity of code blocks corresponding to a 256-bit code length is 0 (that is, there is no code block corresponding to the 256-bit code length), a quantity of code blocks corresponding to a 128-bit code length is 1, and a quantity of code blocks corresponding to a 64-bit code length is 1. Therefore, the remaining to-be-segmented data may be carried in two second code blocks with a code length of 512 bits, one second code block with a code length of 128 bits, and one second code block with a code length of 64 bits. In addition, there is no unwanted bit.

It can be learned from comparison between the segment quantity-first rule and the bit quantity-first rule that, for the same scenario 2, in the segment quantity-first rule, a long first code block with a large code length is additionally set to carry the entire remaining to-be-segmented data, to reduce a transmission delay by reducing a quantity of segments of a short second code block. In the bit quantity-first rule, four short second code blocks with a small code length are set to carry the remaining to-be-segmented data, to reduce an air interface loss by reducing a quantity of unwanted bits. In an actual operation, the transmit end device may fixedly set one of the two rules, or may simultaneously set the two rules, and flexibly enable, based on an indication entered by a user, a rule applicable to a current scenario, to meet different requirements in different scenarios.

Step 507: The transmit end device segments the information bit based on the quantity of the first code blocks and the quantity of the second code blocks, and adds the first check code/second check code to segmented information bits, to obtain the C code blocks.

In an example (referred to as Example 1 for short), it is assumed that three first code blocks whose data lengths are 384 bits and corresponding to the largest code length 1024 bits are used to carry a 1000-bit information bit. In this case, the transmit end device may first segment the 1000-bit information bit into 360 bits, 360 bits, and 280 bits in order, generate a 24-bit first check code for the first 360 bits and add the 24-bit first check code to the first 360 bits to obtain the 1$^{st}$ first code block, generate a 24-bit first check code for the second 360 bits and add the 24-bit first check code to the second 360 bits to obtain the 2$^{nd}$ first code block, and generate a 24-bit first check code for the 280 bits and add the 24-bit first check code to the 280 bits to obtain the 3$^{rd}$ first code block.

In another example (referred to as Example 2 for short), it is assumed that one first code block whose data length is 384 bits and corresponding to the largest code length 1024 bits, one second code block whose data length is 128 bits and corresponding to the non-largest code length 512 bits, one second code block whose data length is 64 bits and corresponding to the non-largest code length 216 bits, and one second code block whose data length is 16 bits and corresponding to the non-largest code length 64 bits are used to jointly carry a 536-bit information bit. In this case, the transmit end device may first segment the 536-bit information bit into 360 bits, 128 bits, and 48 bits in order, generate a 24-bit first check code for the 360 bits and add the 24-bit first check code to the first 360 bits to obtain the first code block, use the 128 bits as the 1$^{st}$ second code block, generate a 24-bit second check code for the 128 bits and the 48 bits and add 16 bits of the 24-bit second check code to the 48 bits to obtain the 2$^{nd}$ second code block, and use the remaining 8-bit second check code to form the 3$^{rd}$ second code block.

Step 508: The transmit end device encodes the C code blocks by using a polar code to obtain codewords obtained after the C code blocks are encoded.

For example, after obtaining the C code blocks and before encoding the C code blocks, the transmit end device may further determine, based on the data length of the C code blocks, the total data length of the information bit, the data length of the first check code, and/or the data length of the second check code, a data length $K_{Diff}$ of an unwanted bit in the C code blocks, and adjust the C code blocks based on the data length $K_{Diff}$ of the unwanted bit. The data length $K_{Diff}$ of the unwanted bit is a difference between the data length of the C code blocks and a data length of the valid data, and the valid data includes encoded data, the first check code, and/or the second check code. Based on several possible cases, the following separately describes how to determine the data length $K_{Diff}$ of the unwanted bit and how to adjust the C code blocks.

Case 1: There are $C_{10}$ first code blocks but no second code block in the C code blocks.

In this case, the data length of the C code blocks is a data length of the $C_{10}$ first code blocks, and the data length of the valid data are a sum of the total data length of the information bit and a data length of $C_{10}$ first check codes. It is assumed that a data length of one first code block is $K_0$, the total data length of the information bit is $K_{input}$, and a data length of one first check code is $CRC_0$, the data length $K_{Diff}$ of the unwanted bit may meet the following formula (5.71):

$$K_{Diff}=C_{10}\times K_0-K_{input}-C_{10}\times CRC_0 \quad (5.71)$$

During adjustment, because there are $C_{10}$ first code blocks but no second code block in the C code blocks, the transmit end device may adjust only the $C_{10}$ first code blocks. For example, a preset bit sequence including $K_{Diff}$ (such as an all-0 bit sequence, an all-1 bit sequence, a character bit sequence, or a bit sequence generated according to a specific rule) is padded to one or more of the $C_{10}$ first code blocks, or bits in total of $K_{Diff}$ are subtracted. For example, when no second code block exists, because in the foregoing procedure, an additional first code block is added only in a principle of limited transmission performance to carry the remaining to-be-segmented data with a long data length, the data length $K_{Diff}$ of the unwanted bit is definitely less than the data length of one first code block. Therefore, for ease of management, the transmit end device may pad the preset bit sequence of $K_{Diff}$ to the last first code block or subtract bits of $K_{Diff}$ from the last first code block, for example, pad the preset bit sequence of $K_{Diff}$ before an information bit of the last first code block. In this way, because reliability of bits located at a rear position in the code block is probably higher than reliability of bits located at a front position in the code block, unwanted bit information is padded in the front position in the first code block, so that valid information is placed at the rear position with probably higher reliability in the first code block, to effectively improve reliability of transmitting the valid information. For another example, the preset bit sequence of $K_{Diff}$ is padded between an information bit of the last first code block and the first check code, so that the first check code can also include check information of the preset bit sequence of $K_{Diff}$, to further improve security of data check and transmission. For another example, the preset bit sequence of $K_{Diff}$ is padded after the first check code of the last first code block, so that the first check code does not include check information corresponding to unwanted bit information, to effectively reduce check operations. Alternatively, a data length (the data length is the preset or preconfigured data length determined based on the correspondence among the S code lengths, the T code rates, and the S×T data lengths) of the last first code block may be subtracted by $K_{Diff}$, so that the valid data is encoded without encoding an unwanted bit of $K_{Diff}$ when encoding the last first code block. It should be understood that the foregoing several padding manners are merely some possible examples. In an actual operation, padding may also be performed in other positions. For example, the preset bit sequence of $K_{Diff}$ may be padded before an information bit of any other first code block, between the information bit and the first check code, or after the first check code, or the preset bit sequence of $K_{Diff}$ may be padded into a plurality of first code blocks in a scattered manner, and a padding position in each first code block is not limited. This is not listed one by one herein.

For example, in Example 1, a sum of data lengths of the three first code blocks is: 3×384 bits=1152 bits, a sum of data lengths of internally-carried valid information is: 1000 bits+3×24 bits=1072 bits, and a data length of unwanted bits included in the three first code blocks is: 1152 bits-1072 bits=80 bits. Based on this, in a possible manner, the transmit end device may pad an 80-bit all-0 sequence before the information bit of the last first code block, so that the last first code block includes the 80-bit all-0 sequence, a 280-bit information bit, and a 24-bit first check code that are sequentially concatenated.

Case 2: There are $C_{10}$ first code blocks and $C_{20}$ second code blocks in the C code blocks.

In this case, the data length of the C code blocks is a sum of a data length of the $C_{10}$ first code blocks and a data length of the $C_{20}$ second code blocks. The data length of the valid data is a sum of the total data length of the information bit, a data length of $C_{10}$ first check codes, and a data length of one second check code. It is assumed that a data length of one first code block is $K_0$, the total data length of the information bit is $K_{input}$, a data length of one first check code is $CRC_0$, a data length of one second check code is $CRC_{ls}$, and quantities of second code blocks corresponding to the code length $N_1$, the code length $N_2$, ..., and the code length Ns-i are respectively $C_1$, $C_2$, ..., and Cs-i. In this case, the data length $K_{Diff}$ of the unwanted bit may meet the following formula (5.72):

$$K_{Diff}=C_{10}\times K_0+C_1\times K_1+C_2\times K_2+\ldots+C_{S-1}\times K_{S-1}-K_{input}-C_{10}\times CRC_0-CRC_{ls} \quad (5.72)$$

During adjustment, because there are $C_{10}$ first code blocks and $C_{20}$ second code blocks in the C code blocks, the transmit end device may adjust one or more of the $C_{10}$ first code blocks and/or one or more of the $C_{20}$ second code blocks. For example, the preset bit sequence of $K_{Diff}$ is padded to the one or more of the $C_{10}$ first code blocks and/or the one or more of the $C_{20}$ second code blocks, or the bits of $K_{Diff}$ are subtracted. For example, to enable the first code block with the largest code length to carry as many information bits as possible, the transmit end device may pad the preset bit sequence of $K_{Diff}$ to the $C_{20}$ second code blocks or subtract the bits of $K_{Diff}$ from the $C_{20}$ second code blocks. For example, the preset bit sequence of $K_{Diff}$ is padded before an information bit of the $C_{20}$ second code blocks, so that unwanted bit information is padded in a frontmost position with lower reliability of the 1st second code block, and valid information is placed in a rear position with higher reliability of the 1st second code block, to effectively improve reliability of transmitting the valid information. For another example, the preset bit sequence of $K_{Diff}$ is padded between the information bit of the $C_{20}$ second code blocks and the second check code, so that the second check code can also include the check information of the preset bit sequence of $K_{Diff}$, to further enhance management and check. For another example, the preset bit sequence of $K_{Diff}$ is padded after the second check code of the $C_{20}$ second code blocks, so that the second check code does not include check information corresponding to the unwanted bit information, to effectively reduce check operations. Alternatively, the bits of $K_{Diff}$ are subtracted from an end of a last second code block (when the second code block exists, because in the foregoing procedure, a round-up operation is performed only when the remaining to-be-segmented data is converted to the code block corresponding to the smallest code length to obtain the estimated quantity, the data length $K_{Diff}$ of the unwanted bit is definitely less than the data length of the code block with the smallest code length, that is, less than a data length of the last second code block). It should be understood that the foregoing several padding manners are merely some possible examples. In an actual operation, padding may also be performed in other positions. For example, the preset bit sequence of $K_{Diff}$ may be padded before an information bit of any other second code block, after the information bit of the any other second code block, before the second check code, or after the second check code, or the preset bit sequence of $K_{Diff}$ may be padded into a plurality of second code blocks in a scattered manner, and a padding position in each second code block is not limited. This is not listed one by one herein.

For example, in Example 2, a sum of data lengths of one first code block corresponding to the largest code length 1024 bits, one second code block corresponding to the non-largest code length 512 bits, one second code block corresponding to the non-largest code length 216 bits, and one second code block corresponding to the non-largest code length 64 bits is: 384 bits+128 bits+64 bits+16 bits=592 bits, a sum of data lengths of internally-carried valid information is 536 bits+24 bits+24 bits=584 bits, and a data length of unwanted bits included in the first code block and the three second code blocks is: 592 bits-584 bits=8 bits. Based on this, in a possible manner, the transmit end device may pad an 8-bit all-0 sequence before the information bit of the 1st second code block, so that the 1st second code block includes the 8-bit all-0 sequence and a 504-bit information bit that are sequentially concatenated.

Case 3: There are $C_{20}$ second code blocks but no first code block in the C code blocks.

In this case, the data length of the C code blocks is a data length of the $C_{20}$ second code blocks, and the data length of the valid data are a sum of the total data length of the information bit and a data length of one second check code. It is assumed that the total data length of the information bit is $K_{input}$, the data length of one second check code is $CRC_{ls}$, and quantities of second code blocks corresponding to the code length $N_1$, the code length $N_2$, ..., and the code length Ns-i are respectively $C_1$, $C_2$, ..., and Cs-i. In this case, the data length $K_{Diff}$ of the unwanted bit may meet the following formula (5.73):

$$K_{Diff}=C_1\times K_1+C_2\times K_2+\ldots+C_{S-1}\times K_{S-1}-K_{input}-CRC_{ls} \quad (5.73)$$

During adjustment, because there are $C_{20}$ second code blocks but no first code block in the C code blocks, the transmit end device may adjust one or more of the $C_{20}$ second code blocks. For example, the preset bit sequence of $K_{Diff}$ is padded before the information bit of the $C_{20}$ second code blocks, or the preset bit sequence of $K_{Diff}$ is padded after the second check code of the $C_{20}$ second code blocks. For another example, the preset bit sequence of $K_{Diff}$ is padded between the information bit of the $C_{20}$ second code blocks and the second check code, or the bits of $K_{Diff}$ are subtracted from the data length of the last second code block. This is not specifically limited.

It should be noted that Case 1 to Case 3 are merely examples for describing how to determine the $K_{Diff}$ in a calculation manner, and this is only an optional implementation. In another optional implementation, when a quantity of segments is obtained by querying the correspondence in Segmentation manner 1-3 or Segmentation manner 2-3, $K_{Diff}$ corresponding to various cases may be further set or configured in the correspondence in advance. In addition, the corresponding $K_{Diff}$ is synchronously queried in a process of querying the quantity of segments, to reduce calculation processes and effectively improve data segmentation efficiency. For example, when the correspondence is represented in the table shown in Table 4(A) to Table 4(F) or Table 5(A) to Table 5(F), the transmit end device may query a column of data corresponding to $K_{Diff}$, to directly obtain a value of $K_{Diff}$ in a corresponding scenario.

In addition, in the foregoing content, subtracting an unwanted bit from a data length of a code block is equivalent to reducing the data length of the code block. For example, refer to Table 2.11(B). A data length of a code block with a code length of 512 bits at the code rate 3/8 is originally 128 bits, but an actual data length becomes 100 bits after 28 unwanted bits are subtracted. In other words, at the code rate 3/8, 128 bits of information can be originally transmitted in one code block, but only 100 bits of information can be transmitted in one code block after unwanted bits are subtracted. This is equivalent to reducing an actual code rate of data. Certainly, the actual code rate is only a real code rate in an actual transmission process, and the originally configured code rate 3/8 remains unchanged, and rate matching still does not need to be performed.

Step 509: The transmit end device sends, to the receive end device, a message that carries the codewords obtained after the C code blocks are encoded.

Step 510: The receive end device determines, based on the total data length of the information bit and the preset first code rate, the quantity of the first code blocks and the quantity of the second code blocks corresponding to each non-largest code length.

In step 510, an operation performed by the receive end device corresponds to an operation performed by the transmit end device, and for a specific implementation process in which the receive end device determines the quantity of the first code blocks and the quantity of second code blocks corresponding to each non-largest code length, refer to step 502 to step 506 on the transmit end device side. Details are not described herein again.

Step 511: The receive end device obtains, based on the quantity of the first code blocks and the quantity of the second code blocks corresponding to each non-largest code length from the message that carries the codewords obtained after the C code blocks are encoded, the codewords obtained after the C code blocks are encoded.

In step 511, the receive end device may segment, in an order in which the transmit end device concatenates the codewords obtained after the C code blocks are encoded, a sequence that is in the message and that carries the codewords obtained after the C code blocks are encoded, to obtain a codeword obtained after each code block is encoded. An order of concatenating, by the transmit end device, the codewords obtained after the C code blocks are encoded may be preset or preconfigured for the receive end device, or sent by the transmit end device to the receive end device. In a possible example, it is assumed that the transmit end device obtains a sequence through concatenation in an order of a first code block 1 (with a data length of 384 bits and a code length of 1024 bits), a first code block 2 (with a data length of 384 bits and a code length of 1024 bits), and a second code block 1 (with a data length of 64 bits and a code length of 256 bits). In this case, after determining, according to a same segmentation rule as that of the transmit end device, that the sequence includes codewords corresponding to two first code blocks whose code lengths are 1024 bits and a codeword corresponding to one second code block whose code length is 256 bits, the receive end device may first obtain, from a start position of the sequence according to the foregoing concatenation order, a codeword whose code length is 1024 bits and use the codeword as a codeword corresponding to the 1st first code block (that is, the first code block 1), then obtain, starting from a next bit at an end position of the codeword corresponding to the 1st first code block, a codeword whose code length is 1024 bits and use the codeword as a codeword corresponding to the 2nd first code block (that is, the first code block 2), and then obtain, starting from a next bit at an end position of the codeword corresponding to the 2nd first code block, a codeword whose code length is 256 bits and use the codeword as a codeword corresponding to the second code block (that is, the second code block 1). Certainly, a codeword may alternatively be obtained reversely. For example, a codeword whose code length is 256 bits is obtained reversely from an end position of the sequence and is used as a codeword corresponding to the second code block (that is, the second code block 1). Then, a codeword whose code length is 1024 bits is obtained reversely from a previous bit at a start position of the codeword corresponding to the 1st second code block and is used as a codeword corresponding to the 2nd first code block (that is, the first code block 2). Then, a codeword whose code length is 1024 bits is obtained reversely from a previous bit at a start position of the codeword corresponding to the 2nd first code block and is used as a codeword corresponding to the 1st first code block (that is, the first code block 1). Certainly, a codeword may alternatively be obtained in another manner. For example, three code blocks are obtained simultaneously in one operation, or the 2nd first code block is obtained first, then the 1st first code block is obtained, and finally the 1st second code block is obtained. This is not specifically limited.

Step 512: The receive end device decodes the codewords obtained after the C code blocks are encoded, to obtain information bits and the first check code/second check code that are included in the C code blocks, and checks the information bits and the first check code/second check code that are included in the C code blocks.

In step 512, when determining a segmentation result according to the same segmentation rule as that of the transmit end device, the receive end device can further synchronously obtain the data length of the information bit, the data length of the check code, and/or the data length of the unwanted bit that are included in each code block. In this way, after obtaining each code block through decoding, the receive end device may obtain, based on the information, the information bit and/or the check code included in each code block. If the segmentation rule shown in (C) in FIG. 4 is used, the receive end device may obtain one first check code from each first code block, and obtain one second check code from all second code blocks. The receive end device may further check each first code block based on a generator polynomial corresponding to the first check code in each first code block, and check all the second code blocks based on a generator polynomial corresponding to the second check code included in all second code blocks.

For example, when a code block includes an unwanted bit, in a possible implementation, if the code block is adjusted in a manner of padding preset data before an information bit of the code block, a check code is added after the preset data and the information bit that are included in the code block. In this case, the check code is generated for the preset data and the information bit that are included in the code block. Therefore, after obtaining the code block through decoding, the receive end device may directly use a generator polynomial corresponding to the check code to divide the preset data, the information bit, and the check code that are included in the code block. When a remainder is 0, the information bit included in the code block is stored. When the remainder is not 0, retransmission is performed. In another possible implementation, if the code block is adjusted in a manner of padding the preset data at an end of the code block, a check code is added between an information bit and the preset data that are included in the code block. In this case, the check code is generated for the information bit included in the code block, and does not include check information for the preset data. Therefore, after obtaining the code block through decoding, the receive end device may first delete, from the code block, the preset data padded at an end (an amount of preset data may be synchronously obtained when the segmentation result is determined according to the segmentation rule), so that only the information bit and the check code remain in the code block, and then use a generator polynomial corresponding to the check code to divide the information bit and the check code that are included in the code block. When a remainder is 0, the information bit included in the code block is stored. When the remainder is not 0, retransmission is performed. In still another possible implementation, if the code block is adjusted in a manner of padding preset data behind an information bit included in the code block, a check code is added after the information bit and the preset data that are padded in the code block. In this case, the check code is generated for the information bit and the preset data that are included in the code block.

Therefore, after obtaining the code block through decoding, the receive end device may directly use a generator polynomial corresponding to the check code to divide the information bit, the preset data, and the check code that are included in the code block. When a remainder is 0, the information bit included in the code block is stored. When the remainder is not 0, retransmission is performed.

In Embodiment 2, a first check code is added to an end of each first code block with a largest code length, and a second check code is added to ends of all second code blocks with small code lengths, without adding a second check code to an end of each second code block. This not only reduces a transmitted data volume and encoding complexity, but also determines, during retransmission, a specific part of code blocks corresponding to the check codes to be retransmitted based on a check result of the check codes. This effectively reduces a retransmitted data volume and a retransmission delay, improves retransmission efficiency, and helps reduce power consumption and a retransmission delay. In addition, by setting a segmentation manner corresponding to the segment quantity-first rule and the bit quantity-first rule, a proper segmentation rule may be further selected based on an actual requirement. For example, the segment quantity-first rule is selected in a scenario in which more attention is paid to a transmission delay, to reduce a transmission delay by reducing a quantity of segments of a short code block. For another example, the bit quantity-first rule is selected in a scenario in which more attention is paid to an air interface loss, to reduce a quantity of unwanted bits through fine segmentation of the short code block, reduce an air interface loss, and effectively improve the adaptability of the data processing method to various encoding scenarios.

It should be noted that each example in Embodiment 2 is described by using a scenario in which a first order reduction threshold in Correspondence 1 is set as 1/8 as an example. For a scenario in which the first order reduction threshold in Correspondence 1 is set as 1/16 or another value, and for a scenario in which a second order reduction threshold in Correspondence 2 is set as any value, refer to the foregoing content for direct implementation. Details are not described one by one in this embodiment of this application.

It should be noted that, names of the foregoing information are merely examples. With evolution of communication technologies, the name of any foregoing information may be changed. However, regardless of how the names of the information change, provided that meanings of the information are the same as those of the information in this application, the information falls within the protection scope of this application.

The foregoing mainly describes the solutions provided in this application from a perspective of performing steps by a network element. It may be understood that, to implement the foregoing functions, the network element includes corresponding hardware structures and/or software modules for performing the functions. A person of ordinary skill in the art should easily be aware that, in combination with the examples described in embodiments disclosed in this specification, units and algorithm steps in the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

According to the foregoing methods, FIG. 6 is a schematic diagram of a structure of a data processing apparatus according to an embodiment of this application. As shown in FIG. 6, the data processing apparatus 600 may be a transmit end device, for example, a network device or a terminal device, or a chip or a circuit, for example, a chip or a circuit that may be disposed in a network device, or a chip or a circuit that may be disposed in a terminal device. Further, for example, the data processing apparatus 600 may be a vehicle or a chip or a circuit disposed in a vehicle. As shown in FIG. 6, the data processing apparatus 600 may include a segmentation parameter calculation module 601, a preliminary code block segmentation module 602, a check code encoding pre-processing module 603, a check code encoding module 604, a padding or deletion module 605, a small code block segmentation module 606, and a polar code encoding module 607. The following describes the functions of each module.

The segmentation parameter calculation module 601 is separately connected to the preliminary code block segmentation module 602 and the small code block segmentation module 606, and is configured to: calculate, in a manner in any one of Embodiment 1 or Embodiment 2 based on a total data length of an information bit, a preset or preconfigured data length of a preset first code rate at each code length, a preset or preconfigured length of a first check code, and a preset or preconfigured length of a second check code, a quantity $C_{10}$ of first code blocks and a quantity corresponding to each of L types of second code blocks, then send the quantity $C_{10}$ of the first code blocks and the quantity corresponding to each type of the L types of second code blocks to the preliminary code block segmentation module 602, and send the quantity corresponding to each type of the L types of second code blocks to the small code block segmentation module 606.

The preliminary code block segmentation module 602 is separately connected to the check code encoding pre-processing module 603 and the check code encoding module 604, and is configured to: segment the information bit based on the quantity $C_{10}$ of the first code blocks to obtain an information bit included in each first code block and a remaining information bit other than the information bit included in the first code block, send each information bit included in each first code block to the check code encoding module 604, and send the remaining information bit and the quantity corresponding to each type of the L types of second code blocks to the check code encoding pre-processing module 603.

The check code encoding pre-processing module 603 is connected to the check code encoding module 604, and is configured to: generate, based on the quantity corresponding to each type of the L types of second code blocks, a code block whose data length is a total data length of the L types of second code blocks, concatenate the remaining information bit and add the remaining information bit to the code block, and send the code block to the check code encoding module 604.

The check code encoding module 604 is separately connected to the padding or deletion module 605, the small code block segmentation module 606, and the polar code encoding module 607, and is configured to: calculate a first check code of the information bit that is included in each first code block and that is sent by the preliminary code block segmentation module 602 and concatenate the first check code to the end of the information bit included in the corresponding first code block, and for any first code block obtained through concatenation, if an unwanted bit exists in the first code block, send the first code block in which the unwanted bit exists to the padding or deletion module 605, or if no unwanted bit exists in the first code block, send the first code block to the polar code encoding module 607; and calculate a second check code of all information bits included in the added code block sent by the check code encoding pre-processing module 603 and concatenate the second check code to the end of all the information bits, and if the concatenated code block includes an unwanted bit, send the concatenated code block to the padding or deletion module 605, or if the concatenated code block does not include an unwanted bit, send the concatenated code block to the small code block segmentation module 606.

The padding or deletion module 605 is separately connected to the small code block segmentation module 606 and the polar code encoding module 607, and is configured to: pad, based on a data length of the unwanted bit that is included in the first code block and that is sent by the check code encoding module 604, a preset bit sequence of the data length before the information bit included in the first code block, and sent the padded first code block to the polar code encoding module 607, or send the first code block and a data length obtained by subtracting the data length of the unwanted bit from a data length of the first code block to the polar code encoding module 607; and pad, based on a data length of the unwanted bit that is included in the concatenated code block and that is sent by the check code encoding module 604, a preset bit sequence of the data length before the information bit included in the code block, and sent the padded code block to the small code block segmentation module 606, or send the code block and a data length obtained by subtracting the data length of the unwanted bit from a data length of the code block to the small code block segmentation module 606.

The small code block segmentation module 606 is connected to the polar code encoding module 607, and is configured to: segment, based on the quantity that is corresponding to each type of the L types of second code blocks and that is sent by the segmentation parameter calculation module 601, a code block obtained after the data length of the unwanted bit is padded or subtracted, and send each obtained second code block to the polar code encoding module 607.

The polar code encoding module 607 is configured to: perform polar code encoding on each first code block and each second code block, and send encoded data to a receive end.

It should be noted that, a position of each module in the data processing apparatus 600 is merely an example for description, and in this embodiment of this application, that each module needs to be in the illustrated position is not limited. For example, in another example, the padding or deletion module 605 may alternatively be located between the check code encoding pre-processing module 603 and the check code encoding module 604. In this case, the check code encoding pre-processing module 603 may send the concatenated code block to the padding or deletion module 605. The padding or deletion module 605 pads preset data of unwanted bits before the remaining information bit, and then sends the code block to the check code encoding module 604. The check code encoding module 604 generates a second check code corresponding to the remaining information bit, and then concatenates the second check code after the remaining information bit. For concepts, explanations, detailed descriptions, and other steps of the data processing apparatus 600 that are related to the technical solutions provided in embodiments of this application, refer to descriptions of the content in the foregoing methods or other embodiments. Details are not described herein again.

In addition, division of the modules in the data processing apparatus 600 is merely logical function division. During actual implementation, all or some of the modules may be integrated into one physical entity, or may be physically separated. For example, in this embodiment of this application, all functions of the segmentation parameter calculation module 601, the preliminary code block segmentation module 602, the check code encoding pre-processing module 603, the check code encoding module 604, the padding or deletion module 605, the small code block segmentation module 606, and the polar code encoding module 607 may alternatively be implemented by one or more processing modules. This is not specifically limited.

In addition, for a decoding operation of the receive end device, directly refer to the related description of the foregoing transmit end device. A difference lies only in that encoding is changed to decoding, and a check code comparison process is added. Details are not described again in this application.

According to the foregoing methods, FIG. 7 is an example of a schematic diagram of a structure of a communication apparatus according to an embodiment of this application. As shown in FIG. 7, the apparatus may be a transmit end device or a receive end device, for example, may be a network device or a terminal device, or a chip or a circuit, for example, a chip or a circuit that may be disposed in a network device, or a chip or a circuit that may be disposed in a terminal device. As shown in FIG. 7, the communication apparatus 701 may include a processor 702, a memory 704, and a transceiver 703, and may further include a bus system. The processor 702, the memory 704, and the transceiver 703 may be connected by using the bus system.

It should be understood that the processor 702 may be a chip. For example, the processor 702 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip.

During implementation, steps of the foregoing methods can be implemented by using a hardware integrated logic circuit in the processor 702, or by using instructions in a form of software. The steps of the methods disclosed with reference to embodiments of this application may be directly performed by using a hardware processor, or may be performed by using a combination of hardware and software modules in the processor 702. A software module may be located in a mature storage medium in the art, such as a random access memory, a flash memory, a read-only memory, a programmable read-only memory, an electrically erasable programmable memory, or a register. The storage medium is located in the memory 704, and the processor 702 reads information in the memory 704 and completes the steps of the foregoing methods in combination with hardware of the processor.

It should be noted that, the processor 702 in embodiments of this application may be an integrated circuit chip, and has a signal processing capability. During implementation, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed by using a hardware decoding processor, or may be performed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps of the foregoing methods in combination with hardware of the processor.

It may be understood that the memory 704 in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

When the communication apparatus 701 is a transmit end device, the communication apparatus 701 may include the processor 702, the transceiver 703, and the memory 704. The memory 704 is configured to store instructions. The processor 702 is configured to execute the instructions stored in the memory 704, to implement a solution related to the transmit end device in any one or more corresponding methods shown in FIG. 3 or FIG. 5A and FIG. 5B, or perform the method performed by the transmit end device in any embodiment shown in Embodiment 1 or Embodiment 2. For example, when the communication apparatus 701 is a transmit end device and Embodiment 1 is performed, the processor 702 may obtain an information bit, obtain C code blocks based on a total data length of the information bit and a preset first code rate, and encode the C code blocks to obtain codewords obtained after the C code blocks are encoded. The transceiver 703 may send the codewords obtained after the C code blocks are encoded. The C code blocks correspond to one or more code lengths, the one or more code lengths belong to S predefined or preconfigured code lengths, data lengths of the C code blocks correspond to the first code rate, each of the S code lengths meets a positive integer power of 2, S is a positive integer greater than or equal to 2, and C is a positive integer.

When the communication apparatus 701 is a receive end device, the communication apparatus 701 may include the processor 702, the transceiver 703, and the memory 704. The memory 704 is configured to store instructions. The processor 702 is configured to execute the instructions stored in the memory 704, to implement a solution related to the receive end device in any one or more corresponding methods shown in FIG. 3 or FIG. 5A and FIG. 5B, or perform the method performed by the receive end device in any embodiment shown in Embodiment 1 or Embodiment 2. For example, when the communication apparatus 701 is a receive end device and Embodiment 1 is performed, the transceiver 703 may receive codewords obtained after the C code blocks are encoded, and the processor 702 may decode, based on the total data length of the information bit and the preset first code rate, the codewords obtained after the C code blocks are encoded, to obtain information bits included in the C code blocks. The C code blocks correspond to one or more code lengths, the one or more code lengths belong to S predefined or preconfigured code lengths, data lengths of the C code blocks correspond to the first code rate, each of the S code lengths meets a positive integer power of 2, S is a positive integer greater than or equal to 2, and C is a positive integer.

For concepts, explanations, detailed descriptions, and other steps of the communication apparatus 701 that are related to the technical solutions provided in embodiments of this application, refer to the descriptions of the content in the foregoing methods or other embodiments. Details are not described herein again.

Based on the foregoing embodiments and a same concept, FIG. 8 is an example of a schematic diagram of a structure of a communication apparatus according to an embodiment of this application. As shown in FIG. 8, the communication apparatus 801 may be a transmit end device, for example, may be a network device or a terminal device, or may be a chip or a circuit, for example, a chip or a circuit that may be disposed in a network device, or a chip or a circuit that may be disposed in a terminal device. The communication apparatus may implement steps performed by the transmit end device in any one or more corresponding methods shown in FIG. 3 or FIG. 5A and FIG. 5B, or perform the method performed by the transmit end device in any embodiment shown in Embodiment 1 or Embodiment 2.

As shown in FIG. 8, the communication apparatus 801 may include an obtaining unit 802, a processing unit 803, and a sending unit 804. When the communication apparatus 801 is a transmit end device and Embodiment 1 is performed, the obtaining unit 802 may obtain an information bit. The processing unit 803 may obtain C code blocks based on a total data length of the information bit and a preset first code rate, and encode the C code blocks to obtain codewords obtained after the C code blocks are encoded. The sending unit 804 may send the codewords obtained after the C code blocks are encoded to a receive end device. The C code blocks correspond to one or more code lengths, the one or more code lengths belong to S predefined or preconfigured code lengths, data lengths of the C code blocks correspond to the first code rate, each of the S code lengths meets a positive integer power of 2, S is a positive integer greater than or equal to 2, and C is a positive integer.

For example, the communication apparatus 801 may further include a storage unit. The storage unit is configured to store computer instructions. The obtaining unit 802 and the processing unit 803 are separately communicatively connected to the storage unit. The obtaining unit 802 and the processing unit 803 separately execute the computer instructions stored in the storage unit, so that the communication apparatus 801 may be configured to perform the method performed by the transmit end device in any embodiment shown in Embodiment 1 or Embodiment 2. The obtaining unit 802 and the processing unit 803 may be a general-purpose central processing unit (CPU), a microprocessor, or an application-specific integrated circuit (application-specific integrated circuit, ASIC). Optionally, the storage unit is a storage unit in the chip, for example, a register or a cache, or the storage unit may be a storage unit in the communication apparatus 801 but outside the chip, for example, a read-only memory (read-only memory, ROM) or another type of static storage device capable of storing static information and instructions, or a random access memory (random access memory, RAM).

For concepts, explanations, detailed descriptions, and other steps of the communication apparatus 801 that are related to the technical solutions provided in embodiments of this application, refer to the descriptions of the content in the foregoing methods or other embodiments. Details are not described herein again.

Based on the foregoing embodiments and a same concept, FIG. 9 is an example of a schematic diagram of a structure of a communication apparatus according to an embodiment of this application. As shown in FIG. 9, the communication apparatus 901 may be a receive end device, for example, may be a network device or a terminal device, or may be a chip or a circuit, for example, a chip or a circuit that may be disposed in a network device, or a chip or a circuit that may be disposed in a terminal device. The communication apparatus may implement steps performed by the receive end device in any one or more corresponding methods shown in FIG. 3 or FIG. 5A and FIG. 5B, or perform the method performed by the receive end device in any embodiment shown in Embodiment 1 or Embodiment 2.

As shown in FIG. 9, the communication apparatus 901 may include a receiving unit 902 and a processing unit 903. When the communication apparatus 901 is a receive end device and Embodiment 1 is performed, the receiving unit 902 may receive codewords that are obtained after C code blocks are encoded and that are sent by a transmit end device, and the processing unit 903 may decode, based on a total data length of an information bit and a preset first code rate, the codewords obtained after the C code blocks are encoded, to obtain information bits included in the C code blocks. The C code blocks correspond to one or more code lengths, the one or more code lengths belong to S predefined or preconfigured code lengths, data lengths of the C code blocks correspond to the first code rate, each of the S code lengths meets a positive integer power of 2, S is a positive integer greater than or equal to 2, and C is a positive integer.

For example, the communication apparatus 901 may further include a storage unit. The storage unit is configured to store computer instructions. The processing unit 903 is communicatively connected to the storage unit. The processing unit 903 executes the computer instructions stored in the storage unit, so that the communication apparatus 901 may be configured to perform the method performed by the receive end device in any embodiment shown in Embodiment 1 or Embodiment 2. The processing unit 903 may be a general-purpose central processing unit (CPU), a microprocessor, or an application-specific integrated circuit (application-specific integrated circuit, ASIC). Optionally, the storage unit is a storage unit in the chip, for example, a register or a cache, or the storage unit may be a storage unit in the communication apparatus 901 but outside the chip, for example, a read-only memory (read-only memory, ROM) or another type of static storage device capable of storing static information and instructions, or a random access memory (random access memory, RAM).

For concepts, explanations, detailed descriptions, and other steps of the communication apparatus 901 that are related to the technical solutions provided in embodiments of this application, refer to the descriptions of the content in the foregoing methods or other embodiments. Details are not described herein again.

It should be understood that division into units of the communication apparatus 801 and the communication apparatus 901 is merely logical function division. During actual implementation, all or some of the units may be integrated into one physical entity, or may be physically separated. In embodiments of this application, the sending unit 804 and the receiving unit 902 may be implemented by the transceiver 703 in FIG. 7, and the obtaining unit 802, the processing unit 803, and the processing unit 903 may be implemented by the processor 702 in FIG. 7.

According to the methods provided in embodiments of this application, this application further provides a computer program product. The computer program product includes computer program code. When the computer program code runs on a computer, the computer is enabled to perform the method performed by the transmit end device in any embodiment shown in FIG. 3 or FIG. 5A and FIG. 5B, or perform the method performed by the receive end device in any embodiment shown in FIG. 3 or FIG. 5A and FIG. 5B.

According to the methods provided in embodiments of this application, this application further provides a computer-readable storage medium. The computer-readable medium stores program code. When the program code is run on a computer, the computer is enabled to perform the method performed by the transmit end device in any embodiment shown in FIG. 3 or FIG. 5A and FIG. 5B, or perform the method performed by the receive end device in any embodiment shown in FIG. 3 or FIG. 5A and FIG. 5B.

According to the methods provided in embodiments of this application, this application further provides a terminal device. The terminal device may be any terminal device having a communication function, for example, may be a terminal device in a communication system that performs short-range communication. The terminal device may perform the method performed by the transmit end device in any embodiment shown in FIG. 3 or FIG. 5A and FIG. 5B, or perform the method performed by the receive end device in any embodiment shown in FIG. 3 or FIG. 5A and FIG. 5B. Examples of some terminal devices include but are not limited to: smart home devices (such as a television, a floor-sweeping robot, a smart desk lamp, a speaker system, an intelligent light system, an electric appliance control system, home background music, a home theater system, an intercom system, and video surveillance), intelligent transportation devices (such as a car, a ship, an uncrewed aerial vehicle, a train, a van, and a truck), intelligent manufacturing devices (such as a robot, an industrial device, intelligent logistics, and an intelligent factory), and intelligent terminals (such as a mobile phone, a computer, a tablet computer, a palmtop computer, a desktop computer, a headset, a speaker, a wearable device, a vehicle-mounted device, a virtual reality device, and an augmented reality device).

According to the methods provided in embodiments of this application, this application further provides a communication system, including the foregoing transmit end device and the foregoing receive end device. The transmit end device may perform the method performed by the transmit end device in any embodiment shown in FIG. 3 or FIG. 5A and FIG. 5B. The receive end device may perform the method performed by the receive end device in any embodiment shown in FIG. 3 or FIG. 5A and FIG. 5B.

All or a part of the foregoing embodiments may be implemented by using software, hardware, firmware, or any combination thereof. When software is used for implementation, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, vehicle management server, or data center to another website, computer, vehicle management server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a vehicle management server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data processing method, comprising:

   obtaining a total data length of an information bit; and
   obtaining C code blocks based on the total data length of the information bit and a preset first code rate, wherein the C code blocks correspond to one or more code lengths, the one or more code lengths belong to S predefined or preconfigured code lengths, data lengths of the C code blocks correspond to the first code rate, each of the S code lengths meets a positive integer power of 2, S is a positive integer greater than or equal to 2, and C is a positive integer.

2. The method according to claim 1, wherein for the first code rate, each of the S code lengths corresponds to a predefined or preconfigured data length, and the code length and the data length meet one or more of the following:

   a value of a data length corresponding to a largest code length in the S code lengths is a product of the first code rate and the largest code length; and
   a value of a data length corresponding to a non-largest code length in the S code lengths is a product of a second code rate and the non-largest code length, and the second code rate is less than the first code rate.

3. The method according to claim 2, wherein

   the first code rate is a smallest code rate in T predefined or preconfigured code rates, and the second code rate is a difference between the first code rate and a first preset order reduction threshold; or the first code rate is a non-smallest code rate in T predefined or preconfigured code rates, and the second code rate is an upper-order code rate less than the first code rate, wherein T is a positive integer greater than or equal to 2;
   the second code rate is a difference between the first code rate and a second preset order reduction threshold corresponding to the first code rate; or
   the second code rate is a product of the first code rate and a preset code rate proportion corresponding to the first code rate, and the preset code rate proportion is greater than 0 and less than 1.

4. The method according to any one of claims 1 to 3, wherein the C code blocks comprise:

   $C_{10}$ first code blocks, wherein a code length of each first code block is the largest code length in the S code lengths, and each first code block comprises a first check code for an information bit comprised in the first code block; and/or
   $C_{20}$ second code blocks, wherein a code length of any second code block is a non-largest code length in the S code lengths, and the $C_{20}$ second code blocks comprise a second check code for all information bits comprised in the $C_{20}$ second code blocks, wherein
   $C_{10}$ is a positive integer, and $C_{20}$ is an integer greater than or equal to 0; or $C_{10}$ is an integer greater than or equal to 0, and $C_{20}$ is a positive integer.

5. The method according to claim 4, wherein for the first code rate, each of the S code lengths corresponds to a predefined or preconfigured data length; and
   $C_{10}$ and $C_{20}$ are obtained based on the total data length of the information bit and a data length of the information bit comprised in each first code block, and the data length of the information bit comprised in each first code block is a difference between the data length corresponding to the largest code length and a data length of the first check code.

6. The method according to claim 5, wherein a ratio of the total data length of the information bit to the data length of the information bit comprised in each first code block is an integer, $C_{10}$ is the ratio, and $C_{20}$ is 0.

7. The method according to claim 5, wherein a ratio of the total data length of the information bit to the data length of the information bit comprised in each first code block is not an integer;

   $C_{10}$ is an integer part of the ratio; and
   the $C_{20}$ second code blocks comprise L types of second code blocks, the L types of second code blocks correspond to L non-largest code lengths in the S code lengths, L is a positive integer less than or equal to S-1, a data length of each type of the L types of second code blocks is a data length corresponding to a corresponding non-largest code length, a quantity of the L types of second code blocks is obtained based on a data length of remaining to-be-segmented data and data lengths of the L types of second code blocks, the data length of the remaining to-be-segmented data is a sum of a data length of a remaining information bit and a data length of the second check code, and the data length of the remaining information bit is a difference between the total data length of the information bit and a data length of information bits comprised in the $C_{10}$ first code blocks.

8. The method according to claim 7, wherein the quantity of the L types of second code blocks is determined based on an estimated quantity of code blocks corresponding to a smallest code length and a relative relationship between the data lengths of the L types of second code blocks and a data length corresponding to the smallest code length, and the estimated quantity of the code blocks corresponding to the smallest code length is a smallest integer greater than or equal to a ratio of the data length of the remaining to-be-segmented data to the data length corresponding to the smallest code length.

9. The method according to claim 8, wherein the quantity of the L types of second code blocks is determined in descending order of the L corresponding non-largest code lengths, and for each type of the L types of second code blocks:
   a quantity of the second code blocks is an integer in a ratio of a remaining estimated quantity of code blocks corresponding to the smallest code length to a first ratio, the first ratio is a ratio of a data length of the second code block to the data length corresponding to the smallest code length, the remaining estimated quantity of the code blocks corresponding to the smallest code length is a difference between the estimated quantity of the code blocks corresponding to the smallest code length and a product of a second ratio and a quantity of second code blocks corresponding to another non-largest code length that is greater than a non-largest code length corresponding to the second code block, and the second ratio is a ratio of a data length of the second code block corresponding to the another non-largest code length to the data length corresponding to the smallest code length.

10. The method according to claim 8, wherein the quantity of the L types of second code blocks is determined based on L values that are not 0 in binary data of the estimated quantity of the code blocks corresponding to the smallest code length, and values of the binary data from a low-order bit to a high-order bit are in a one-to-one correspondence with S-1 non-largest code lengths that are in ascending order.

11. The method according to claim 8, wherein the quantity of the L types of second code blocks is obtained based on the estimated quantity of the code blocks corresponding to the smallest code length and a preset correspondence among a code length, a code rate, a data length, a quantity of code blocks, and an estimated quantity, and the correspondence is preset or preconfigured based on a relative relationship between preset or preconfigured data lengths corresponding to S-1 non-largest code lengths and the data length corresponding to the smallest code length.

12. The method according to any one of claims 7 to 11, wherein

   the data length of the remaining to-be-segmented data is not greater than a preset or preconfigured data length threshold; or
   the estimated quantity of the code blocks corresponding to the smallest code length is not greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

13. The method according to claim 5, wherein a ratio of the total data length of the information bit to the data length of the information bit comprised in each first code block is not an integer; and
$C_{10}$ is a smallest integer greater than the ratio, and $C_{20}$ is 0.

**14.** The method according to claim 13, wherein

a data length of remaining to-be-segmented data is greater than a preset or preconfigured data length threshold; or
an estimated quantity of code blocks corresponding to a smallest code length is greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

**15.** The method according to any one of claims 4 to 14, wherein
after the obtaining C code blocks based on the total data length of the information bit and a preset first code rate, the method further comprises:

encoding the C code blocks to obtain codewords obtained after the C code blocks are encoded; and
sending the codewords obtained after the C code blocks are encoded.

**16.** The method according to claim 15, wherein after the obtaining C code blocks based on the total data length of the information bit and a preset first code rate, and before the encoding the C code blocks to obtain codewords obtained after the C code blocks are encoded, the method further comprises:
when a difference between a total data length of the C code blocks and a valid data length is not zero, adjusting the $C_{10}$ first code blocks and/or the $C_{20}$ second code blocks, wherein the valid data length is a sum of the total data length of the information bit, a data length of $C_{10}$ first check codes, and the data length of the second check code.

**17.** The method according to claim 16, wherein $C_{10}$ adjusted first code blocks or $C_{20}$ adjusted second code blocks meet one or more of the following content:

one or more first code blocks in the $C_{10}$ adjusted first code blocks comprise preset data;
a data length of one or more first code blocks in the $C_{10}$ adjusted first code blocks is less than a preset or preconfigured data length corresponding to the largest code length;
one or more second code blocks in the $C_{20}$ adjusted second code blocks comprise preset data; or
a data length of one or more second code blocks in the $C_{20}$ adjusted second code blocks is less than a preset or preconfigured data length corresponding to the non-largest code length corresponding to the second code block.

**18.** The method according to claim 17, wherein the preset data is located before an information bit comprised in a last adjusted first code block, or is located before information bits comprised in the $C_{20}$ adjusted second code blocks.

**19.** The method according to any one of claims 4 to 14, wherein
before the obtaining C code blocks based on the total data length of the information bit and a preset first code rate, the method further comprises:

receiving codewords obtained after the C code blocks are encoded; and
the obtaining C code blocks based on the total data length of the information bit and a preset first code rate comprises:
decoding, based on the total data length of the information bit and the first code rate, the codewords obtained after the C code blocks are encoded, to obtain information bits comprised in the C code blocks.

**20.** The method according to claim 19, wherein the method further comprises:
obtaining, based on the total data length of the information bit and the first code rate, the information bit and the first check code that are comprised in each of the $C_{10}$ first code blocks, and checking the information bit and the first check code that are comprised in each first code block; and/or obtaining the information bits and the second check code that are comprised in the $C_{20}$ second code blocks, and checking the information bits and the second check code that are comprised in the $C_{20}$ second code blocks.

**21.** A communication apparatus, comprising:

an obtaining unit, configured to obtain a total data length of an information bit; and
a processing unit, configured to obtain C code blocks based on the total data length of the information bit and a preset first code rate, wherein the C code blocks correspond to one or more code lengths, the one or more code lengths belong to S predefined or preconfigured code lengths, data lengths of the C code blocks correspond to the first code rate, each of the S code lengths meets a positive integer power of 2, S is a positive integer greater than or equal to 2, and C is a positive integer.

**22.** The communication apparatus according to claim 21, wherein for the first code rate, each of the S code lengths corresponds to a predefined or preconfigured data length, and the code length and the data length meet one or more of the following:

a value of a data length corresponding to a largest code length in the S code lengths is a product of the first code rate and the largest code length; and
a value of a data length corresponding to a non-largest code length in the S code lengths is a product of a second code rate and the non-largest code length, and the second code rate is less than the first code rate.

**23.** The communication apparatus according to claim 22, wherein

the first code rate is a smallest code rate in T predefined or preconfigured code rates, and the second code rate is a difference between the first code rate and a first preset order reduction threshold; or the first code rate is a non-smallest code rate in T predefined or preconfigured code rates, and the second code rate is an upper-order code rate less than the first code rate;
the second code rate is a difference between the first code rate and a second preset order reduction threshold corresponding to the first code rate; or
the second code rate is a product of the first code rate and a preset code rate proportion corresponding to the first code rate, and the preset code rate proportion is greater than 0 and less than 1.

**24.** The communication apparatus according to any one of claims 21 to 23, wherein the C code blocks comprise:

$C_{10}$ first code blocks, wherein a code length of each first code block is the largest code length in the S code lengths, and each first code block comprises a first check code for an information bit comprised in the first code block; and/or
$C_{20}$ second code blocks, wherein a code length of any second code block is a non-largest code length in the S code lengths, and the $C_{20}$ second code blocks comprise a second check code for all information bits comprised in the $C_{20}$ second code blocks, wherein
$C_{10}$ is a positive integer, and $C_{20}$ is an integer greater than or equal to 0; or $C_{10}$ is an integer greater than or equal to 0, and $C_{20}$ is a positive integer.

**25.** The communication apparatus according to claim 24, wherein for the first code rate, each of the S code lengths corresponds to a predefined or preconfigured data length; and
$C_{10}$ and $C_{20}$ are obtained based on the total data length of the information bit and a data length of the information bit comprised in each first code block, and the data length of the information bit comprised in each first code block is a difference between the data length corresponding to the largest code length and a data length of the first check code.

**26.** The communication apparatus according to claim 25, wherein a ratio of the total data length of the information bit to the data length of the information bit comprised in each first code block is an integer, $C_{10}$ is the ratio, and $C_{20}$ is 0.

**27.** The communication apparatus according to claim 25, wherein a ratio of the total data length of the information bit to the data length of the information bit comprised in each first code block is not an integer;

$C_{10}$ is an integer part of the ratio; and
the $C_{20}$ second code blocks comprise L types of second code blocks, the L types of second code blocks correspond to L non-largest code lengths in the S code lengths, L is a positive integer less than or equal to S-1, a data length of each type of the L types of second code blocks is a data length corresponding to a corresponding non-largest code length, a quantity of the L types of second code blocks is obtained based on a data length of remaining to-be-segmented data and data lengths of the L types of second code blocks, the data length of the remaining to-be-segmented data is a sum of a data length of a remaining information bit and a data length of the second check code, and the data length of the remaining information bit is a difference between the total data length of the information bit and a data length of information bits comprised in the $C_{10}$ first code blocks.

**28.** The communication apparatus according to claim 27, wherein the quantity of the L types of second code blocks is determined based on an estimated quantity of code blocks corresponding to a smallest code length and a relative relationship between the data lengths of the L types of second code blocks and a data length corresponding to the smallest code length, and the estimated quantity of the code blocks corresponding to the smallest code length is a smallest integer greater than or equal to a ratio of the data length of the remaining to-be-segmented data to the data length corresponding to the smallest code length.

**29.** The communication apparatus according to claim 28, wherein the quantity of the L types of second code blocks is determined in descending order of the L corresponding non-largest code lengths, and for each type of the L types of second code blocks:
a quantity of the second code blocks is an integer in a ratio of a remaining estimated quantity of code blocks corresponding to the smallest code length to a first ratio, the first ratio is a ratio of a data length of the second code block to the data length corresponding to the smallest code length, the remaining estimated quantity of the code blocks corresponding to the smallest code length is a difference between the estimated quantity of the code blocks corresponding to the smallest code length and a product of a second ratio and a quantity of second code blocks corresponding to another non-largest code length that is greater than a non-largest code length corresponding to the second code block, and the second ratio is a ratio of a data length of the second code block corresponding to the another non-largest code length to the data length corresponding to the smallest code length.

**30.** The communication apparatus according to claim 28, wherein the quantity of the L types of second code blocks is determined based on L values that are not 0 in binary data of the estimated quantity of the code blocks corresponding to the smallest code length, and values of the binary data from a low-order bit to a high-order bit are in a one-to-one correspondence with S-1 non-largest code lengths that are in ascending order.

**31.** The communication apparatus according to claim 28, wherein the quantity of the L types of second code blocks is obtained based on the estimated quantity of the code blocks corresponding to the smallest code length and a preset correspondence among a code length, a code rate, a data length, a quantity of code blocks, and an estimated quantity, and the correspondence is preset or preconfigured based on a relative relationship between preset or preconfigured data lengths corresponding to S-1 non-largest code lengths and the data length corresponding to the smallest code length.

**32.** The communication apparatus according to any one of claims 27 to 31, wherein

the data length of the remaining to-be-segmented data is not greater than a preset or preconfigured data length threshold; or
the estimated quantity of the code blocks corresponding to the smallest code length is not greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

**33.** The communication apparatus according to claim 25, wherein a ratio of the total data length of the information bit to the data length of the information bit comprised in each first code block is not an integer; and
$C_{10}$ is a smallest integer greater than the ratio, and $C_{20}$ is 0.

**34.** The communication apparatus according to claim 33, wherein

a data length of remaining to-be-segmented data is greater than a preset or preconfigured data length threshold; or
an estimated quantity of code blocks corresponding to a smallest code length is greater than a preset or preconfigured quantity threshold, and the estimated quantity of the code blocks corresponding to the smallest code length is a smallest integer greater than or equal to a ratio of the data length of the remaining to-be-segmented data to a preset or preconfigured data length corresponding to the smallest code length.

**35.** The communication apparatus according to any one of claims 24 to 34, wherein the communication apparatus further comprises a sending unit; and

after the processing unit obtains the C code blocks based on the total data length of the information bit and the preset first code rate,

the processing unit is further configured to encode the C code blocks to obtain codewords obtained after the C code blocks are encoded, and

the sending unit is configured to send the codewords obtained after the C code blocks are encoded.

**36.** The communication apparatus according to claim 35, wherein after obtaining the C code blocks based on the total data length of the information bit and the preset first code rate, the processing unit is further configured to: when a difference between a total data length of the C code blocks and a valid data length is not zero, adjust the $C_{10}$ first code blocks and/or the $C_{20}$ second code blocks, wherein the valid data length is a sum of the total data length of the information bit, a data length of $C_{10}$ first check codes, and the data length of the second check code.

**37.** The communication apparatus according to claim 36, wherein $C_{10}$ adjusted first code blocks or $C_{20}$ adjusted second code blocks meet one or more of the following content:

one or more first code blocks in the $C_{10}$ adjusted first code blocks comprise preset data;

a data length of one or more first code blocks in the $C_{10}$ adjusted first code blocks is less than a preset or preconfigured data length corresponding to the largest code length;

one or more second code blocks in the $C_{20}$ adjusted second code blocks comprise preset data; or

a data length of one or more second code blocks in the $C_{20}$ adjusted second code blocks is less than a preset or preconfigured data length corresponding to the non-largest code length corresponding to the second code block.

**38.** The communication apparatus according to claim 37, wherein the preset data is located before an information bit comprised in a last adjusted first code block, or is located before information bits comprised in the $C_{20}$ adjusted second code blocks.

**39.** The communication apparatus according to any one of claims 24 to 34, wherein the communication apparatus further comprises a receiving unit;

before the processing unit obtains the C code blocks based on the total data length of the information bit and the preset first code rate, the receiving unit is configured to receive codewords obtained after the C code blocks are encoded; and

the processing unit is specifically configured to decode, based on the total data length of the information bit and the first code rate, the codewords obtained after the C code blocks are encoded, to obtain information bits comprised in the C code blocks.

**40.** The communication apparatus according to claim 39, wherein the processing unit is further configured to: obtain, based on the total data length of the information bit and the first code rate, the information bit and the first check code that are comprised in each of the $C_{10}$ first code blocks, and check the information bit and the first check code that are comprised in each first code block; and/or obtain the information bits and the second check code that are comprised in the $C_{20}$ second code blocks, and check the information bits and the second check code that are comprised in the $C_{20}$ second code blocks.

**41.** A communication apparatus, comprising at least one processor and an interface circuit, wherein the interface circuit is configured to provide data or code instructions for the at least one processor, and the at least one processor is configured to implement the method according to any one of claims 1 to 18 or implement the method according to any one of claims 1 to 14, 19, and 20 by using a logic circuit or executing the code instructions.

**42.** A communication system, comprising a transmit end device and a receive end device, wherein the transmit end device is configured to perform the method according to any one of claims 1 to 18, and the receive end device is configured to perform the method according to any one of claims 1 to 14, 19, and 20.

**43.** A computer-readable storage medium, wherein the computer-readable storage medium stores a computer program, and when the computer program is run, the method according to any one of claims 1 to 18 is performed, or the method according to any one of claims 1 to 14, 19, and 20 is performed.

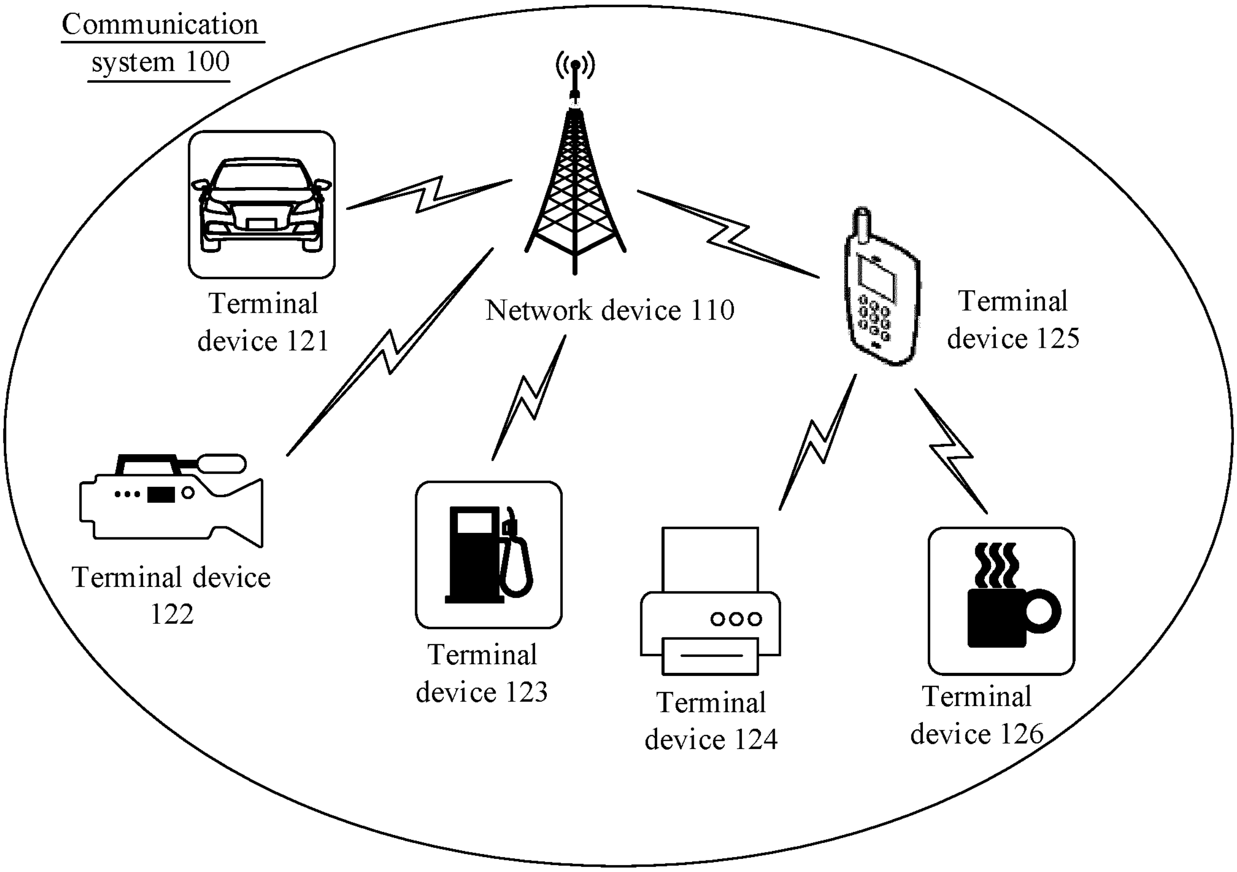
Communication system 100
Network device 110
Terminal device 121
Terminal device 122
Terminal device 123
Terminal device 124
Terminal device 125
Terminal device 126

FIG. 1

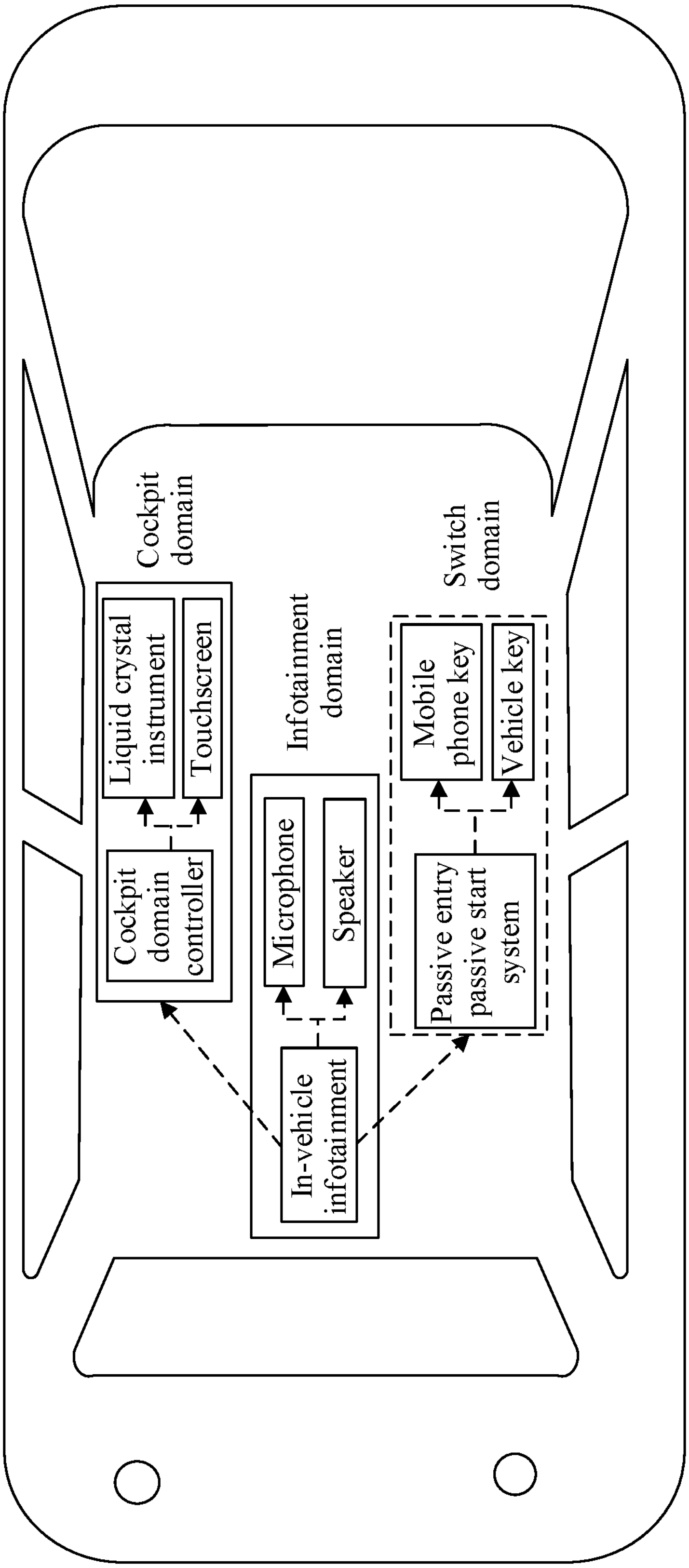
Cockpit domain
Liquid crystal instrument
Touchscreen
Cockpit domain controller
Infotainment domain
Microphone
Speaker
In-vehicle infotainment
Switch domain
Mobile phone key
Vehicle key
Passive entry passive start system

FIG. 2

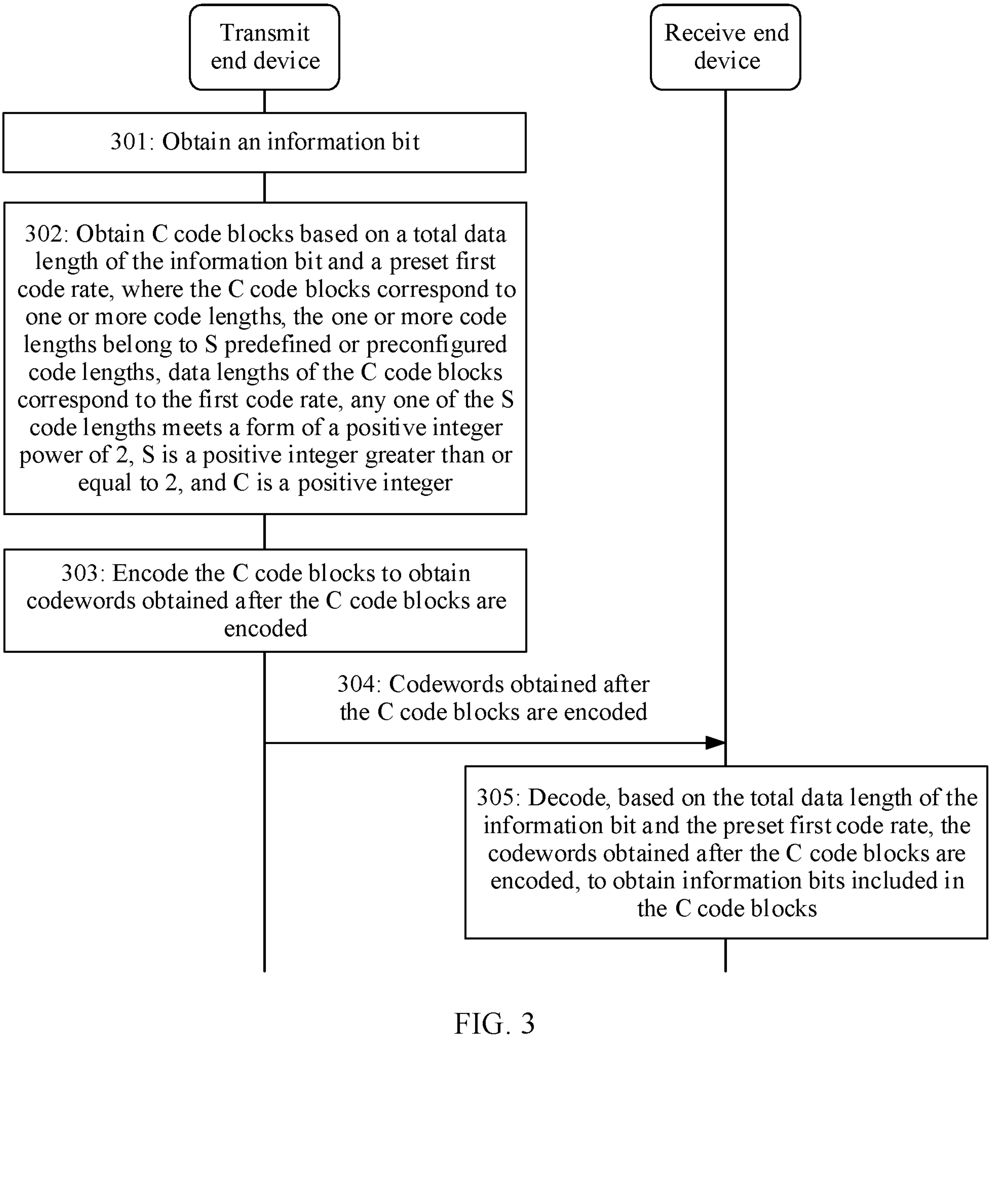
Transmit end device
Receive end device
301: Obtain an information bit
302: Obtain C code blocks based on a total data length of the information bit and a preset first code rate, where the C code blocks correspond to one or more code lengths, the one or more code lengths belong to S predefined or preconfigured code lengths, data lengths of the C code blocks correspond to the first code rate, any one of the S code lengths meets a form of a positive integer power of 2, S is a positive integer greater than or equal to 2, and C is a positive integer
303: Encode the C code blocks to obtain codewords obtained after the C code blocks are encoded
304: Codewords obtained after the C code blocks are encoded
305: Decode, based on the total data length of the information bit and the preset first code rate, the codewords obtained after the C code blocks are encoded, to obtain information bits included in the C code blocks

FIG. 3

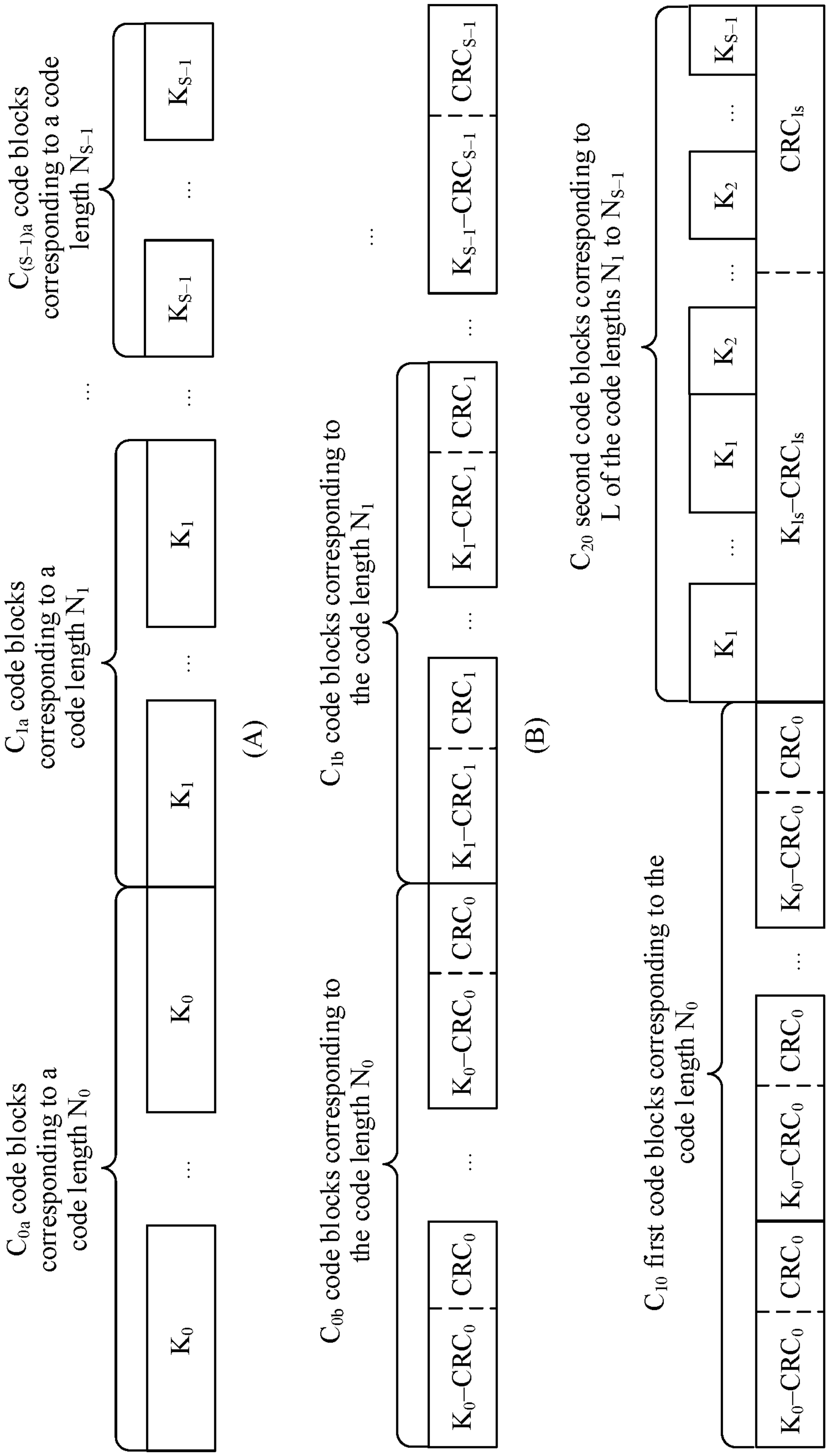
$C_{0a}$ code blocks corresponding to a code length $N_0$
$C_{1a}$ code blocks corresponding to a code length $N_1$
$C_{(S-1)a}$ code blocks corresponding to a code length $N_{S-1}$
$K_0$
$K_1$
$K_{S-1}$
(A)
$C_{0b}$ code blocks corresponding to the code length $N_0$
$C_{1b}$ code blocks corresponding to the code length $N_1$
$K_0-CRC_0$
$CRC_0$
$K_1-CRC_1$
$CRC_1$
$K_{S-1}-CRC_{S-1}$
$CRC_{S-1}$
(B)
$C_{10}$ first code blocks corresponding to the code length $N_0$
$C_{20}$ second code blocks corresponding to L of the code lengths $N_1$ to $N_{S-1}$
$K_0-CRC_0$
$CRC_0$
$K_1$
$K_2$
$K_{S-1}$
$K_{1s}-CRC_{1s}$
$CRC_{1s}$
(C)

FIG. 4

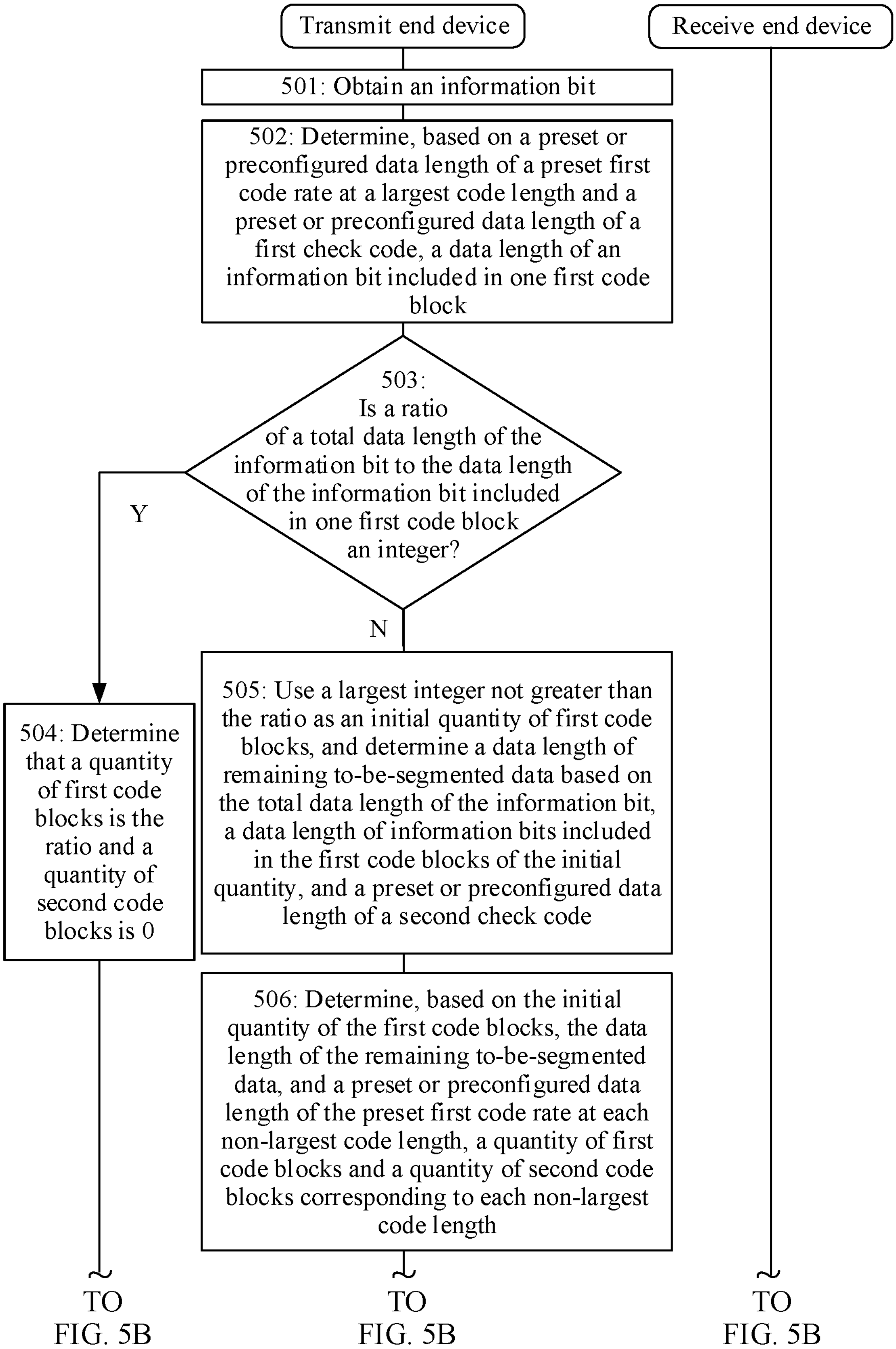
Transmit end device
Receive end device
501: Obtain an information bit
502: Determine, based on a preset or preconfigured data length of a preset first code rate at a largest code length and a preset or preconfigured data length of a first check code, a data length of an information bit included in one first code block
503: Is a ratio of a total data length of the information bit to the data length of the information bit included in one first code block an integer?
Y
N
504: Determine that a quantity of first code blocks is the ratio and a quantity of second code blocks is 0
505: Use a largest integer not greater than the ratio as an initial quantity of first code blocks, and determine a data length of remaining to-be-segmented data based on the total data length of the information bit, a data length of information bits included in the first code blocks of the initial quantity, and a preset or preconfigured data length of a second check code
506: Determine, based on the initial quantity of the first code blocks, the data length of the remaining to-be-segmented data, and a preset or preconfigured data length of the preset first code rate at each non-largest code length, a quantity of first code blocks and a quantity of second code blocks corresponding to each non-largest code length
TO FIG. 5B
TO FIG. 5B
TO FIG. 5B

FIG. 5A

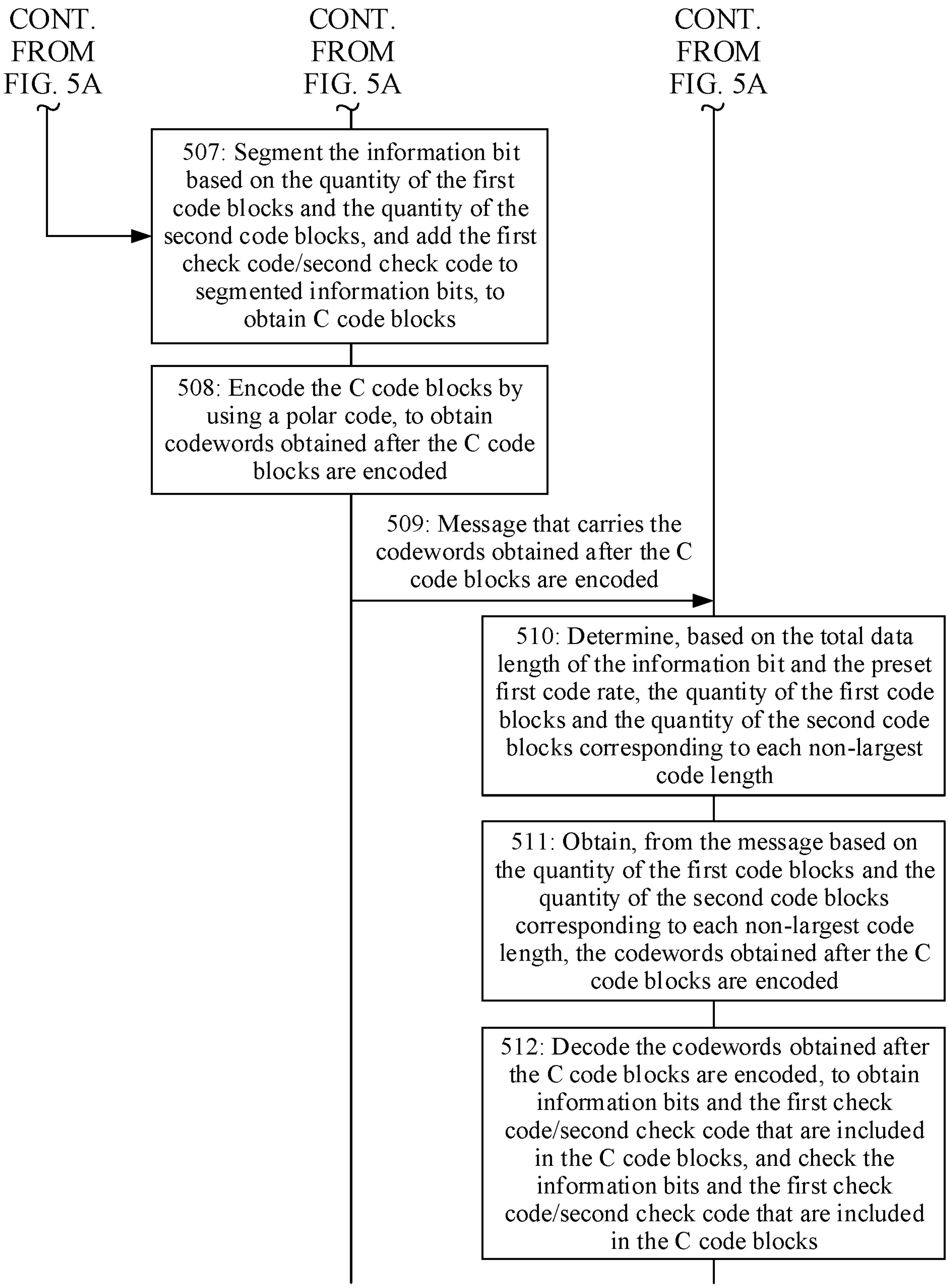
CONT. FROM FIG. 5A
CONT. FROM FIG. 5A
CONT. FROM FIG. 5A
507: Segment the information bit based on the quantity of the first code blocks and the quantity of the second code blocks, and add the first check code/second check code to segmented information bits, to obtain C code blocks
508: Encode the C code blocks by using a polar code, to obtain codewords obtained after the C code blocks are encoded
509: Message that carries the codewords obtained after the C code blocks are encoded
510: Determine, based on the total data length of the information bit and the preset first code rate, the quantity of the first code blocks and the quantity of the second code blocks corresponding to each non-largest code length
511: Obtain, from the message based on the quantity of the first code blocks and the quantity of the second code blocks corresponding to each non-largest code length, the codewords obtained after the C code blocks are encoded
512: Decode the codewords obtained after the C code blocks are encoded, to obtain information bits and the first check code/second check code that are included in the C code blocks, and check the information bits and the first check code/second check code that are included in the C code blocks

FIG. 5B

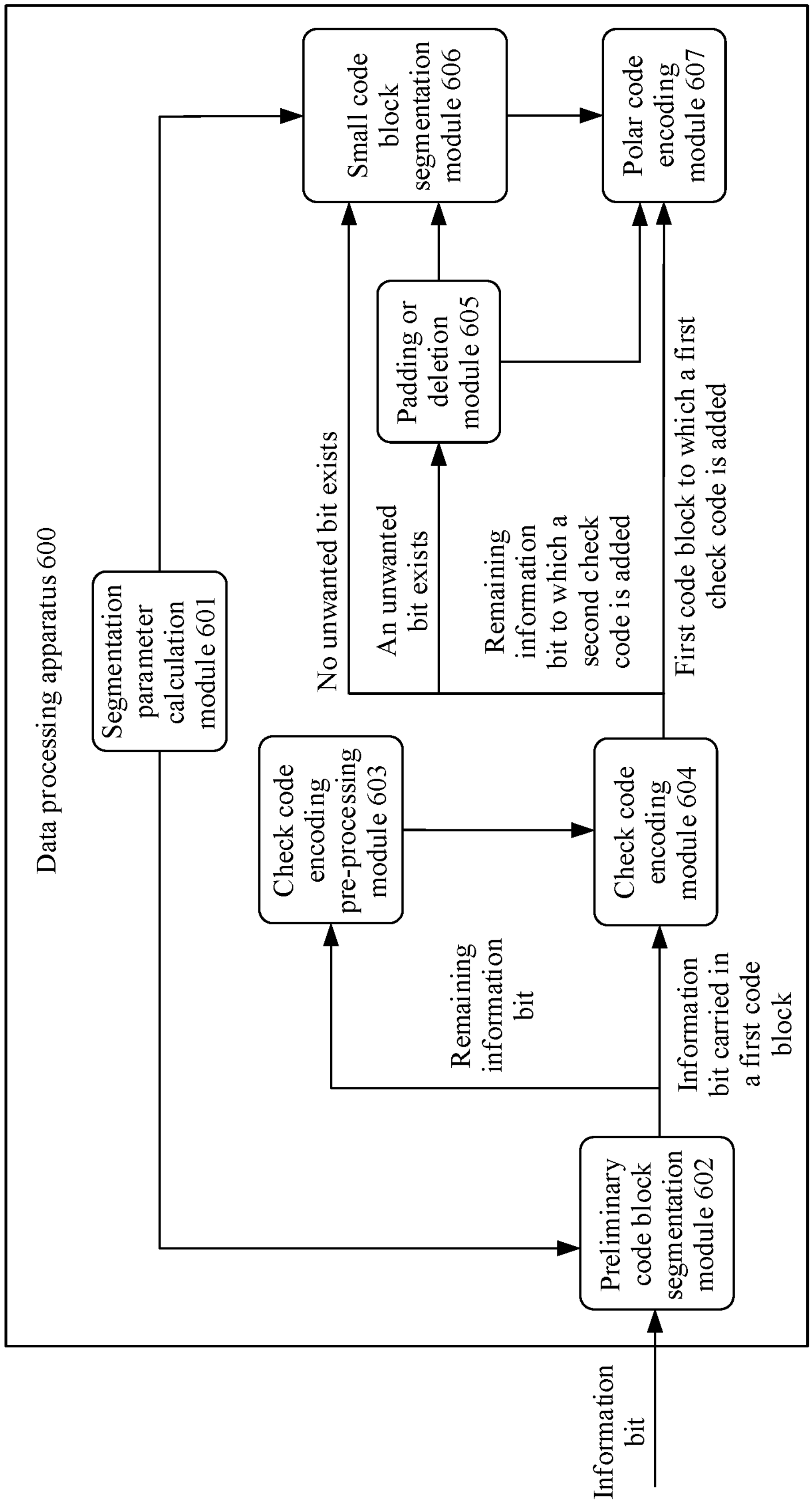
Data processing apparatus 600
Information bit
Segmentation parameter calculation module 601
Preliminary code block segmentation module 602
Remaining information bit
Information bit carried in a first code block
Check code encoding pre-processing module 603
Check code encoding module 604
No unwanted bit exists
An unwanted bit exists
Remaining information bit to which a second check code is added
First code block to which a first check code is added
Padding or deletion module 605
Small code block segmentation module 606
Polar code encoding module 607

FIG. 6

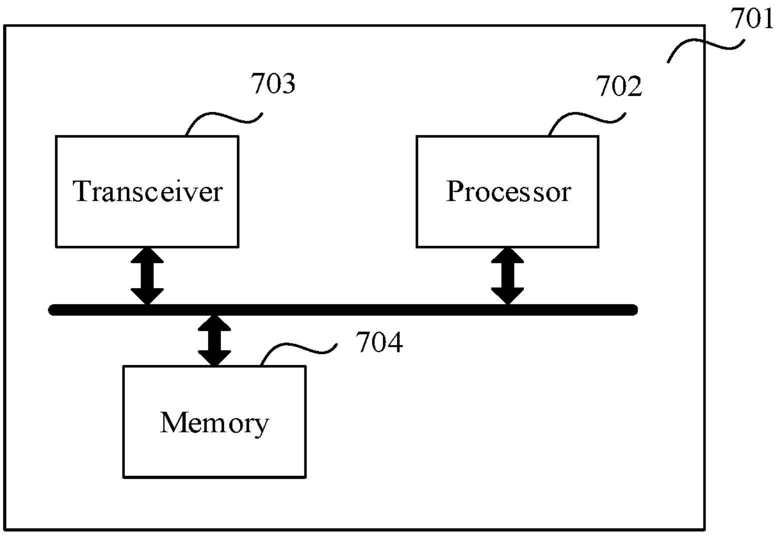


FIG. 7

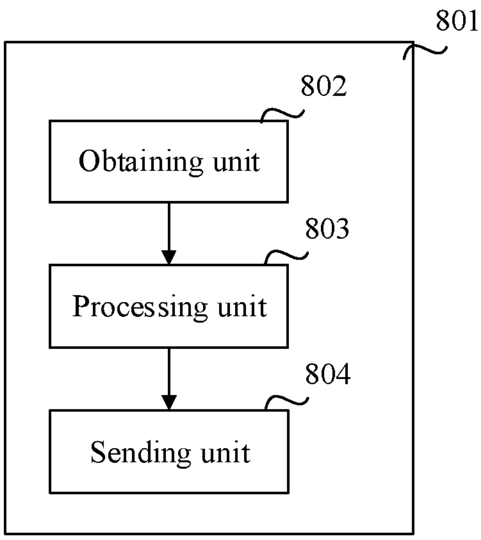


FIG. 8

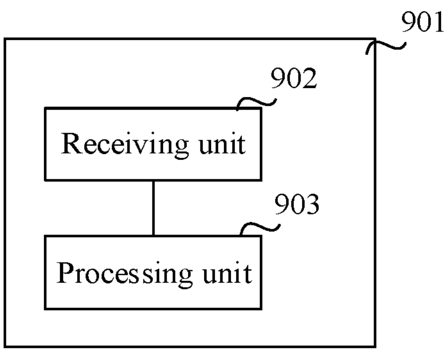


FIG. 9

## INTERNATIONAL SEARCH REPORT

International application No.
**PCT/CN2021/105608**

**A. CLASSIFICATION OF SUBJECT MATTER**

H04L 1/00(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

WPI, EPODOC, CNPAT, CNKI: 极化码, 码长, 码率, 分段, 分块, 编码, 译码, 功耗, 速率匹配, polar code, code length, code rate, segment, block, divide, encode, decode, power consumption, rate matching

**C. DOCUMENTS CONSIDERED TO BE RELEVANT**

| Category* | Citation of document, with indication, where appropriate, of the relevant passages | Relevant to claim No. |
|---|---|---|
| X | CN 112583522 A (HUAWEI TECHNOLOGIES CO., LTD.) 30 March 2021 (2021-03-30) description, paragraphs [0095]-[0131], [0173] and [0213]-[0220], and figures 1, 5 and 7 | 1, 21, 41-43 |
| A | CN 108288970 A (CHINA ACADEMY OF TELECOMMUNICATIONS TECHNOLOGY) 17 July 2018 (2018-07-17) entire document | 1-43 |
| A | CN 109889304 A (HUAWEI TECHNOLOGIES CO., LTD.) 14 June 2019 (2019-06-14) entire document | 1-43 |
| A | US 2019149176 A1 (TELEFONAKTIEBOLAGET LM ERICSSON (PUBL)) 16 May 2019 (2019-05-16) entire document | 1-43 |
| A | WO 2020227915 A1 (QUALCOMM INC. et al.) 19 November 2020 (2020-11-19) entire document | 1-43 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 March 2022** | **16 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/105608**

| Patent document cited in search report | | | Publication date (day/month/year) | Patent family member(s) | | | Publication date (day/month/year) |
|---|---|---|---|---|---|---|---|
| CN | 112583522 | A | 30 March 2021 | WO | 2021057461 | A1 | 01 April 2021 |
| CN | 108288970 | A | 17 July 2018 | WO | 2018127234 | A1 | 12 July 2018 |
| CN | 109889304 | A | 14 June 2019 | EP | 3550750 | A1 | 09 October 2019 |
| | | | | KR | 20190099078 | A | 23 August 2019 |
| | | | | AU | 2018206034 | A1 | 22 August 2019 |
| | | | | US | 2019123853 | A1 | 25 April 2019 |
| | | | | US | 2019280804 | A1 | 12 September 2019 |
| | | | | WO | 2018127041 | A1 | 12 July 2018 |
| | | | | IN | 201937031423 | A | 11 October 2019 |
| | | | | ID | 201907888 | A | 08 November 2019 |
| US | 2019149176 | A1 | 16 May 2019 | JP | 2019533919 | A | 21 November 2019 |
| | | | | MX | 2019002228 | A | 19 September 2019 |
| | | | | RU | 2720444 | C1 | 29 April 2020 |
| | | | | US | 2020212940 | A1 | 02 July 2020 |
| | | | | WO | 2018146629 | A1 | 16 August 2018 |
| | | | | CN | 109644008 | A | 16 April 2019 |
| | | | | EP | 3520224 | A1 | 07 August 2019 |
| | | | | AU | 2018218656 | A1 | 22 August 2019 |
| | | | | PH | 12019500401 | A1 | 20 January 2020 |
| | | | | KR | 20190033588 | A | 29 March 2019 |
| | | | | IN | 201917006730 | A | 09 August 2019 |
| | | | | VN | 66872 | A | 25 November 2019 |
| | | | | HK | 40007554 | A0 | 05 June 2020 |
| WO | 2020227915 | A1 | 19 November 2020 | | None | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2021101093 W